# EUROPEAN PATENT APPLICATION

(11) **EP 1 122 644 A1**
(43) Date of publication of application: **08.08.2001**
(21) Application number: 01100135.1
(22) Date of filing: 15.01.2001
(51) Int. Cl.: G06F 9/46

(54) **A method and system for dynamically dispatching function calls from a first execution environment to a second execution environment**

(30) Priority: 14.01.2000 EP 00100212; 14.01.2000 EP 00100211; 14.01.2000 EP 00100740; 14.01.2000 EP 00100739; 14.01.2000 EP 00100738
(71) Applicant: SUN MICROSYSTEMS, INC., Palo Alto, California 94303 (US)
(72) Inventor: Hütsch, Matthias, 22111 Hamburg (DE); Hofman, Ralf, 22142 Hamburg (DE); Sommerfeld, Kai, 21149 Hamburg (DE); Schulz, Torsten, 25421 Pinneberg (DE); Eilers, Bernd, 21107 Hamburg (DE); Pfohe, Thomas, 22143 Hamburg (DE); Hönnig, Michael, 22143 Hamburg (DE); Meyer, Markus, 21423 Winsen/Luhe (DE)
(74) Representative: HOFFMANN - EITLE

(57) **Abstract**

A method for enabling a first software program using a first binary specification in a first execution environment to employ a limited functionality of a second software program using a second binary specification in a second execution environment first creates a bridge in the first execution environment. Using the bridge, a proxy wrapping an interface to the limited functionality of the second software program in the second execution environment is created in the first execution environment. The proxy is used to access the limited functionality of the second software program in the second execution environment.

## Description

### BACKGROUND OF THE INVENTION

### Field of the Invention

The present invention relates generally to executing computer software programs generated by different compilers, and in particular to a method for enabling a first computer software program using a first binary specification to employ functionality of a second computer software program using a second binary specification.

### Description of Related Art

Many computer software programs, which are created in different programming languages, have to communicate with each other. For example, a first computer software program, sometimes called the first software program, created in a first computer programming language is able to provide tables. The first software program calls a second software program created in a second programming language, which is able to calculate figures that are needed in the table to be produced by the first software program. (As those of skill in the art will appreciate, when it is stated that a software program performs an action, this means that upon execution of the software program on a processor, the system including the processor performs the action in response to execution of an instruction or instructions in the software program.)

Since the two software programs are written in different languages, the two software programs have different binary specifications. The second software program cannot be successfully called by the first software program because the different binary specifications prevents the second software program from correctly executing the call from the first software program.

In this example, the different binary specifications result from different computer programming languages. However, binary specifications for the same computer programming language can be different based upon the differences in the compilers for the same programming language.

The prior art solution to this problem was to provide transformer modules for each required transformation route, for example from a certain first binary specification to a certain second binary specification. Since in modern computer applications, a certain software program may call many different software programs, the computer system requires a voluminous library of transformer modules. This extensive library needs significant storage space and regular maintenance, since for every new binary specification, which shall be accessible, a full new set of transformer modules must be provided to each of the other binary specifications, in addition to the existing transformer modules. However, most of these transformer modules are not used frequently, so that their storage is not efficient.

Furthermore, these prior art transformer modules extend to the full functionality of the software program to be translated from one binary specification to another.
Due to the regularly wide functionality of software programs, known transformer modules are rather voluminous and require, when they are activated, a significant amount of working memory and processor time from the computer system on which they are executed. Furthermore, the complete translation of a software program is burdensome and time consuming, although it is in most cases unnecessary for the specific task to be accomplished.

### SUMMARY OF THE INVENTION

Therefore, it is an object of the present invention to provide an efficient method to enable a first software program to employ certain functionalities of a second software program, wherein the first and the second software program use different binary specifications.

The object of the invention is solved by the features of the independent claims.

According to one embodiment of the present invention, an efficient method is provided to enable a first software program to employ certain functionalities of a second software program, where the first and the second software program use different binary specifications, i.e., the first and second software programs are in different execution environments.

In one embodiment, a method for enabling a first software program using a first binary specification in a first execution environment to employ a limited functionality of a second software program using a second binary specification in a second execution environment first creates a bridge in the first execution environment. Using the bridge, a proxy wrapping an interface to the limited functionality of the second software program in the second execution environment is created in the first execution environment.

In another embodiment, a method, dynamically implemented by a process in a first execution environment generates a binary specification object for the first execution environment. A binary specification object for a second execution environment is also generated. Next the process generates a bridge object for mapping objects from the second execution environment to the first execution environment. For example, using the bridge object, the process generates a proxy wrapping an interface in the second execution environment. The interface in the second execution environment is used to access limited functionality in the second execution environment.

In one embodiment, to use the limited functionality in the second execution environment in a first execution environment, a process executing in the first execution environment calls a method in a proxy interface in the first execution environment. In response to the call, the proxy interface converts the method to a corresponding method call for execution in the second execution environment. A method type description is used to convert parameters from the first execution environment to the second execution environment, and in one embodiment, a parameter type description for the method is used.

The proxy interface dispatches the corresponding method call for execution in the second execution environment to the second execution environment by the proxy interface. In response to the corresponding method call in the second execution environment, the method providing the limited functionality is executed and the results of the execution are returned to the proxy interface. Using a type description, the returned results from the second execution environment are converted to the first execution environment and returned to the calling process. In one embodiment, the second execution environment is a C++ programming language execution environment.

In another embodiment of this invention, a computer program product comprises computer program code for a method for enabling a first software program using a first binary specification in a first execution environment to employ a limited functionality of a second software program using a second binary specification in a second execution environment, the method comprising:
creating a bridge in said first execution environment; and
creating, in said first execution environment using said bridge, a proxy wrapping an interface to said limited functionality of said second software program in said second execution environment.

In another embodiment, a computer program product comprises computer program code for a method for using functionality in a second execution environment in a first execution environment, the method comprising:
calling a method in a proxy interface in said first execution environment; and
converting said method call by said proxy interface to a corresponding method call for execution in said second execution environment.

One embodiment of the present invention includes a computer storage medium having stored therein a structure comprising a binary specification for an execution environment that in turn includes a simple common identity structure. Optionally, the binary specification also includes an extended environment structure. In one embodiment, the simple common identity structure includes: a type name, a context, a pointer to the extended environment structure, and methods acquire, release and dispose.

In a further embodiment, a method is provided for enabling a first software program using a first binary specification to employ a limited functionality of a second software program using a second binary specification, including the following steps:
a) initiating the creation of a stub, which is able to transform commands relating to the limited functionality of the second program between the second binary specification and an intermediate binary specification, using a second bridge, wherein the second bridge provides a mapping of the second binary specification and the intermediate binary specification,
b) initiating the creation of a proxy, which is able to transform commands relating to the limited functionality of the second program between the first binary specification and the intermediate binary specification, using a first bridge, wherein the first bridge provides a mapping of the first binary specification and the intermediate binary specification, and
c) initiating the arrangement of the proxy and the stub relatively to the first program and the second program in a manner allowing the first program to employ the limited functionality of the second program.

According to the present invention software programs are compiled executable programs. Software programs are initially written in a programming language, for example, C++ or Java or an object model like Corba. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program, for example, the first, the second and the intermediate binary specification.

The intermediate binary specification serves as the binary specification into and from which the communication between the first and the second software program will be translated. This intermediate binary specification may be, for example, an existing binary specification like the binary specification of a specific compiler, but it is also possible that this intermediate binary specification is a suitable newly created binary specification, for example, a binary specification which facilitates translation into and from it.

In the scope of the present invention the two transformer modules, called proxy and stub, are created on demand, that means if and when they are needed. This creation on demand will be initiated directly that means by the first software program or by means of an initiating function. This creation on demand is considered to be dynamic, so that the commands of the first software program may be dispatched dynamically. The two transformer modules are at least able to transform commands corresponding to a limited functionality of the second software program. Since the first software program employs in most cases only a part of the functionality of the second software program, the two transformer modules need to transform only commands which correspond to this limited functionality. In the scope of the present invention commands are understood to be any kind of message initiating any kind of activity of a software program and which may be transmitted between the two software programs.

In the scope of the present invention it is possible to insert further modules between these two transformer modules. These modules may be able to intercept the commands. This interception may be used, for example, to add security or accounting functionality. It is also possible to use these two transformer modules to synchronize the commands or to use them for debugging.

For the creation of the proxy and the stub mappings between the basic commands, on which all other commands are based, of the two pairs of participating binary specifications are used. These pairs are the first binary specification and the intermediate binary specification and the second binary specification and the intermediate binary specification. These mappings will be provided by the bridges and may be, for example, stored in a data base. However, the bridges may also already be a part of the second software program. In case these mappings cover the complete functionality of the relevant binary specifications - which is frequently the case - only some parts of the mapping may be considered during the creation of the proxy and the stub, since they relate to the above mentioned limited functionality only.

After their creation the proxy and the stub are arranged in a manner which enables the first software program to communicate with the second software program. That means a path of communication must be arranged from the first software program to the proxy, from the proxy to the stub, and finally from the stub to the second software program. This route must regularly be accessible from both sides, that means from the side of the first software program as well as from the side of the second software program.

In order to generate the stub the second binary specification used by the second software program must be known. For this purpose, the first software program may start the second software program. This may be done by the first program by means of a loader function which loads the second software program. Loader functions are well known in the prior art. A loader function is able to initiate a software program using a certain binary specification on demand of another software program using a different binary specification. The loader function may directly initiate the creation of the required stub or it may initiate that the second software program or an auxiliary program communicating with the second software program creates the stub. This is possible, if the loader function carries or supplies by any means the information about the limited functionality of the second software program requested by the first software program.

The creation of the stub may be carried out by the second software program or by any sub-program of the second software program. It is possible that this sub-program exists already in the second software program. However, this sub-program may as well be procured or generated by the second software program in response to a request of the first software.

After the creation of the stub, the initiated second software program or its sub-program creating the stub may inform the first software program that the stub has been created. This may initiate the creation of the proxy by the first software program or any suitable sub-program, as it was described above for the creation of the stub.

The proxy is created by the first software program or a sub-program, a function thereof. The sub-program of the first software program must consider the bridge for the transformation of the first binary specification into the intermediate binary specification and reverse and the requested limited functionality of the second software program. The information about the requested limited functionality is generally available in the first software program, because the first software program requests this limited functionality from the second software program.

In order to enable the communication between the first software program and the second software program the stub and the proxy may transform any commands or other messages between these two software programs, as far as the proxy and the stub support this functionality. This requires the above described arrangement of the proxy and the stub relatively to the first and the second software program.

The present invention also provides a method for employing a limited functionality of a second software program using a second binary specification by a first software program using a first binary specification, including the following steps:
a) initializing the limited functionality of the second software program by the first software program,
b) creating a stub, which is able to transform commands relating to the limited functionality of the second software program between the second binary specification and an intermediate binary specification, using a second bridge, wherein the second bridge provides a mapping of the second binary specification and the intermediate binary specification,
c) creating a proxy, which is able to transform commands relating to the limited functionality of the second software program between the first binary specification and the intermediate binary specification, using a first bridge, wherein the first bridge provides a mapping of the first binary specification and the intermediate binary specification,
d) transmitting an command relating to the limited functionality from the first software program to the proxy,
e) transforming the command from the first binary specification into the intermediate binary specification by the proxy,
f) transmitting the command transformed by the proxy from the proxy to the stub,
g) transforming the transmitted command from the intermediate binary specification into the second binary specification by the stub,
h) transmitting the command transformed by the stub from the stub to the second software program,
i) carrying out the command in the second software program and generating a response for the first software program,
j) transmitting the response, being in the second binary specification, from the second software program to the stub,
k) transforming the response from the second binary specification into the intermediate binary specification by the stub,
l) transmitting the response transformed by the stub from the stub to the proxy,
m) transforming the response from the intermediate binary specification into the first binary specification by the proxy,
n) transmitting the response transformed by the proxy from the proxy to the first software program.

The transmissions between the proxy and the stub and the software programs and the proxy or the stub, respectively, may be effected by any suitable means. It is relevant, however, that these elements are arranged so as to allow the communication of the two software programs.

Furthermore, a method for using a stub, which is able to transform commands relating to a limited functionality of a second software program between a second binary specification and an intermediate binary specification, using a second bridge, wherein the second bridge provides a mapping of the second binary specification and the intermediate binary specification, is provided for enabling a first software program using a first binary specification to employ the limited functionality of the second software program by further using a proxy, which is able to transform commands relating to the limited functionality of the second software program between the first binary specification and the intermediate binary specification, using a first bridge, wherein the first bridge provides a mapping of the first binary specification and the intermediate binary specification, wherein the proxy and the stub are arranged relatively to the first software program and the second software program in a manner allowing the first software program to employ the limited functionality of the second software program.

Also provided is a method for using a proxy, which is able to transform commands relating to the limited functionality of the second software program between the first binary specification and the intermediate binary specification, using a first bridge, wherein the first bridge provides a mapping of the first binary specification and the intermediate binary specification, for enabling a first software program using a first binary specification to employ the limited functionality of the second software program by further using a stub, which is able to transform commands relating to a limited functionality of a second software program between a second binary specification and an intermediate binary specification, using a second bridge, wherein the second bridge provides a mapping of the second binary specification and the intermediate binary specification, wherein the proxy and the stub are arranged relatively to the first software program and the second software program in a manner allowing the first software program to employ the limited functionality of the second software program.

In the scope of the present invention there is also provided a computer program, also referred to as a computer program product, for carrying out the method of the present invention. A computer program product comprises a medium configured to store or transport computer readable code, or in which computer readable code may be embedded. Some examples of computer program product are: CD-ROM disks, ROM-cards, floppy disks, magnetic tapes, computer hard drives, servers on a network and carrier waves and digital signals transmitted over a telecommunication link or network connection.

Such computer program may be stored on any data carrier, such as, for example, a disk, a CD or a hard disk of a computer system. It is further provided a method for using a computer system, including standard computer systems, for carrying out the present inventive method. Finally, the present invention relates to a computer system comprising a storage medium on which a computer program for carrying out a method according to the present invention may be stored.

### BRIEF DESCRIPTION OF THE DRAWINGS

- Fig. 1A: is a high level representation of a first embodiment of the present invention;
- Fig. 1B: is a high level representation of a second embodiment of the present invention;
- Fig. 1C: is a more detailed representation of the first embodiment of the present invention;
- Figs. 2A and 2B: are one embodiment of a binary representation of an environment according to one embodiment of the present invention;
- Figs. 3A and 3B: are one embodiment of the binary specification structure of Fig. 2B;
- Fig. 4: is a sequence diagram illustrating one embodiment of making a proxy interface of the present invention, and one embodiment of using the proxy interface of the present invention;
- Fig. 5: is an example of a binary specification of the type representation in the UNO typelibrary according to one embodiment of the present invention;
- Fig. 6: is an illustration of stack configuration used in one embodiment of a C++ environment;
- Fig. 7A: is an illustration of a virtual table in one embodiment of the present invention;
- Fig. 7B: is an illustration of assembler code used to generate an index to a slot in the virtual table of Fig. 6;
- Fig. 8: is a process flow diagram for one embodiment of a method performed by a C++ proxy wrapping a UNO interface;
- Fig. 9: is a process flow diagram for one embodiment of a method mediate that is used by the method of Fig. 8;
- Fig. 10: is a process flow diagram for one embodiment of a method Env1_to_Env2 with interface that is used by method mediate of Fig. 9;
- Fig. 11: is a process flow diagram for one embodiment of a method performed by a UNO proxy wrapping a C++ interface;
- Fig. 12: is a process flow diagram for one embodiment of a method Env2_to_Env1 with interface that used by the method of Fig. 11;
- Figs. 13A and 13B: are an example of mapping an interface from a UNO environment to a C++ UNO environment according to one embodiment of the present invention;
- Fig. 14: is an example of freeing a C++ UNO interface proxy and revoking the proxy of the appropriate environment according to one embodiment of the present invention;
- Fig. 15: is an example of a C++ implementation of a C++ UNO proxy according to one embodiment of the present invention;
- Figs. 16A and 16B: are an example of a C implementation of freeing a UNO interface proxy and functions acquire/release according to one embodiment of the present invention;
- Figs. 17A and 17B: are an example of mapping an interface from a C++ UNO environment to a UNO environment according to one embodiment of the present invention;
- Fig. 18: is an example of a C++ implementation of a UNO proxy according to one embodiment of the present invention;
- Fig. 19: is an example of various constructors of a mapping and a bridge and of a free function of a bridge according to one embodiment of the present invention;
- Fig. 20: is an example of an implementation of functions acquire and release for a bridge according to one embodiment of the present invention;
- Fig. 21: is an example of an implementation to create a mapping between to environments according to one embodiment of the present invention;
- Figs. 22A and 22B: are an example of an implementation to create the static part of an object identifier according to one embodiment of the present invention;
- Fig. 23: is an example of an implementation to create an object identifier according to one embodiment of the present invention;
- Fig. 24: is an example of an implementation of methods acquire/release in a C++ UNO environment according to one embodiment of the present invention;
- Fig. 25: schematic representation of the inventive method in overview;
- Fig. 26: shows a flow chart: initial communication of a first and a second software program;
- Fig. 27: shows a flow chart: creation of a stub;
- Fig. 28: shows a flow chart: creation of a proxy;
- Fig. 29: shows a flow chart: arranging a stub and a proxy;
- Fig. 30: shows a schematic representation of a computer system to be used in the scope of the present invention;
- Fig. 31: shows a representation of a client-server system to be used in the scope of the present invention;
- Fig. 32: shows a flow chart: calling of a stub;
- Fig. 33: flow chart: calling of the second program through the stub;
- Fig. 34: flow chart: binding a stub and a proxy;
- Fig. 35: shows a flow chart: calling the second software program from a first software program via a proxy and a stub;
- Fig. 36: shows a flow chart: transforming and transmitting a command from the first software program to the second software program;
- Fig. 37: schematic representation of an interceptor arranged between a stub and a proxy; and
- Fig. 38: shows a flow chart: use of an interceptor function in an arrangement of stub and proxy.

In the Figures and the following Detailed Description, elements with the same reference numeral are the same element or a similar element. Also, the first digit of a reference numeral for an element indicates the figure in which that element first appeared.

### DETAILED DESCRIPTION

According to one embodiment of the present invention, a computing system 100 includes a service 111, which is part of a first computer software program 110 executing within a first execution environment 120. Service 111 issues a call 112 to a service 161 of a second computer software program 160 executing within a second execution environment 150 that is different from first execution environment 120. For example, service 111, in one embodiment, is a part of a word processing program that issues a call to a calculator, which is service 161, of a spreadsheet program, where the word processing program is written in a Visual Basic computer programming language, and the calculator is written in the C programming language.

Unlike the prior art in which calls to a different execution environment with a different binary specification could not be handled in most cases, and in a limited number of cases could be handled by marshalling the call into a specific predefined byte stream (for example the CORBA byte stream) for passing to the different execution environment, call 112 from first execution environment 120 with a first binary specification is directed to a proxy 130 in a bridge 140. Proxy 130 converts any parameters in the call to parameters for second execution environment 150 using a type description that is described more completely below, and then dispatches a call 170, with the converted parameters, to service 161 in second execution environment 150. Call 170 corresponds to call 112 in first execution environment 120.

In response to call 170 from proxy 130, service 161 performs the action requested and returns the result to proxy 130. Proxy 130 converts the result and any parameters returned from second execution environment 150 to first execution environment 120. The converted results are in turn provided to service 111.

Hence, according to one embodiment of the present invention, a first service, sometimes called a component or an object, with a first binary specification in a first execution environment utilizes a second service sometimes called a component or an object, in a second execution environment with a second binary specification that is different from the first binary specification. This greatly extends and facilitates providing an application with a broad range of capabilities without having to port the application and/or all of the capabilities to the binary specification of each execution environment in which the application may run. In addition, this embodiment facilitates providing a particular functionality to an application that is executed in an execution environment that does not, and perhaps cannot, support that particular functionality.

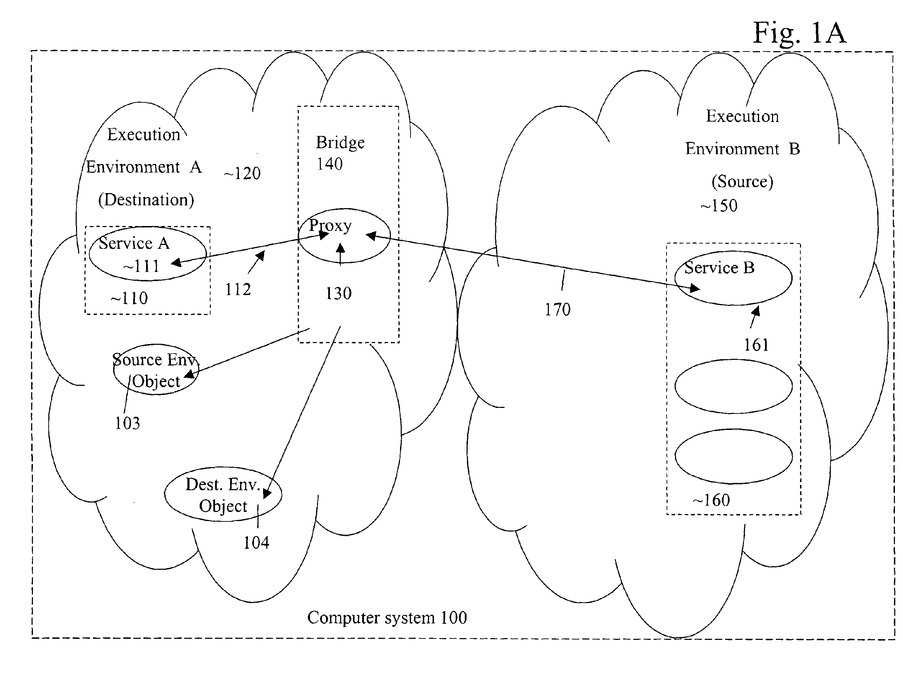

In the embodiment of Figure 1A, proxy 130 is instantiated by bridge 140 that is in first execution environment 120 and proxy 130 communicates directly with service 161 that is in second execution environment 150. However, in another embodiment, proxy 130A in response to a call 112 from service 111 of software program 110 issues a call 131 to an intermediary proxy 185 in execution environment 180 that is different from both execution environment 120 and execution environment 150, in this example.

Intermediary proxy 130A converts the call from the first binary specification to the binary specification for execution environment 180 and dispatches a call 131 to intermediary proxy 185. Intermediary proxy 185 converts the call from the binary specification of execution environment 180 to the binary specification of execution environment 150 and then dispatches call 186 to service 161. The response from service 161 is returned to intermediary proxy 185 that converts the response to binary specification of execution environment 180, and in turn transmits the converted response to proxy 130A. Proxy 130A converts the response from the binary specification for execution environment 180 to the binary specification for execution environment 120 and returns the result to service 111 of software program 110.

To reduce the number of bridges, normally only bridges to intermediate environment 180, referred to herein as the binary UNO specification environment, exist. To make a bridge from a C programming language (C) execution environment to a C++ programming language (C++) execution environment, call traffic is delegated over two bridges 140A and 190. First bridge 140A is from the C execution environment to the binary UNO execution environment and then bridge 190 is from the binary UNO execution environment to the C++ execution environment. In this way, only (n -1) bridges are needed for n different environments instead of n^{*}(n - 1)/2 bridges, if a direct connection between environments is made as in Fig. 1A. Preferably each bridge can create proxy objects only from the description of an interface. This implies that the code may be generated at runtime.

Returning to Figure 1A, as explained more completely below, a source environment object 103 and a destination environment object 104 are initially created using a runtime library, and optionally registered in an execution environment, e.g., execution environment 120. Each of objects 103 and 104 includes a binary specification structure for its respective execution environment. As explained more completely below, a binary specification structure, in one embodiment, provides common functions for each environment, and knows all proxies, sometimes called proxy interfaces, and their origins. Thus, an execution environment, through its binary specification structure, knows each wrapped interface, i.e., proxy, running in execution environment and the origin of each of these wrapped interfaces.

After the objects 103 and 104 are created, a call is made by service 111 that results in a search for a shared library that is activated as a bridge for the two execution environments. Each bridge, e.g., bridge 140, is implemented in a separate shared library. In one embodiment, the name of the shared library is a connection of two environment names with an underscore ('_') between the names.

Next a call is made by service 111 to map an interface of the source environment. Mapping is the direct way to publish an interface in another environment. That means an interface is mapped from a source environment 150 to a destination environment 120 so that methods may be invoked on a mapped interface, i.e., proxy 130, in destination environment 120, which, in turn, are delegated to the originating interface in the source environment.

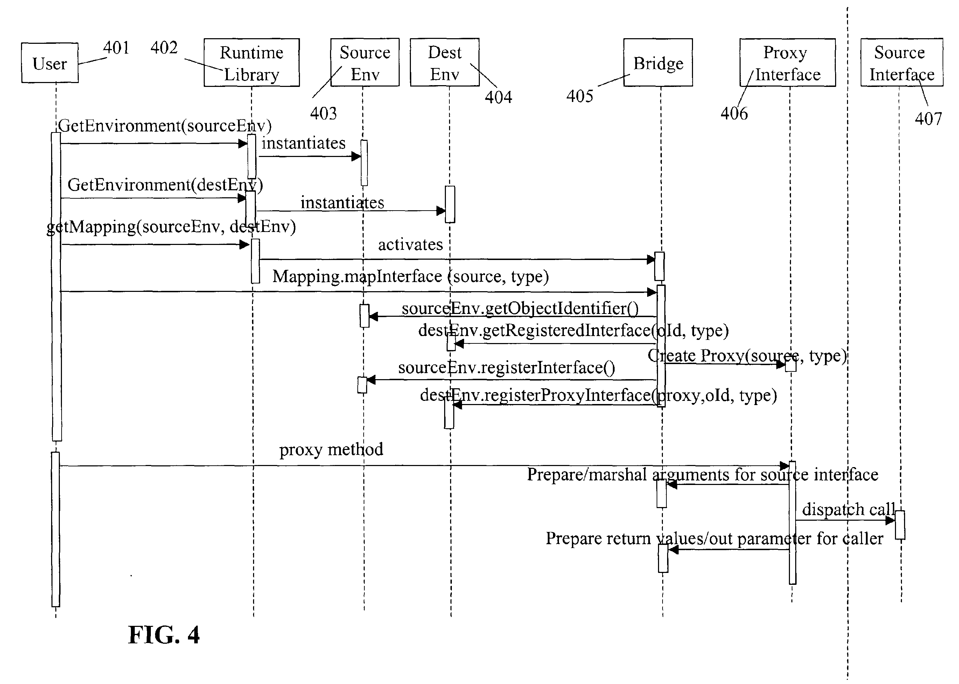

Mapping an interface from an environment 150 to an environment 120 requires several operations that are described more completely below with respect to Figure 4. However, briefly, a call is made to bridge 140 to map a particular interface for service 161 in source execution environment 150 to destination execution environment 120. If a proxy already exists for this mapping, a handle to the proxy is returned to service 111. Alternatively, as explained below, bridge 140 creates proxy 130, and returns a handle to service 111 so that subsequent calls to the interface for service 161 are directed to proxy 130.

Hence, as used herein, a bridge 140 in a first environment 120 is defined to be a software module that upon execution initially creates a proxy object 130 in first environment 120 for one computer programming language and hardware platform so that an actual object 161, sometimes called real object 161, represented by proxy 130, is available from a second environment 150. Proxy object 130 looks like and is an object implemented in first environment 120, and so proxy object 130 can be transparently used. Proxy object 130 delegates calls to real object 161 in second environment 150.

In one embodiment, real object 161 in second environment 150 is implemented in the C programming language (C) and real object 161 is accessed from a C++ programming language (C++) environment. In this case, bridge 140 is from a C++ environment to a C environment. Remember that C++ is incompatible between different compilers and different switches. Bridge 140 creates a C++ proxy object 130 in first environment 120, which delegates calls to real object 161 implemented in C. Sometimes a bridge is called *language binding,* but this description is not exact, because bridges also connect object models in another embodiment of the present invention.

The particular configuration of computing system 100 is not essential to this invention. Execution environments 120 and 150, in one embodiment, are included within the same computer.

In another embodiment, execution environment 120 is in a client system and execution environment 150 is in a server system. In this embodiment, the client system can be a mobile telephone, a two-way pager, a portable computer, a workstation, or perhaps a personal computer. The client and server can be interconnected by a local area network, a wide area network, or the Internet. As explained more completely below, the dynamic dispatch functionality of this invention is independent of the network protocol and the network architecture. In yet another embodiment, execution environment 120 is in a first computer and execution environment 150 is in a second computer where the first and second computers are in a peer-to-peer network.

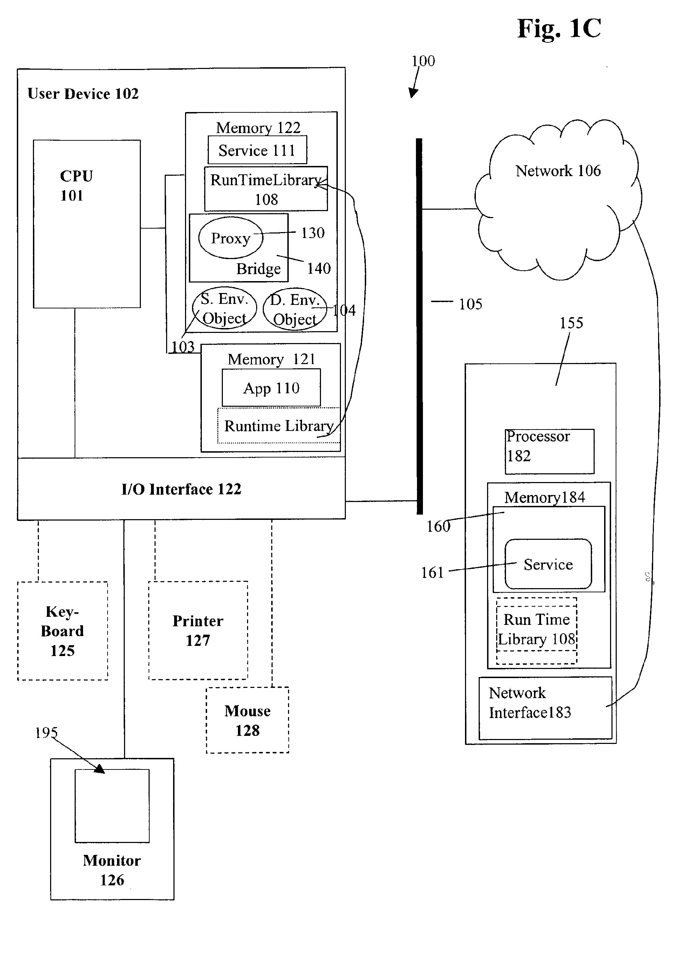

Figure 1C is an example of a user device 102 that is executing service 111 of application 110 from a volatile memory 122 on CPU 101. Application 110 can be any application, or an application in a suite of applications that can include for example a word processing application, a spreadsheet application, a database application, a graphics and drawing application, an e-mail application, a contacts manager application, a schedule application, and a presentation application. One office application package suitable for use with this embodiment of the invention, is the STAROFFICE Application Suite available from Sun Microsystems, 901 San Antonio Road, Palo Alto, CA. (STAROFFICE is a trademark of Sun Microsystems, Inc.)
The user has access to the functionality of service 161 even thought the execution environment for computer 155 is different from the execution environment of user device 102 and even in situations where in addition user device 102 has neither the memory capacity nor the processing power to execute service 161.

In the embodiment of Figure 1C, a runtime library 108 is initially stored in a non-volatile memory 121 and a part or all of runtime library 108 is moved to volatile memory 122 to generate source environment object 103, destination environment object 104 and bridge 140. In one embodiment, bridge 140 includes a shared library and is the same library as runtime library 108.

In this embodiment, when proxy 130 receives a method call from service 111, proxy 130 dispatches the call to service 161 via I/O interface 122 that is connected to network interface 183 of computer 155 via networks 105 and 106.

Those skilled in the art will readily understand that the operations and actions described herein represent actions performed by a CPU of a computer in accordance with computer instructions provided by a computer program. Therefore, bridge 140, proxy 130, source environment object 103, and destination environment object 104 may be implemented by a computer program causing the CPU of the computer to carry out instructions representing the individual operations or actions as described herein. The computer instructions can also be stored on a computer-readable medium, or they can be embodied in any computer-readable medium such as any communications link, like a transmission link to a LAN, a link to the internet, or the like.

Thus, all or part of the present invention can be implemented by a computer program comprising computer program code or application code. This application code or computer program code may be embodied in any form of a computer program product. A computer program product comprises a medium configured to store or transport this computer-readable code, or in which this computer-readable code may be embedded. Some examples of computer program products are CD-ROM discs, ROM cards, floppy discs, magnetic tapes, computer hard drives, servers on a network, and carrier waves. The computer program product may also comprise signals, which do not use carrier waves, such as digital signals transmitted over a network (including the Internet) without the use of a carrier wave.

The storage medium including runtime library 108 may belong to user device 102 itself. However, the storage medium also may be removed from user device 102. The only requirement is that the runtime library is accessible by user device 102 so that the computer code corresponding to the environment objects, bridge and proxy can be executed by user device 102. Moreover, runtime library 108 can be downloaded from another computer coupled to user device 102 via a network. Also, user device 102, as explained above, can also be a server computer and so the configuration of Figure 1C is illustrative only and is not intended to limit the invention to the specific embodiment shown.

Herein, a computer memory refers to a volatile memory, a non-volatile memory, or a combination of the two in any one of these devices. Similarly, a computer input unit and a display unit refer to the features providing the required functionality to input the information described herein, and to display the information described herein, respectively, in any one of the aforementioned or equivalent devices.

As used herein, software programs are compiled executable programs. Software programs are initially written in a programming language, for example, C, C++ or JAVA or an object model like CORBA or UNO. They are compiled with compilers corresponding to the programming language. However, for each programming language several compilers may be available. The binary specification in which a software program is able to communicate with other software programs depends on both, the programming language and the compiler. This communication language of a software program is the language referred herein as the binary specification used by a software program.

As used herein, an execution environment, such as execution environments 120 and 150, contains all objects, which have the same binary specification and which lie in the same process address space. The execution environment, sometimes called environment, herein, is specific for a computer programming language and for a compiler for that computer programming language. For example, an object resides in the "msci" execution environment, if the object is implemented with a software program written in the C++ computer programming language, and the software program is compiled with the MICROSOFT Visual C++ compiler. (MICROSOFT is a trademark of Microsoft Corp. of Redmond, WA) An example of a binary specification for one sample execution environment is presented below in conjunction with the description of Table 1.

To assist in the understanding of this invention, examples of a binary specification for an environment, and types, type libraries, and a type repository are first considered, and then embodiments to make and use the present invention are described.

### Binary Specification for an Execution Environment.

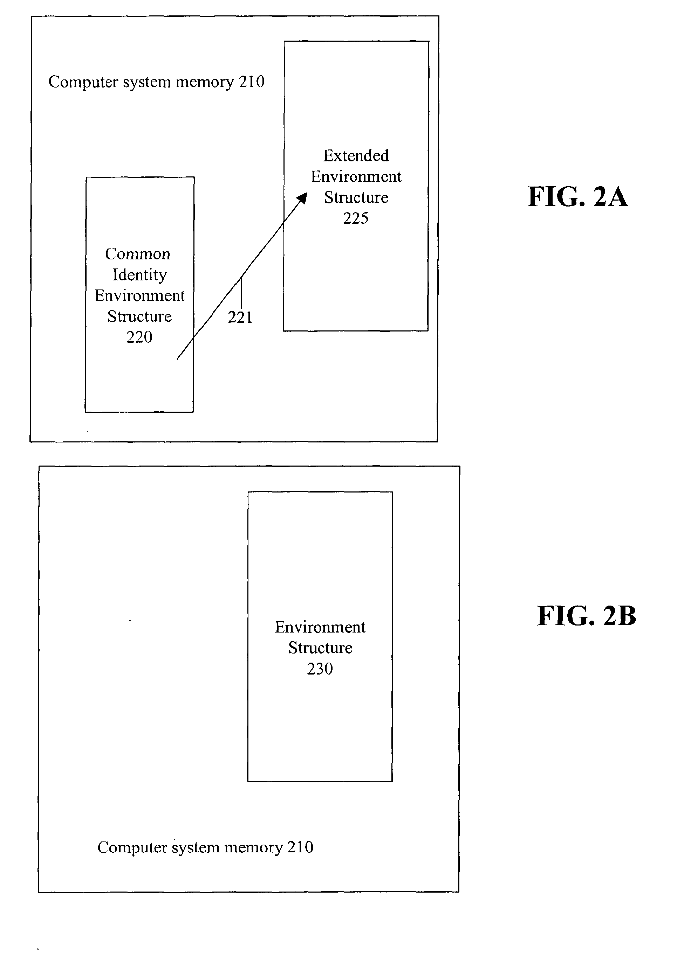

The function of a binary specification for an execution environment is to identify the execution environment, and optionally to provide functionality like interface registration. In one embodiment, the structure of a binary specification for an execution environment is split into a simple common identity structure 220 (See Fig. 2A) that is easily implemented for bridges that handle object identity issues. An optional structure 225 may be included to support optional functionality. In one embodiment, the optional functionality includes interface registration, acquiring/releasing in interfaces of the environment, and obtaining an object identifier for an interface.

Table 1 is an example of a simple common identity structure 220 (Fig. 2) of a binary specificaiton for an execution environment called uno_enviroment.

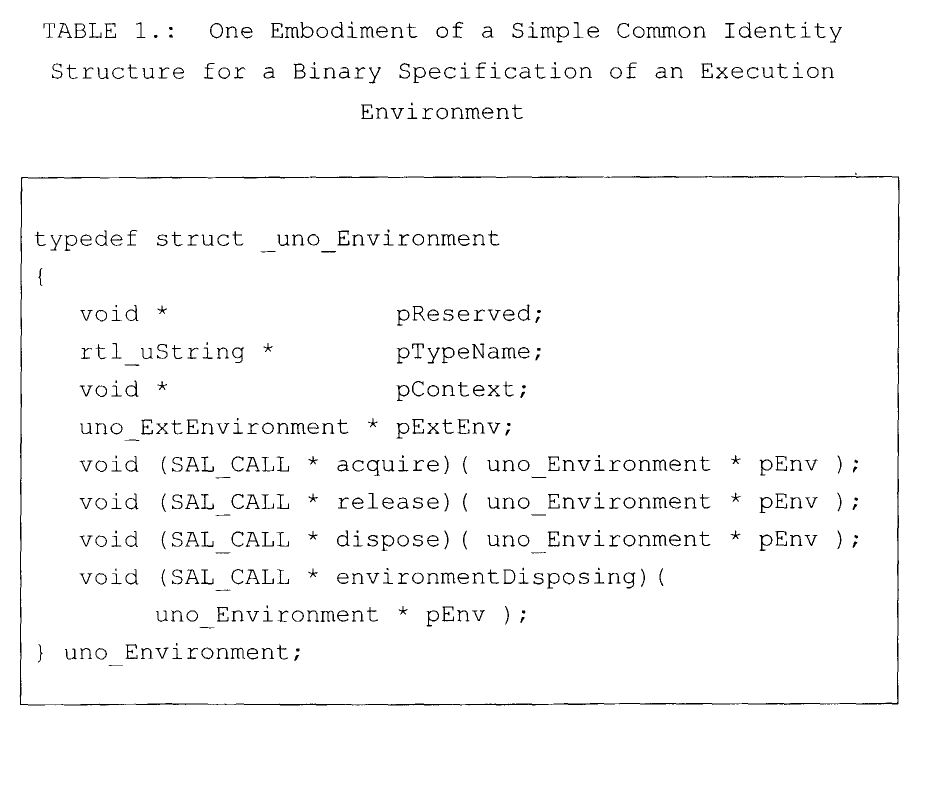

Pointer pReserved in the UNO environment is reserved and so in this embodiment is set to zero. String pTypeName is a type name of the environment. Pointer pContext is a free context pointer that is used for specific classes of environments, e.g., a JAVA virtual machine pointer. (JAVA is a trademark of Sun Microsystems, Inc. of Palo Alto, CA.) Pointer pExtEnv is a pointer to and extended environment (interface registration functionality), if supported, and otherwise is set to zero.

Method acquire acquires this environment, i.e., the environment defined by this structure. Parameter pEnv is this environment. Method release releases this environment and again parameter pEnv is this environment. Method dispose is explicitly called to dispose of this environment, e.g., to release all interfaces. Typically, this method is called before shutting down to prevent a runtime error.

In this embodiment, method disposing is a disposing callback function pointer that can be set to be signaled before this environment is destroyed. This method is late initialized by a matching bridge and is not for public use

Hence, in the embodiment, each simple common identity binary specification structure for an environment includes a type name of the environment; a free context pointer, a pointer to an extended environment that includes optional functionality, and methods to acquire, release and dispose of the environment. Structure 220 is stored in a memory 210 of computer system 100.

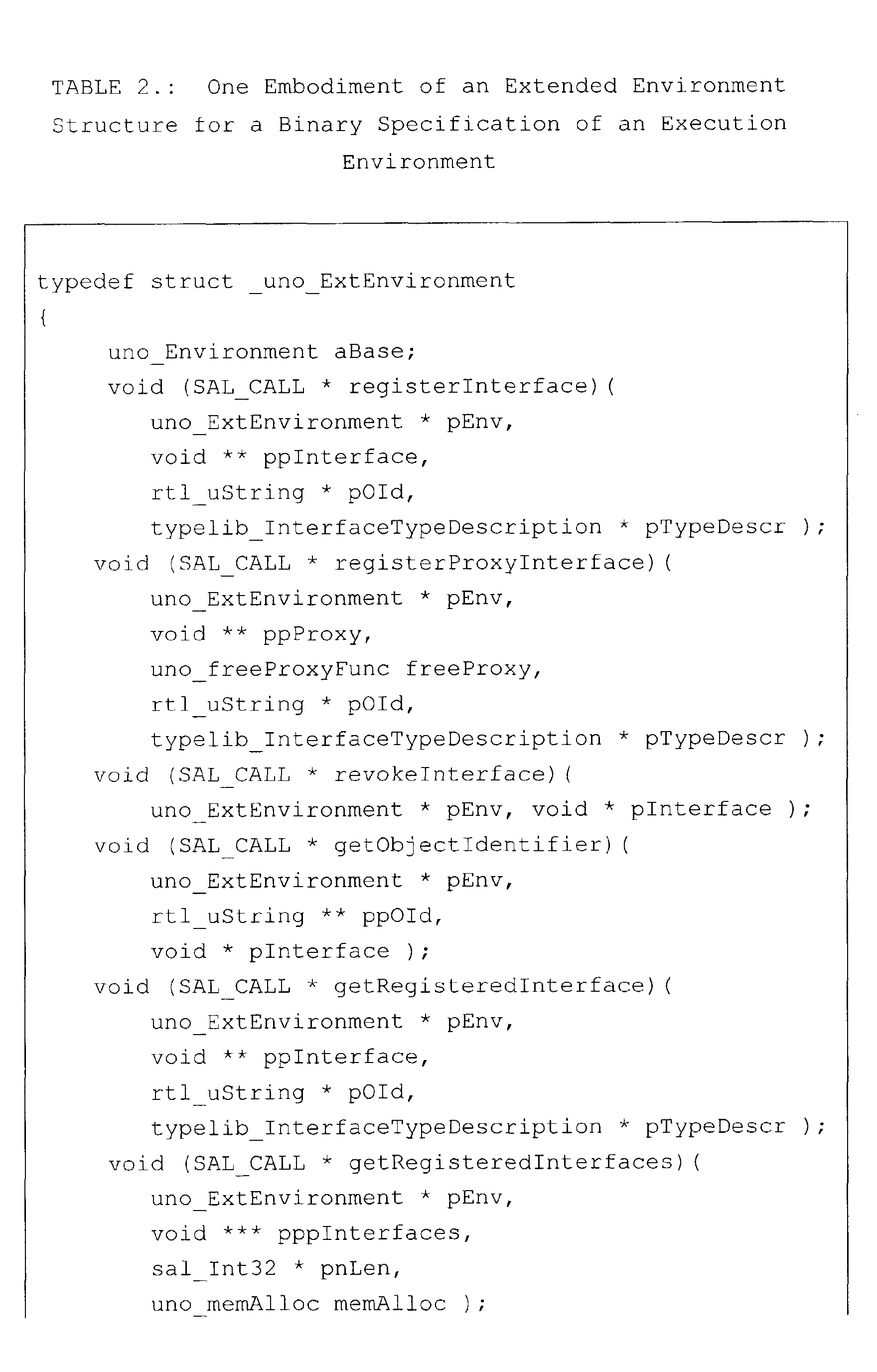

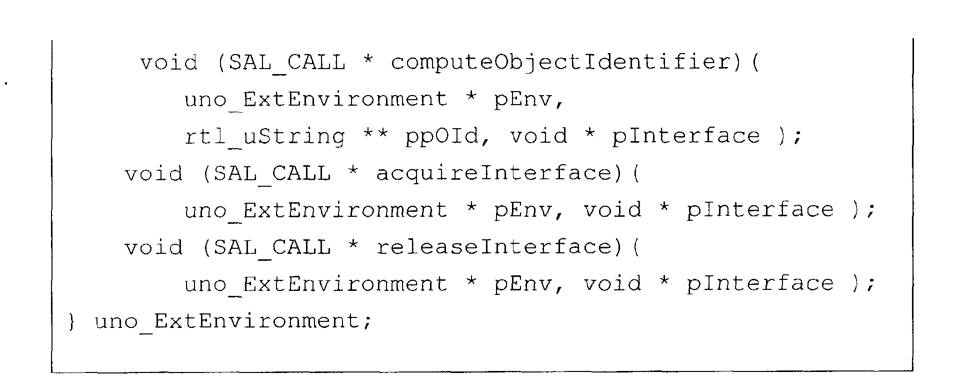

Table 2 is one embodiment of a binary specification of an UNO environment supporting interface registration. This binary specification inherits all members of a uno_Environment as defined, for example, by Table 1 above.

Method registerInterface in Table 2 registers an interface of this environment. Parameter pEnv is this environment. Parameter ppInterface is an inout parameter of the interface to be registered. Parameter pOId is an object id of the interface to be registered, and parameter is a type description of interface to be registered.

Method registerProxyInterface in Table 2 registers a proxy interface of this environment. The proxy interface can be reanimated and is freed explicitly by this environment. In this call, parameter pEnv is this environment. Parameter ppInterface is an inout parameter of interface to be registered. Parameter freeProxy represents a function to free this proxy object (See Table 3). Parameter pOId is an object id of the interface to be registered, and parameter is a type description of interface to be registered.

Method revokeInterface revokes an interface from this environment. Any interface that has been registered must be revoked via this method. In the call to this method, parameter pEnv is this environment, and parameter pInterface is the interface to be revoked.

Method getObjectIdentifier provides the object id of a given interface. In this method, parameter ppOId is the input and output object identifier (oid), and parameter pInterface is the interface of the object.

Method getRegisteredInterface retrieves an interface identified by its object id and type from this environment. Interfaces are retrieved in the same order as they are registered. In this method, parameter pEnv is this environment. Parameter ppInterface is the inout parameter for the registered interface and is zero if none was found. Parameter pOId is the object id of the interface to be retrieved, and parameter pTypeDescr is a type description of interface to be retrieved.

Method getRegisteredInterfaces return all currently registered interfaces of this environment. The memory block allocated might be slightly larger than (^{*}pnLen ^{*} sizeof(void ^{*})). In this method, parameter pEnv is this environment. Parameter ppInterfaces is an output parameter that is a pointer to an array of interface pointers. Parameter pnLen is an output parameter to a length of the array of interface pointers, and parameter memAlloc represents a function for allocating memory that is passed back (See Table 4).

Methods computeObjectIdentifier, acquireInterface and releaseInterface are late initialized by a matching bridge and are not for public use. Method computeObjectIdentifier computes an object id of the given interface, and is called by the environment implementation. Parameter pEnv is this environment, Parameter ppOId is an output parameter that is the computed id. Parameter pInterface is the given interface. Methods acquireInterface and releaseInterface are methods to acquire an interface, and release an interface respectively. The input parameters are defined the same as in method computeObjectIdentifier.

Table 3 is one embodiment of a generic function pointer declaration to free a proxy object, if an environment does not need the proxy object anymore. To use this function, the proxy object must register itself on the first call to method acquire() (See Table 1) call and revoke itself on the last call to method release() (See Table 1). This can happen several times because the environment caches proxy objects until the environment explicitly frees the proxy object by calling this function. In the call to this method, parameter pEnv the environment, and parameter pProxy is the proxy pointer.

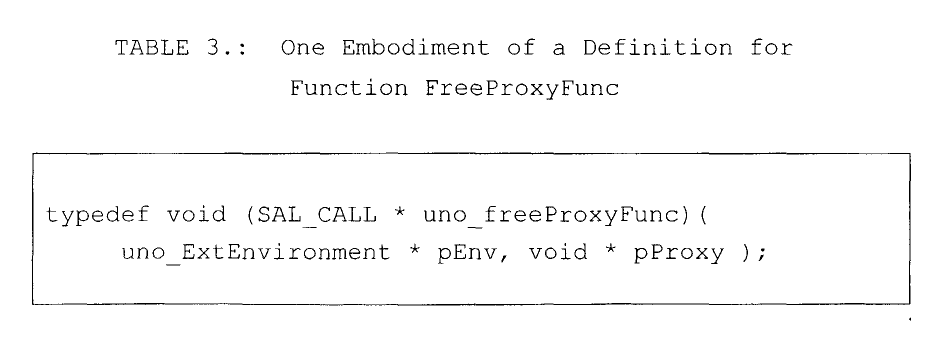

Method memAlloc (Table 4) is a generic function pointer declaration to allocate memory. This method is used with method getRegisteredInterfaces() (Table 2). Parameter nBytes is the amount of memory in bytes. This method returns a pointer to the allocated memory.

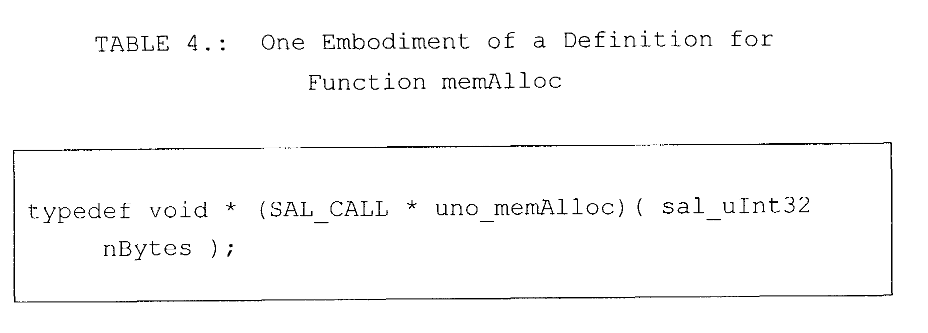

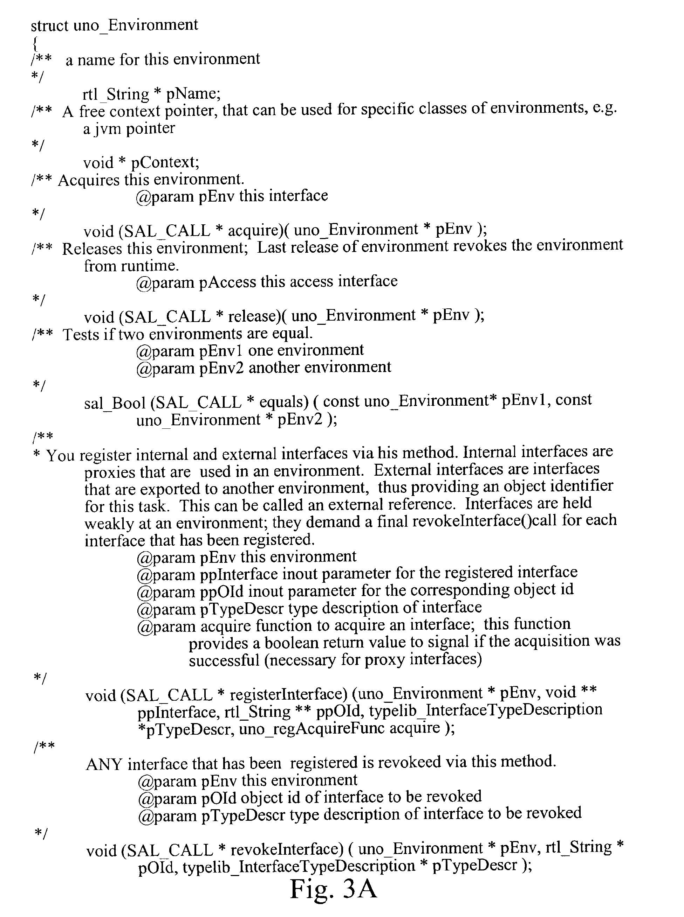

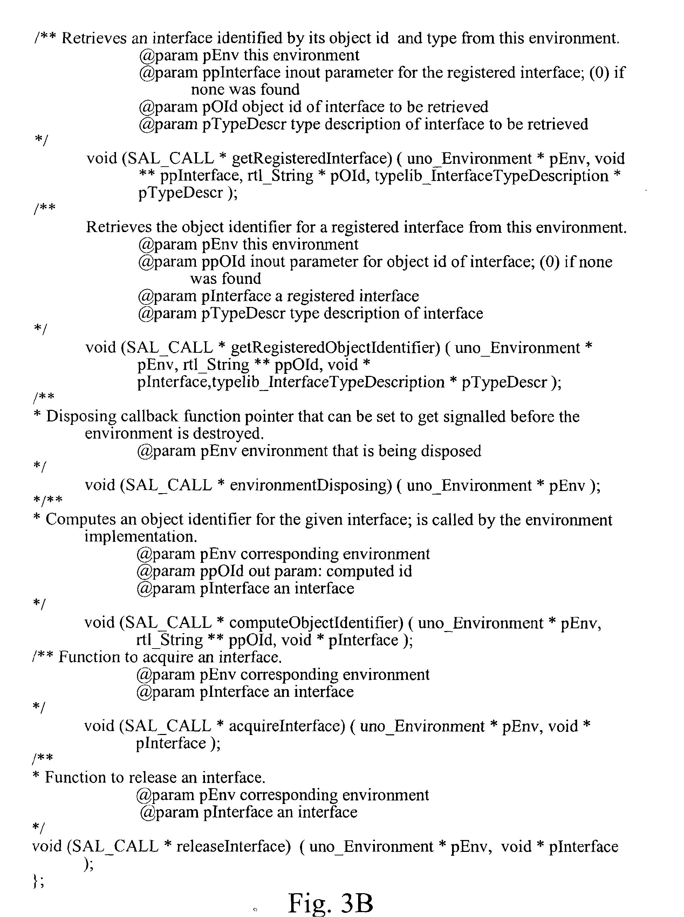

An alternative embodiment of a structure 230 for a binary specification of an execution environment is presented in Figure 2B. In this embodiment, all the information including methods needed to manage registering and unregistering interfaces are includes in a single structure. Figures 3A and 3B are the information in one embodiment of structure 230. Alternatively, the information in Tables 2 and 3 could be combined into a single structure.

To use environments, the environments are registered. An existing environment is obtaining by calling a method for getting the environment. For the example of Table 1, method uno_getEnvironment() is used. A new environment is created by either implementing the new environment directly, or by using a simple default implementation, which is frequently also sufficient, by calling, in the given example, method uno createDefaultEnvironment() with the environment's name and the environment's acquire and release functions for interfaces.

Within execution environments, type descriptions are used to map types between environments. A type description may exist or may be created at runtime. Each existing type in an execution environment is stored in a type repository along with the corresponding type description. The type descriptions are accessible through the full name of each type in the type repository, in one embodiment. For example, the full name of interface type "XInterface" may be "com.sun.star.XInterface". The naming conventions used to access a type and/or a type description within the type repository are not an essential feature of this invention, and any suitable naming convention can be utilized. In a type repository, the types and associated type descriptions are stored in any appropriate way.

If the API (application program interface) of the type repository is a C programming language style, the type repository API is directly, that means via a binary representation, accessible from many binary specifications, and the type repository API is quickly transferable. Since the type description of each element may be used during the generic marshaling of a call, in one embodiment, C-style structures, which describe each type, are used.

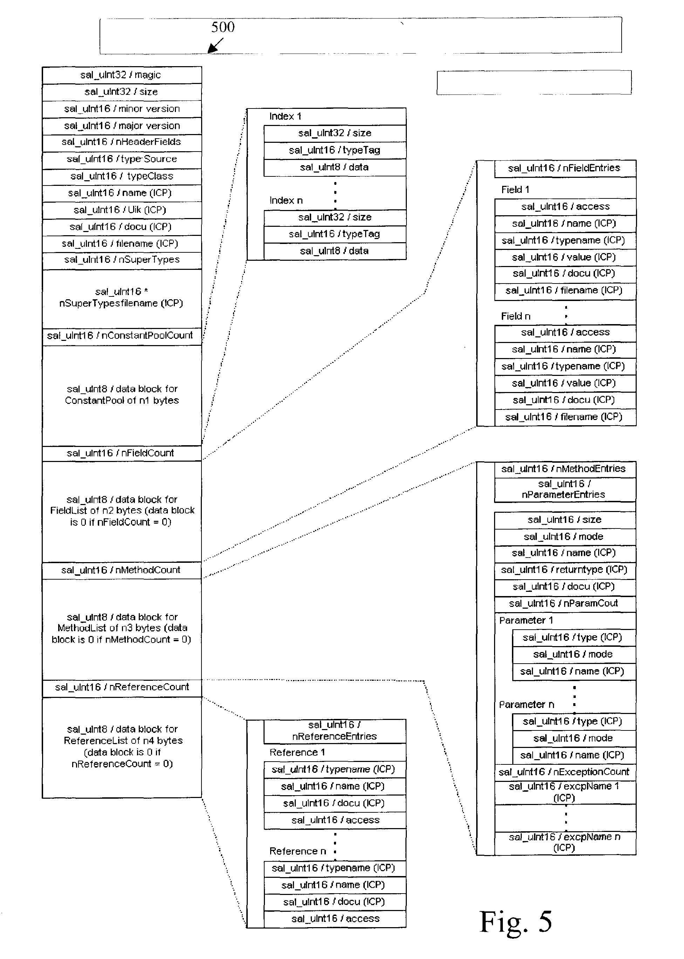

Figure 5 is an example of a binary specification 500 of the type representation in the UNO typelibrary. The type library includes complete type descriptions for each existing IDL type. These type descriptions are organized in a hierarchical form, which represents the IDL module structure including a node for the type itself. Each type node has a binary type blob, which contains the complete type information. The structure of the type blob depends on the kind of the type. The first part is relevant for each type and the other parts depend on the type. For example, a structure has only an additional field section because it isn't possible to specify methods for structures.

In this embodiment, the structure includes a header section; a constant pool section; a field section; and a reference section. A definition of the information is each section, as illustrated in Figure 5 is given herein.

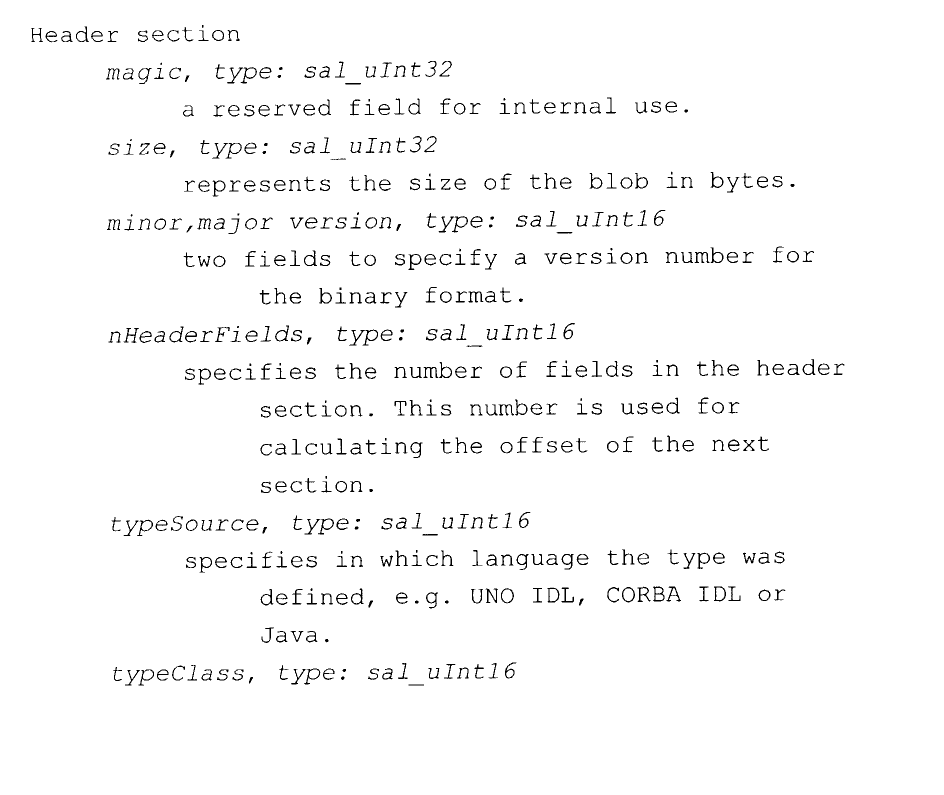

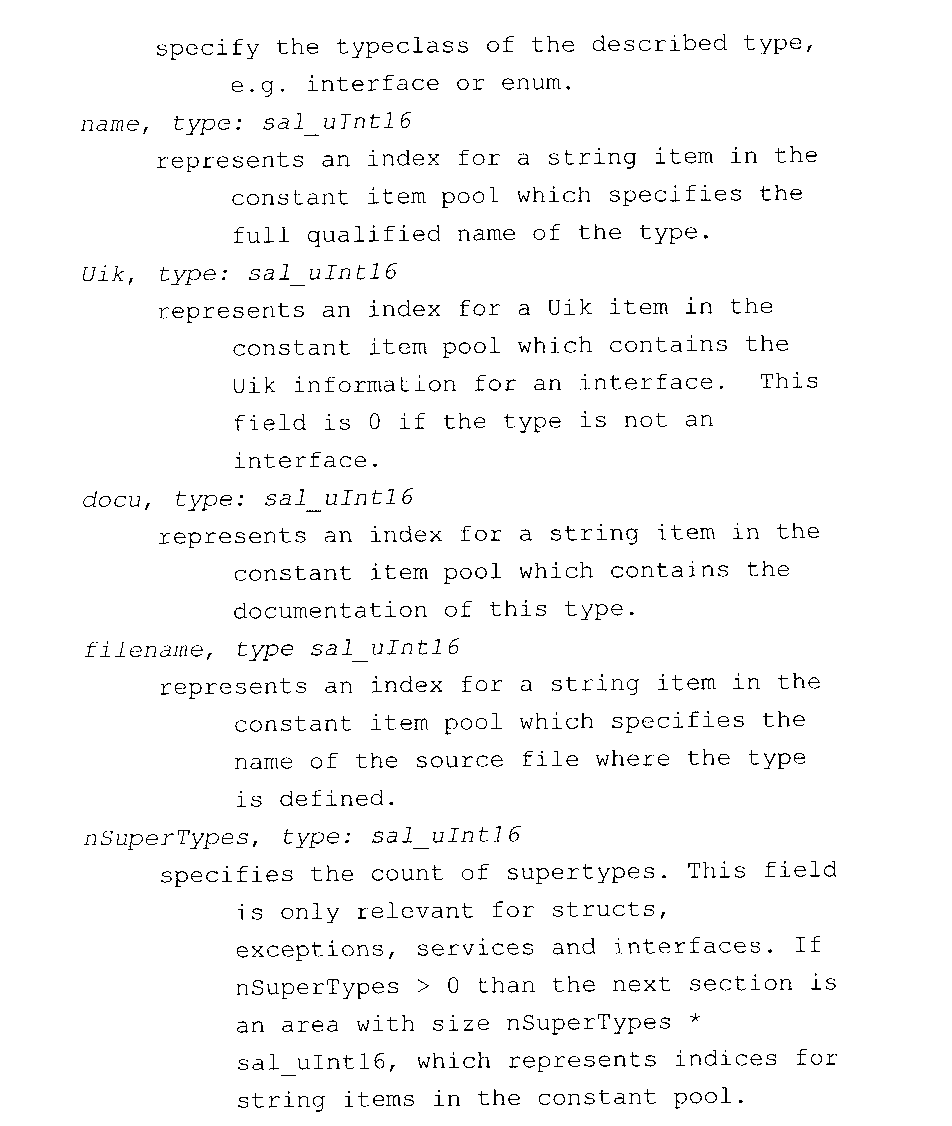

### Constant pool section

The constant pool section consists of nConstantPoolCount entries of variable length and type. Each entry constists of three fields:

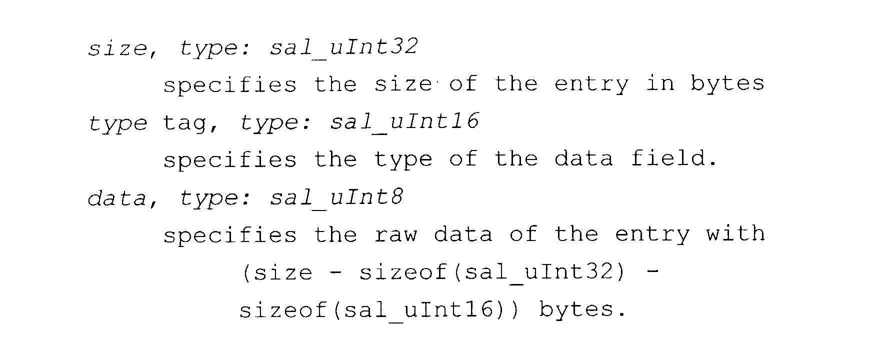

### Field section

The field section represents type information for struct or exception members, const types, enums, service members and attributes of interfaces. This section only exists if the field nFieldCount is greater than zero.

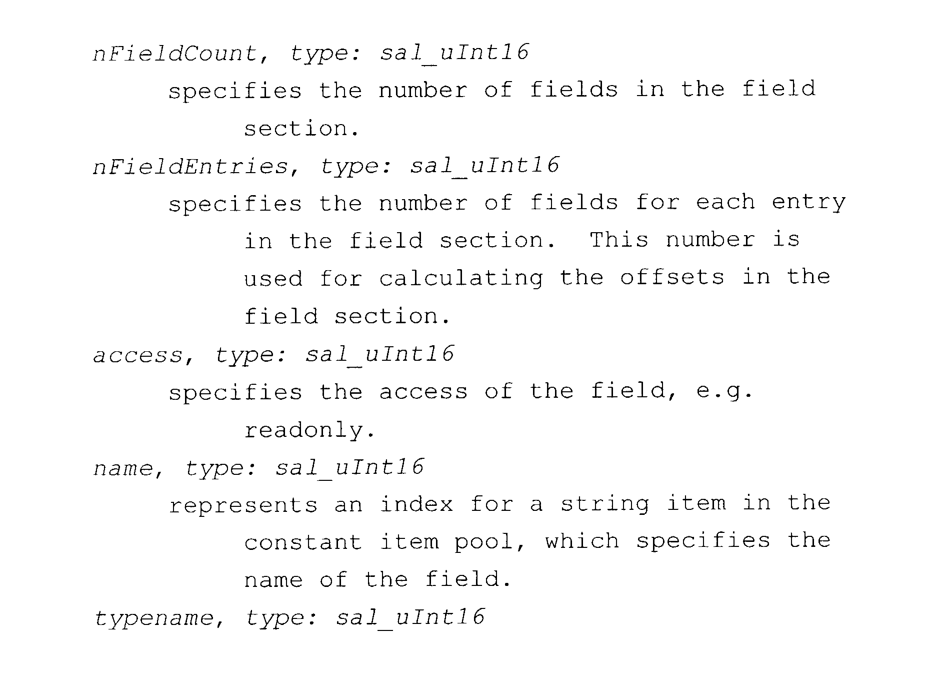

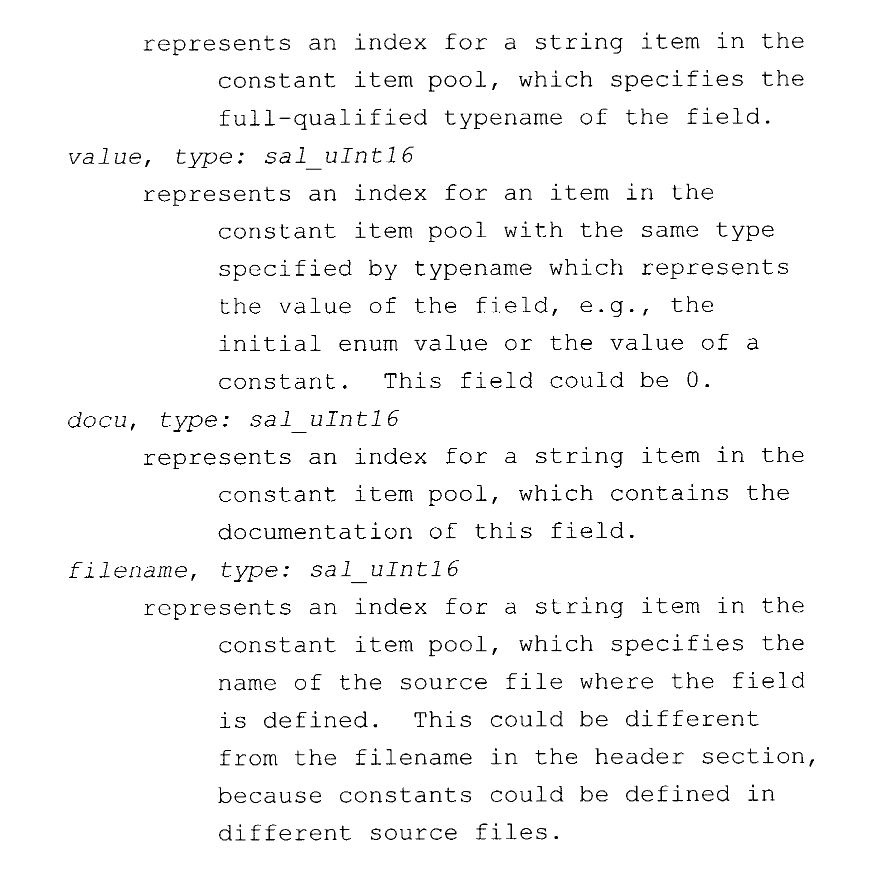

### Method section

The method section represents type information for interface methods. This section only exists if the field nMethodCount is greater than zero.

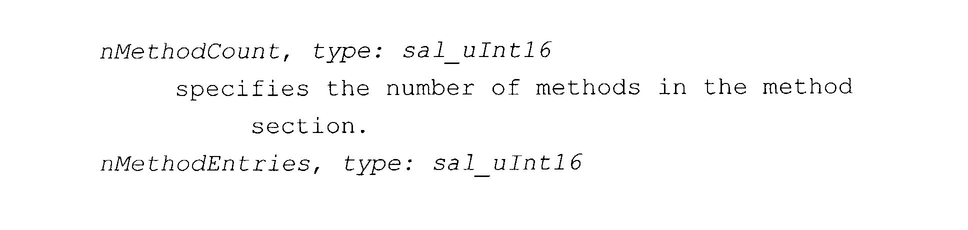

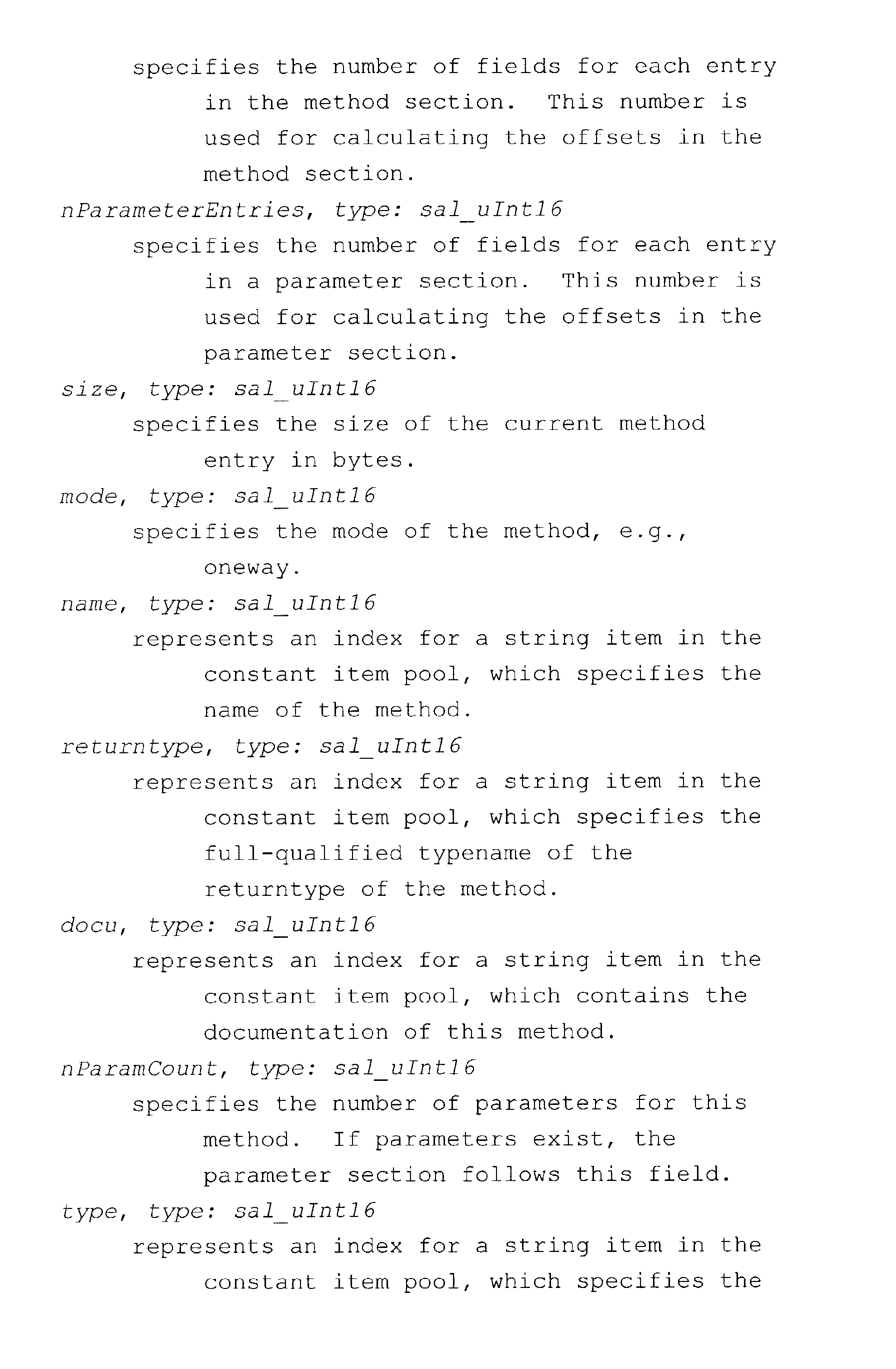

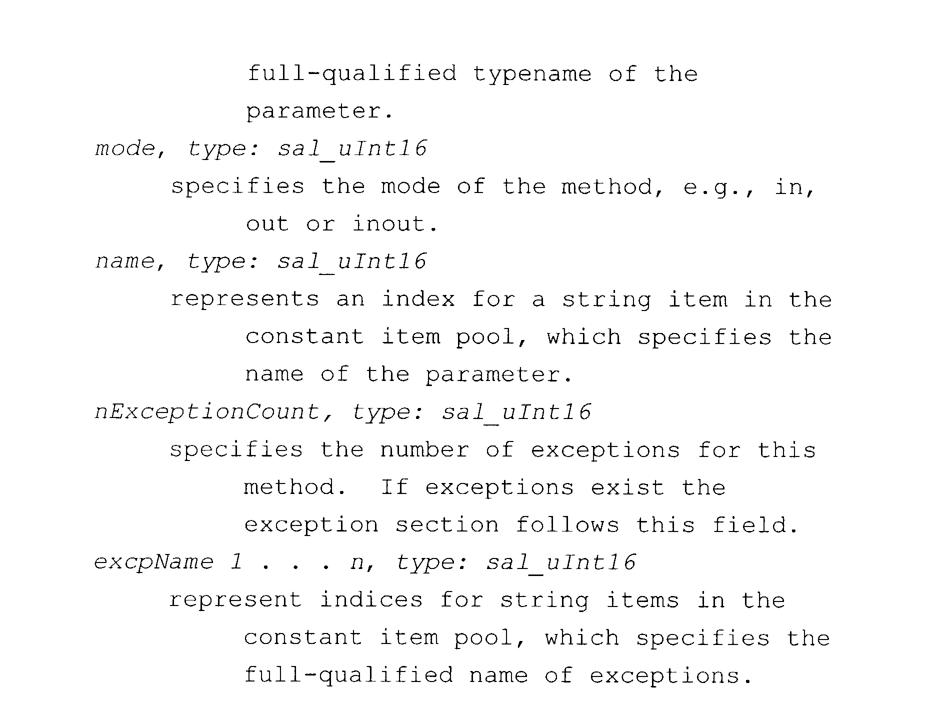

### Reference section

The reference section represents type information for references in services. This section only exists if the field nReferenceCount is greater than zero.

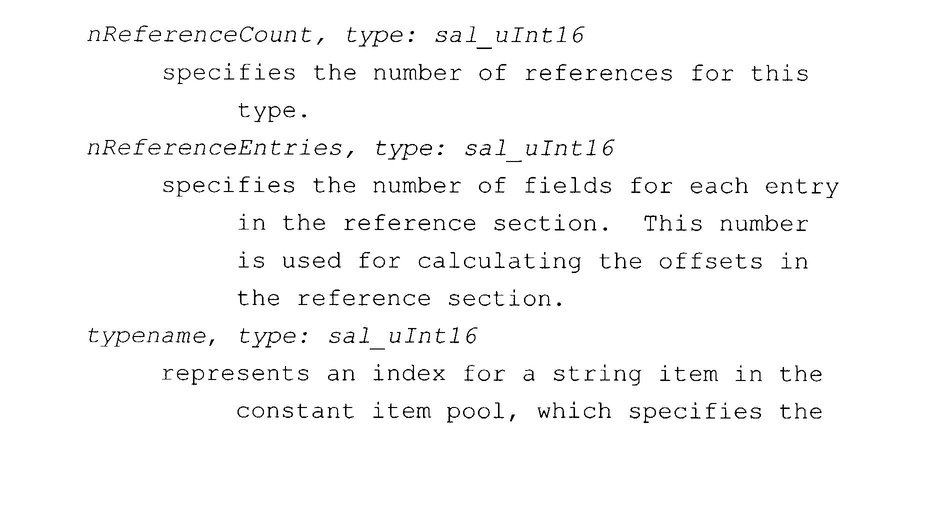

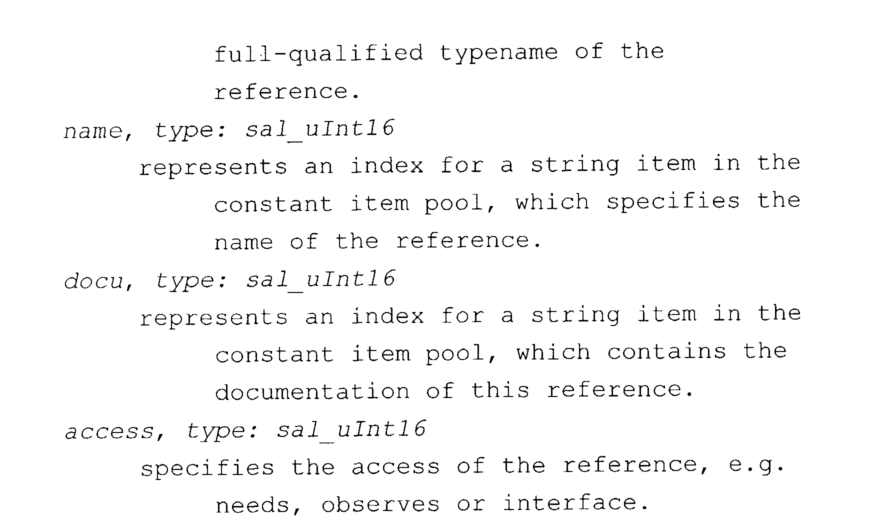

In one embodiment of a type repository, all functions or type declarations have a prefix "typelib_". In one embodiment of the type repository API, a function *typelib_TypeDescription_newInterface* is used to create an interface description. The descriptions of structures, unions and sequences are created with a function *typelib TypeDescription_new*. The description of a base type is initially part of type repository. A function that gets a type description is function *typelib TypeDescription_getByName* in the type repository API.

A JAVA API to a type repository is different for two reasons. First, the JAVA classes cannot access the binary representation of the type descriptions directly. Second, the JAVA runtime system provides an API (core reflection) similar to the type repository API. Unfortunately, the features "unsigned", "oneway" and "out parameters" are missing in this API. For this reason, additional information is written into the JAVA classes to provide the functionality of these features.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined as follows:
Structure members are stored sequentially in the order in which the structure members are declared.
Every data object has an *alignment-requirement.*
For a structure, the alignment requirement is determined the largest object of the structure.
Every object is allocated an *offset* so that *offset*
*% alignment-requirement **==** 0.*

If it is possible that the maximum alignment can be restricted (MICROSOFT C/C++ compiler, IBM C/C++ compiler), the maximum alignment is set to eight.
Under this condition, the alignment is set to min( n, sizeof( item ) ) where n is maximum alignment. The size is rounded up to the largest integral base type. For the MICROSOFT and IBM C/C++ compiler the alignment of a structure is set to eight using the "#pragma" statement.

Table 5 shows the type and type definitions for one embodiment of the UNO, C++ and the JAVA execution environments.

**Table 5.**

| | Environment | | |
|---|---|---|---|
| Type | UNO | C++ | JAVA |
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |
| Float | Processor dependent: Intel, Sparc = IEEE float | Processor dependent: Intel, Sparc = IEEE float | IEEE float |
| Double | Processor dependent: Intel, Sparc = IEEE double | Processor dependent: Intel, Sparc = IEEE double | IEEE double |
| Enum | The size of a machine word. Normally, this is the size of an integer. | The size of a machine word. Normally, this is the size of an integer. | All enum values of one enum declaration are a static object of a class. Each object contains a 32-bit value, which represents the enumeration value. |
| Boolean | 1 Byte. | 1 Byte. | Boolean |
| Char | 16 Bit on WNT, W95, W98, and Os2. 32 Bit on Unix | 16 Bit on WNT, W95, W98, and Os2. 32 Bit on Unix | Unsigned 16 bit (char) |
| String | pointer to a structure which | pointer to a structure which | java.lang.String |
| | have the following members: long refCount; long length; wchar_t buffer[...]; The string in buffer is 0 terminated. This is the rtl_wString structure in the rtl-library | have the following members: long refCount; long length; wchar_t buffer[...]; The string in buffer is 0 terminated. This is the rtl_wString structure in the rtl-library | |
| Structure | The structure contains the members in the order of the declaration. | The structure contains the members in the order of the members declaration. | A class, which is derived from java.lang.Object and contains the in the specified order. |
| Union | The size is 4 + size of the largest type. In front of the union members is a long value (nSelect), which describes the position of the valid member (0 is the first). | The size is 4 + size of the largest type. In front of the union members is a long value (nSelect), which describe the position of the valid member (0 is the first). | Not specified |
| Sequence | A pointer to a structure which has the | A pointer to a structure which has the | A normal JAVA array. |
| | following members: void ^{*} pElements; long nElements; long nRefCount; The pElements are a memory area that contains nElements elements. | following members: void ^{*} pElements; long nElements; long nRefCount; The pElements are a memory area that contains nElements elements. | |
| Exception | Looks like a structure | Looks like a structure | A class, which is derived from java.lang.Except ion and contains the members in the specified order. |
| Interface | Is a pointer to a function table, which contains at least three functions. | Is a pointer to a C++-Class which implements, implements first the virtual methods queryInterface, acquire and release. | A normal JAVA interface. |
| Any | A structure that contains a pointer to a type description. The second member is a | A structure that contains a pointer to a type description. The second member is a | A class which is derived from java.lang.Objec t". The members are a class, which describe the type of the |
| | pointer to the value stored in the any. | pointer to the value stored in the any. | value. A second member which is the value of the any. |
| Void | No memory representation | No memory representation | No memory representation |

Many of the types in TABLE 5 are self-explanatory and known in the art. Nevertheless, the most relevant types are explained in more detail below.

### Interfaces:

All interfaces employed in connection with the present embodiment are derived from a super-interface class. Each interface contains at least three methods. Two methods "acquire" and "release" are necessary to control the lifetime of the interface. A third method "queryInterface" is used to navigate between different interfaces. In the UNO environment, an interface XInterface includes only these three methods. All other interfaces in the UNO environment are derived from this interface XInterface.

In a JAVA environment, for example, interfaces are mapped to JAVA interfaces, which could be normally implemented. Methods acquire and release are not mapped to the JAVA program, since these methods do not exist in the JAVA programming language The lifetimes of the proxy and the relevant information in a second JAVA program are controlled by a garbage collector, and so methods acquire and release are not needed. The JAVA programming language delivers basic types by value and non-basic types by reference. All calls are specified by value except interfaces. In a JAVA environment, all non-basic types returned or delivered through out parameters are by value, which means that the implementation must copy any non-basic types before return or deliver.

In a C++ environment, for example, interfaces are mapped to pure virtual classes. To automatically control the lifetime of interfaces a template called "Reference" is used. All return, parameter and member types are "References" (e.g.: Reference< XInterface >). The "Reference" acquires the interface when it is constructed, and releases the interface when it is destructed.

### Structure:

A structure is a collection of elements. The type of each element is fixed and it cannot be changed. The number of elements is fixed.

### Exceptions:

An exception is a program control construct besides the normal control flow. One major feature of exceptions is that with exceptions, implementation of the error handling is simpler. Exceptions are similar to structures since exceptions are also a collection of elements and each type of each element is fixed and cannot be changed and the number of elements is also fixed. An additional feature of exceptions is that exceptions can be thrown by a method. All exceptions, which can be thrown by a method, must be declared at the method, except for the exception RuntimeException, which always can occur. All exceptions must be derived from interface Exception in the UNO environment. (See commonly filed and commonly assigned European Patent Application, entitled "A NETWORK PORTAL SYSTEM AND METHODS" of Matthias Hütsch, Ralf Hofmann and Kai Sommerfeld (Attorney Docket No. 85880), which is incorporated herein by reference in its entirety. If an exception is declared at a method, the method is allowed to throw all derived exceptions. The caller of a method must respond to this behavior.

In the JAVA environment, for example, all exceptions are derived from exception java.lang.Exception. The exceptions are declared at the methods. In the C++ environment, for example, the exceptions are generated as structures. An exception is thrown as an instance (e.g.: throw RuntimeException()). At the other side, the exception should be caught as a reference (...catch(RuntimeException & ) { ... }).

### Union:

A union contains one element. The declaration of a union specifies the possible types.

### Array:

An array contains any number of elements. The type of the elements is fixed and cannot be changed.

### Any:

An any contains one element. All types of elements are possible. An any contains a reference to the value and the type description of the type. With the type description, the bridge can transform the value, if necessary. In the JAVA environment, the any is, for example, represented by class Any, which contains a class as type description and a value, which is "java.lang.Object". The basic types are wrapped to their proper classes. For example, a Boolean value is an object of the class "java.lang.Boolean", which contains the value.

In the C++ environment, the any is represented through class Any. Each type generated by a C++ code maker implements a function "getCppuType". This function is used to implement the template access operators "<<=" and ">>=". These operators insert and extract the value of the any.

### Sequence:

A sequence is a generic data type. A sequence contains the number of elements and the elements. In the JAVA environment, the specification of an array fulfills this specification. This is not true for the C++ environment. An array in the C++ programming language does not contain the number of elements. It is not possible to return a C++-array, e.g., Char[] getName() is not possible. It is difficult to manage the lifetime between the called and the caller, if only a pointer is returned. Therefore, in the C++ programming language, a sequence is a template with the name Sequence. The implementation contains a pointer to a structure, which contains a pointer to the elements, the number of elements and the reference count. Thus, the implementation of the template holds the binary specification. It is cheap to copy this sequence, because only the reference count is incremented.

### Creating and using a Proxy Interface

With this understanding of an execution environment, and the various types that may be associated with an execution environment, a description of making and using one embodiment of a bridge including a proxy interface is now described. A bridge includes two mappings. Each mapping is dependent upon the counterpart mapping, because performing a call may require conversion of interfaces from one environment to the other environment, e.g., input parameters to an interface, and/or return values from an interface. Thus, a bridge implements infrastructure to exchange interfaces between two environments and is bidirectional.

Figure 4 is a sequence diagram for one embodiment the present invention. Along the horizontal axis are individual objects, where each object is represented as a labeled rectangle. For convenience, only the objects needed to explain the operation are included. The vertical axis represents the passage of time from top to bottom of the page. Horizontal lines represent the passing of messages between objects. A dashed line extends down from each rectangle, and a rectangle along the dashed line represents the lifetime of the object.

To make calls to a first binary specification for an execution environment, the execution environment has to be denominated. In one embodiment, an execution environment is denominated by a string, because the string is extensible and the risk of double names is low. Example of strings used to denominate execution environments are presented in Table 6.

**TABLE 6.:**

| EXAMPLES OF STRINGS USED TO DENOMINATE EXECUTION ENVIRONMENTS | |
|---|---|
| LANGUAGE BINDING OR OBJECT MODEL | NAMING |
| Binary UNO | uno |
| JAVA | java |
| MICROSOFT C++ 4.2 - 6.0 | msci |
| EGCS 2.9.1 with RTTI | egcs29 |
| Workshop Compiler 5.0 | sunpro5 |
| COM | com |

Each bridge is implemented in a separate shared library that is loaded at runtime. One naming scheme of the library is a concatenation as follows:

### [purpose_]SourceEnvName_DestEnvName

The optional purpose denotes the purpose of the bridge, e.g., protocolling traffic between two environments. If no purpose is given, the bridge maps interfaces from the source environment to the destination environment.

Hence, in this embodiment, user object 401 calls a method GetEnvironment, with a string denominating the source environment as a parameter, in runtime library 402. In response to the call, a source environment object 403 is instantiated and registered by runtime library 402.

User object 401 calls a method GetEnvironment, this time with a string denominating the destination environment as a parameter, in runtime library 402. In response to this call, a destination environment object 404 is instantiated and registered by runtime library 402.

Next, user object 401 calls a method getMapping in runtime library 402. A first parameter in the method call is the string denominating the source environment. A second parameter in the method call is the string denominating the destination environment.

In response to the call to method getMapping, a bridge object 405 is activated by runtime library 402. In one embodiment, a shared library is searched to find a library that contains a proxy factory for the specified source and destination environments. In a JAVA execution environment, the search is for a class with a name associated with the source and destination environments. The shared bridge library cannot be unloaded while any of its code is still needed. So both mappings and any wrapped interface (proxy) that are exported need to modify a shared bridge library wide reference count. If the shared bridge library can be unloaded the reference count goes to zero.

After bridge object 405 is activated, user object 401 issues a call to a method Mapping.mapInterface with a first parameter that is a source interface, and a second parameter that is a type. After receiving the call to method Mapping.mapInterface, bridge object 405 issues a call to method sourceEnv.getObjectIdentifier of source environment object 403 for the type. An object identifier is returned for the type, e.g., for an interface, and bridge object 405 issues a call to method destEnv.getRegisteredInterface of destination environment object 404 with the object identifier and the type as input parameters.

If a proxy interface is registered in destination environment object 404 for this object identifier and type, a pointer to the proxy is returned by method getRegisteredInterface. In this example, a pointer to the proxy interface 406 is returned to user object 401.

Conversely, if method getRegisteredInterface failed to find a registered proxy interface, bridge object 405 calls method create proxy with a source environment and a type as input parameters. In creating a proxy, bridge object 405, in one embodiment, uses a proxy factory to generate method code to implement each method specified in the interface to be created. The only information to do this is a type description of the interface. For example, in a JAVA environment, a binary class file (*.class) is generated and loaded with the class loader. In the absence of a loader, which can directly load binary classes, a loader has to be provided. In a C++ environment, virtual method tables are generated, which delegate each call to the interface in the source environment.

The knowledge of the type description is necessary to create the proxy, as described. This type description is the full description of the limited functionality, e.g., a description of an interface, in the source execution environment. The type description may refer one of the different types shown in Table 5.

Following creation of the proxy, bridge object 405 registers the interface with source environment object 403 and registers the proxy interface with destination environment object 404. This completes creation of proxy interface 406, sometimes called proxy 406.

To use proxy interface 406, user object 401 simply calls a method in proxy interface 406. In response to the call, proxy interface 406 converts any input parameters as necessary using the method type description, and marshals the arguments for source interface 407. Next, proxy interface 406 dispatches a call to the method in source interface 407 in the source execution environment.

The method is executed in the source environment and the results are returned by source interface 407 to proxy interface 406. Upon receiving a return for the call, proxy interface 406 checks for any exceptions and if there are none, converts any output parameters and the return value to the destination execution environment again using the method type description, and then returns the results to user object 401. Thus, user object 401 has transparently accessed functionality in another execution environment. Typically, this is limited functionality, as described above.

In the following description, a specific example of a bridge that maps an interface from a MICROSOFT Visual C++ environment to a UNO environment is first described, and that maps an interface from a UNO environment to a MICROSOFT Visual C++ environment is described second. Table 7 is an example of a call to a method bar in the UNO interface XExample from a C++ program.

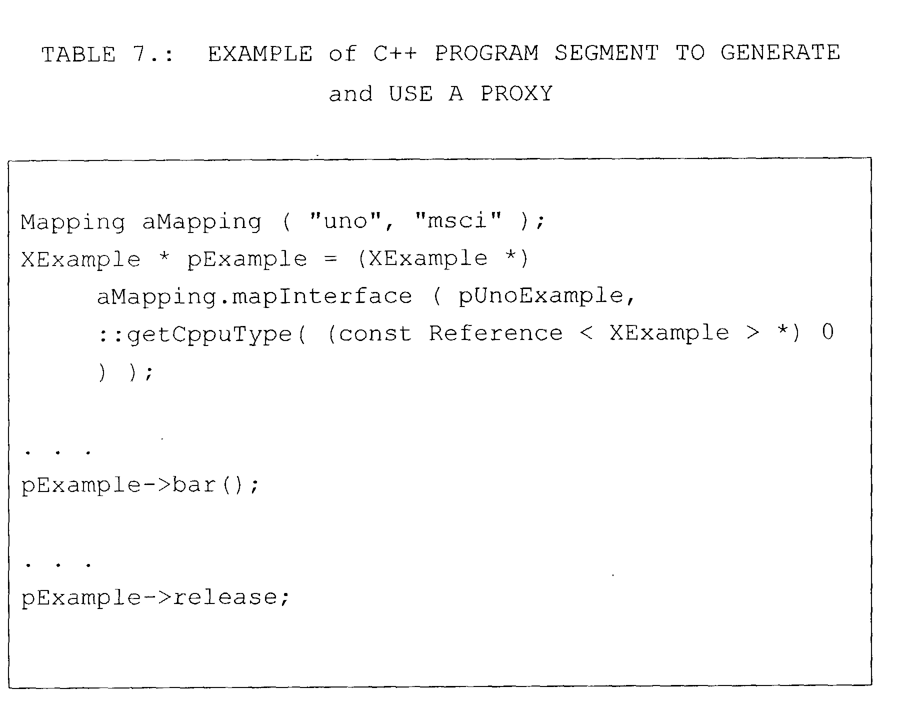

For the example of Table 7, the initial call to function Mapping creates a bridge from the UNO environment to the MSCI environment. The generation of the bridge, in this example uses, methods initEnvironment and getMapping. Table 8 is the implementation of these methods that are used in the proxy class of Table 9, for this example.

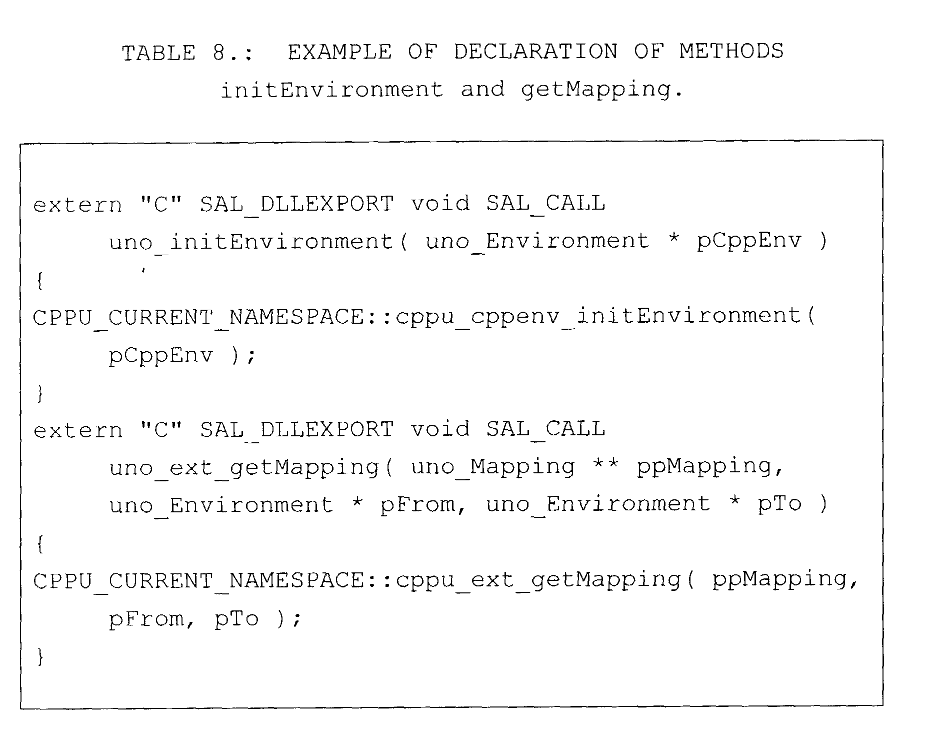

As explained above, to process a call to a method of a UNO interface in the C++ environment, there must be a proxy C++ object that delegates the method call to the corresponding UNO interface. Table 9 is bridge header file example of a bridge class, a C++ to UNO proxy class, and a UNO to C++ proxy class that can be modified for a specific environment. This example uses the bridge object and C++ to UNO proxy object that are instantiated using the classes in Table 9. As explained above, the call to method Mapping.mapInterface creates a proxy interface.

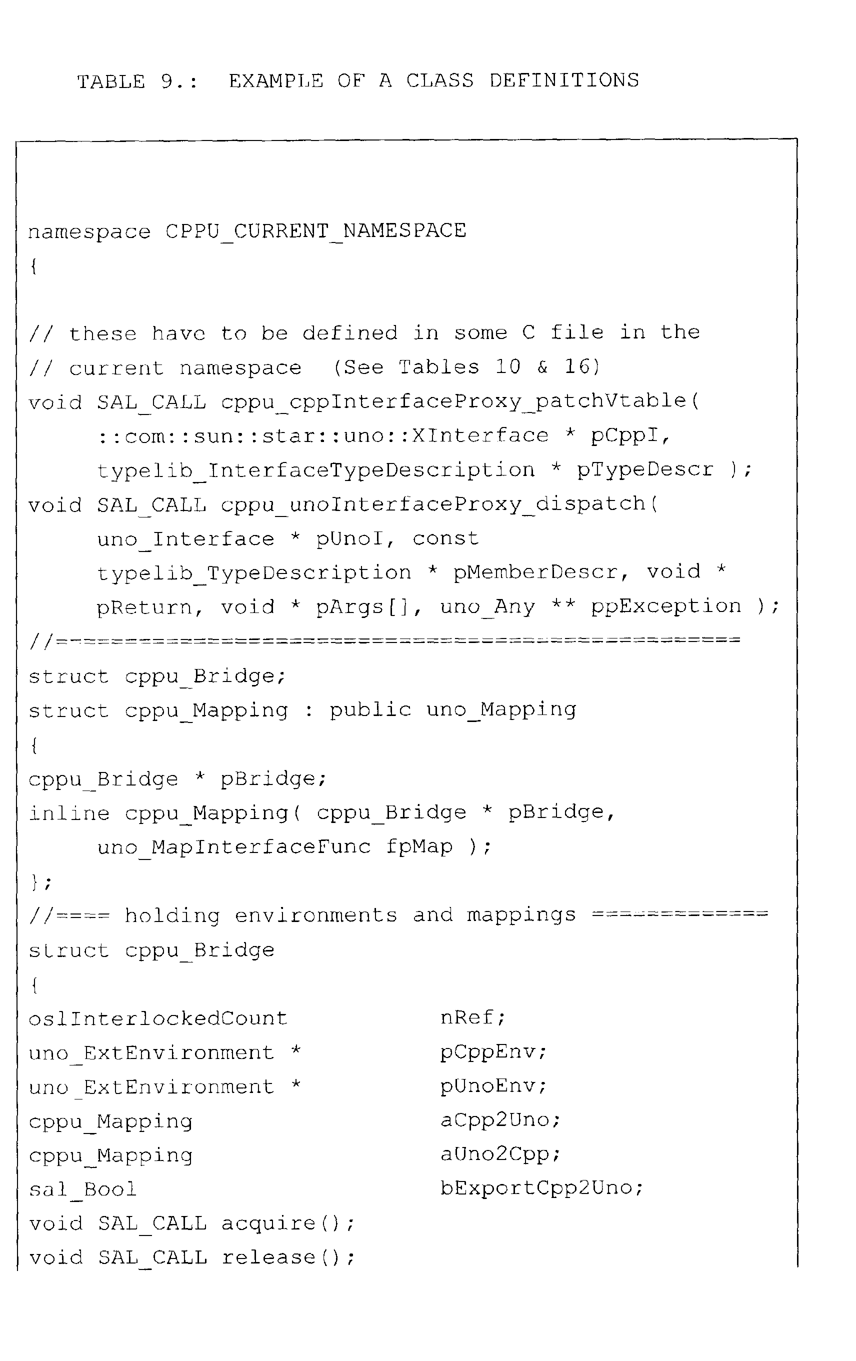

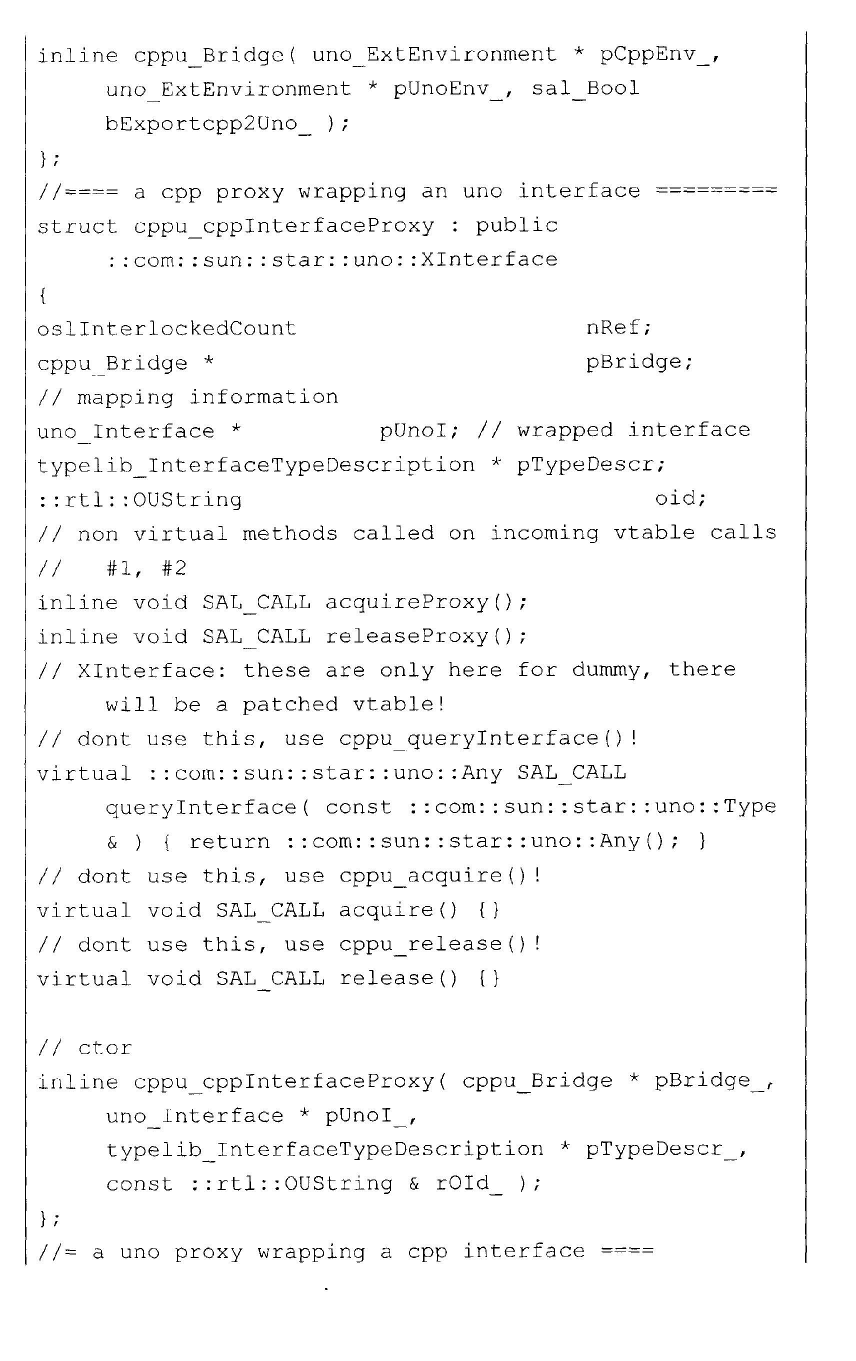

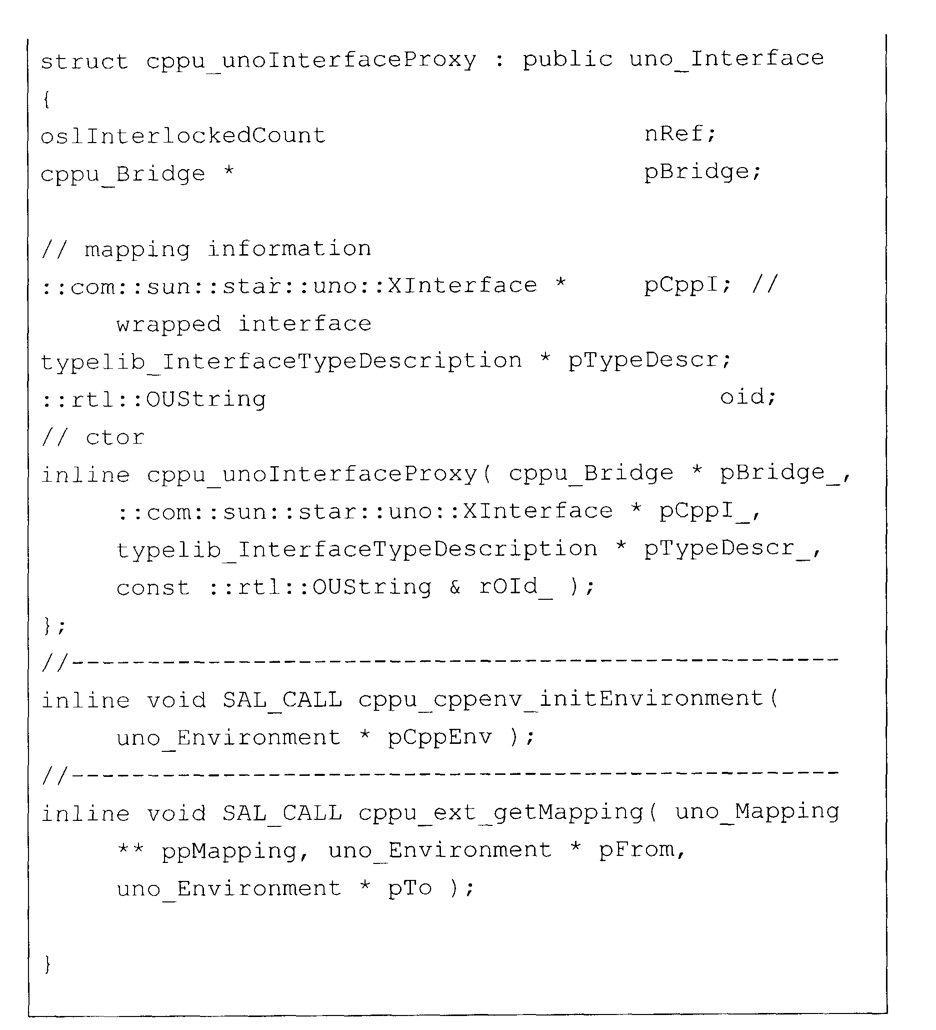

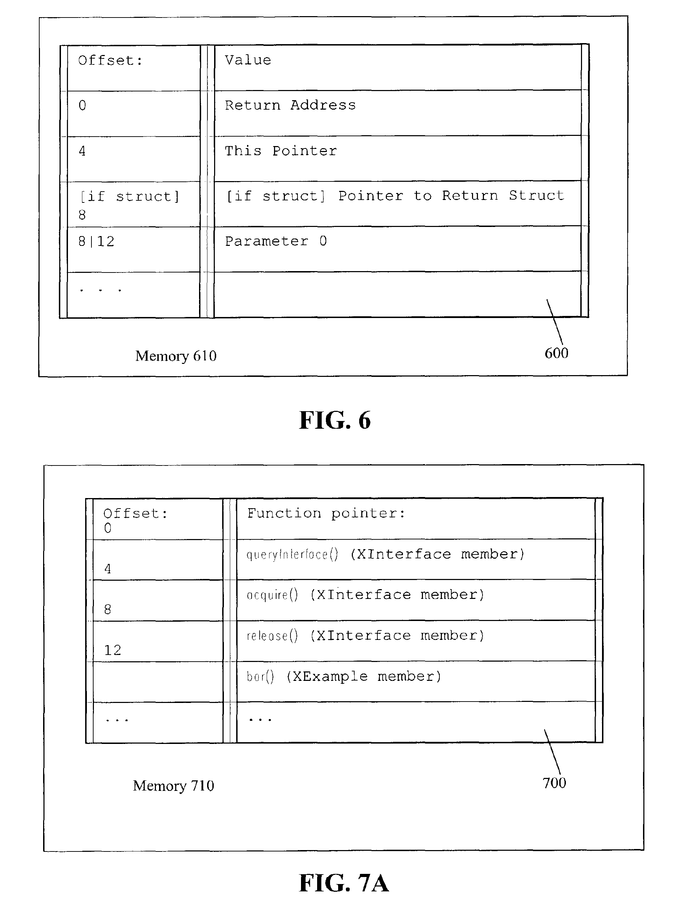

The proxy object is instantiated and the vtable pointer is modified to give a generic vtable. For a MICROSOFT C++ environment, the generic vtable can be used because an objects' this pointer is at anytime the second stack parameter (See Fig. 6). However, for gcc or sunpro5 (See Table 6), the first parameter may the pointer to a struct return space. Thus, for there compilers, a vtable for each type that is used must be generated.

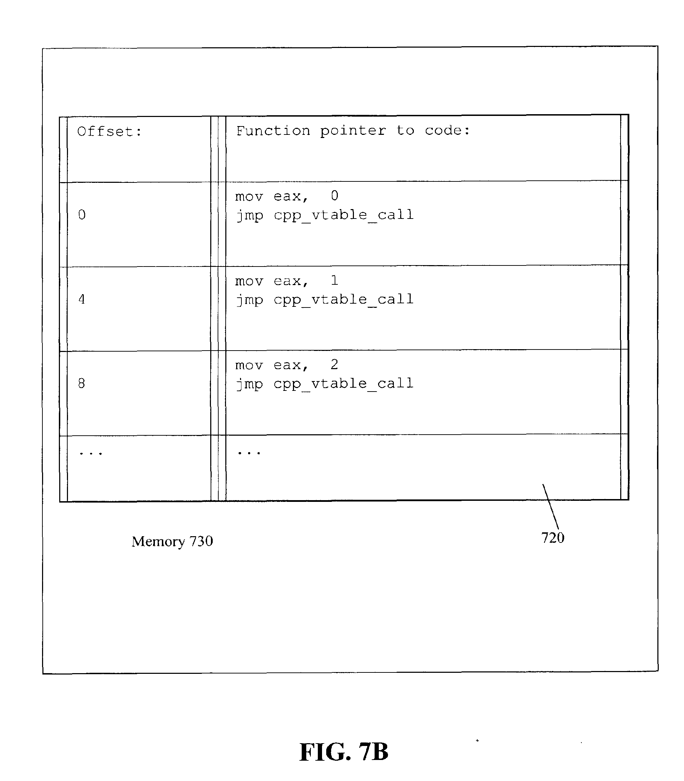

As explained more completely below, when the proxy interface is called, a vtable index is determined by the generic vtable (See Figs. 7A and 7B), and based upon this index, the method type description is determined. This method type description is the information that is used to get the values from the processor call stack and perform a dispatch call on the target UNO interface that the C++ proxy is wrapping.

After the dispatch call, the returned exception information is checked to determine whether a C++ exception has to be generated and raised. If no exception has occurred, the inout/out parameters are reconverted. In this example, the reconversion of inout/out parameters is only important for values representing interfaces or values containing interfaces, because the values of all objects in the UNO environment are binary compatible on a specific computing architecture.

The C++ proxy, as defined by Table 9, holds the interface origin, i.e., the target UNO interface. Thus, the C++ proxy can register with the C++ environment on the first execution of method acquire, and can revoke itself on its last execution of method release from its environment.

The C++ proxy manages a reference count for the proxy, a pointer to the bridge of the C++ proxy to obtain the counterpart mapping, the UNO interface the C++ proxy delegates calls to, the (interface) type the C++ proxy is emulating, and an object identifier (oid). The type and object identifier are needed to manage objects from environments, for proof of object identity, and to improve performance. A proxy to an interface is not needed if there is already a registered proxy for that interface.

When the proxy object is created by the MICROSOFT Visual C++ compiler, the vtable is patched by the execution of method patchVtable. One embodiment of method patchVtable is presented in TABLE 10.

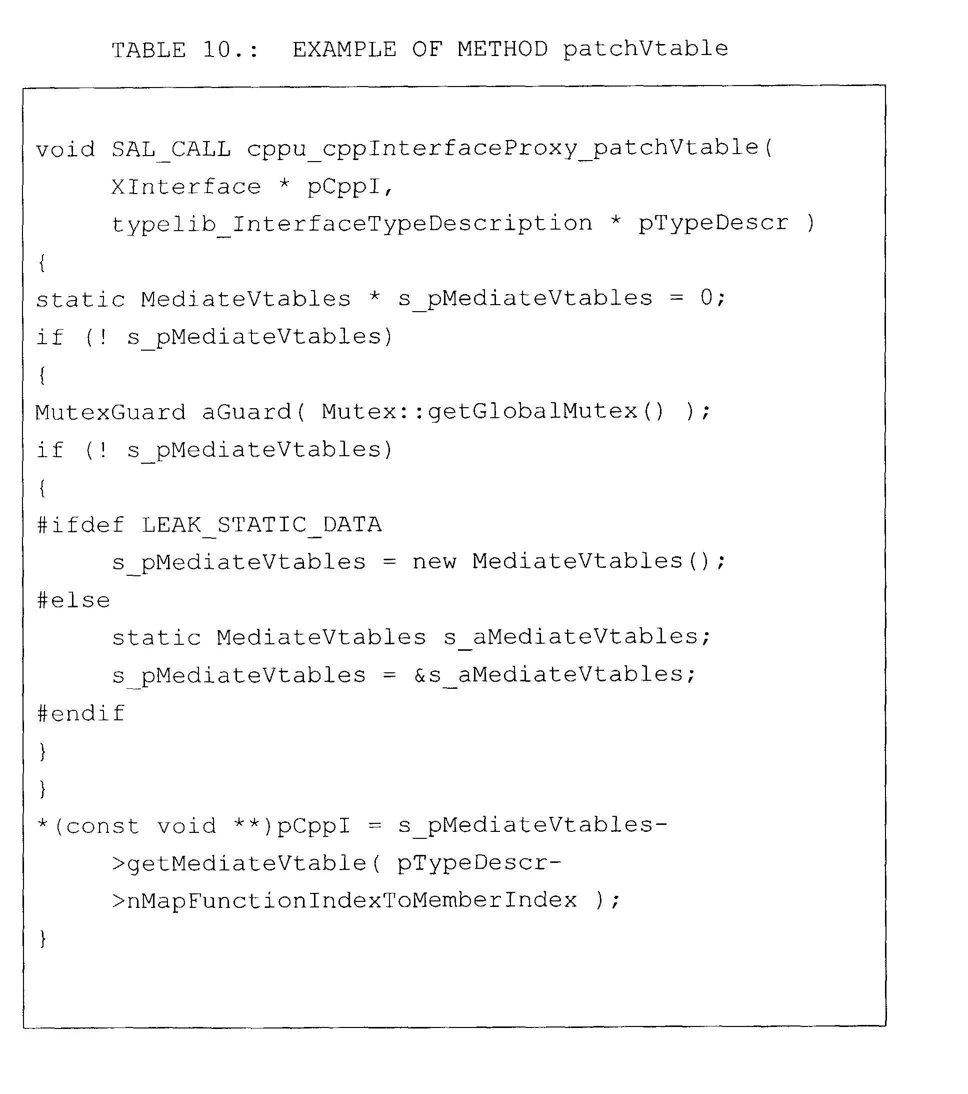

An embodiment of the class MediateVtables that is used to instantiate the object MediateVtables in method patchVtable is presented in TABLE 11.

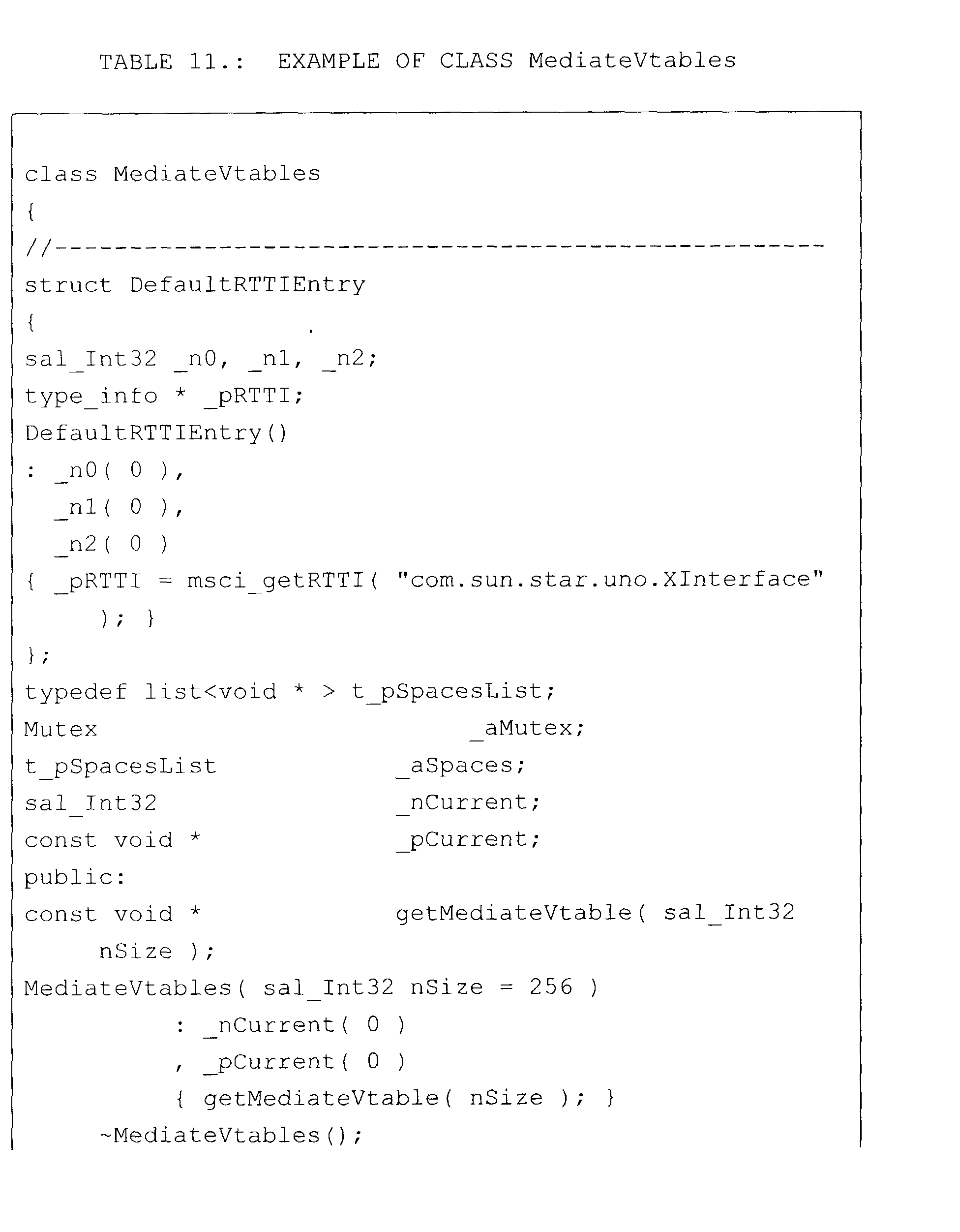

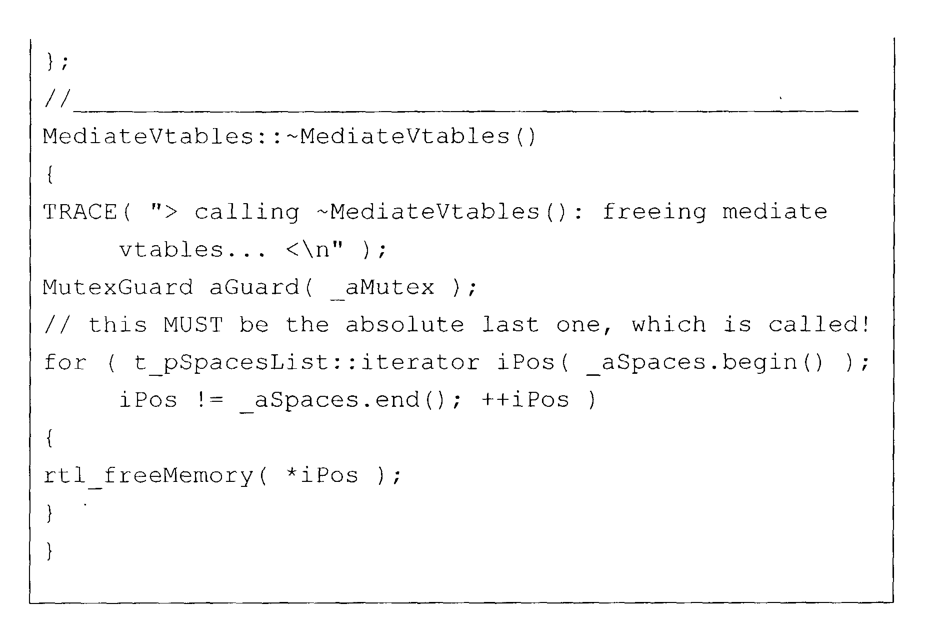

TABLE 12 is an example of one embodiment of a method getMediateVtable that is called in the embodiment of method patchVtable of TABLE 10.

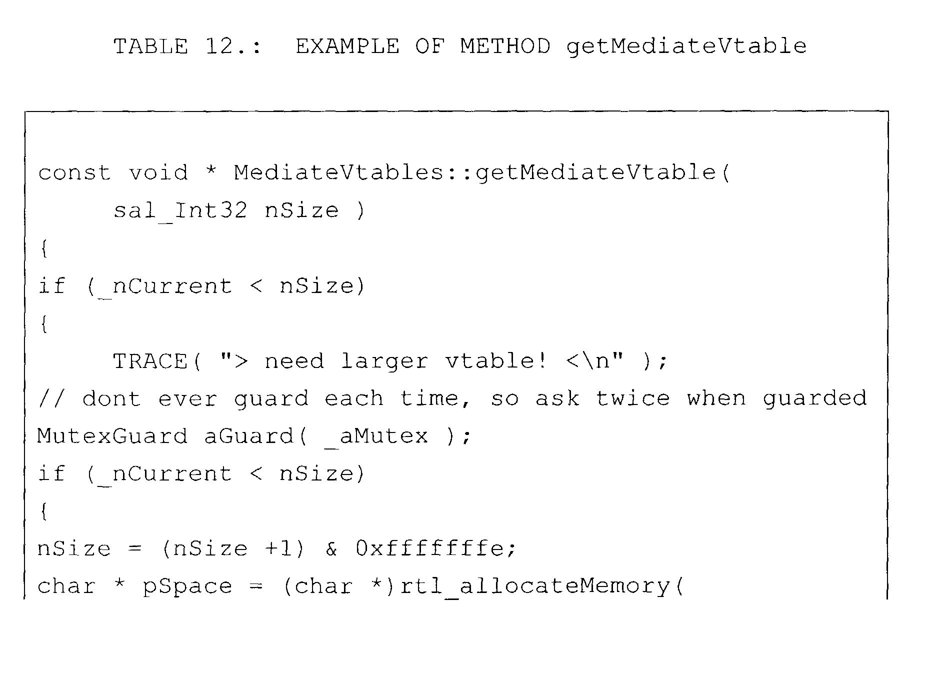

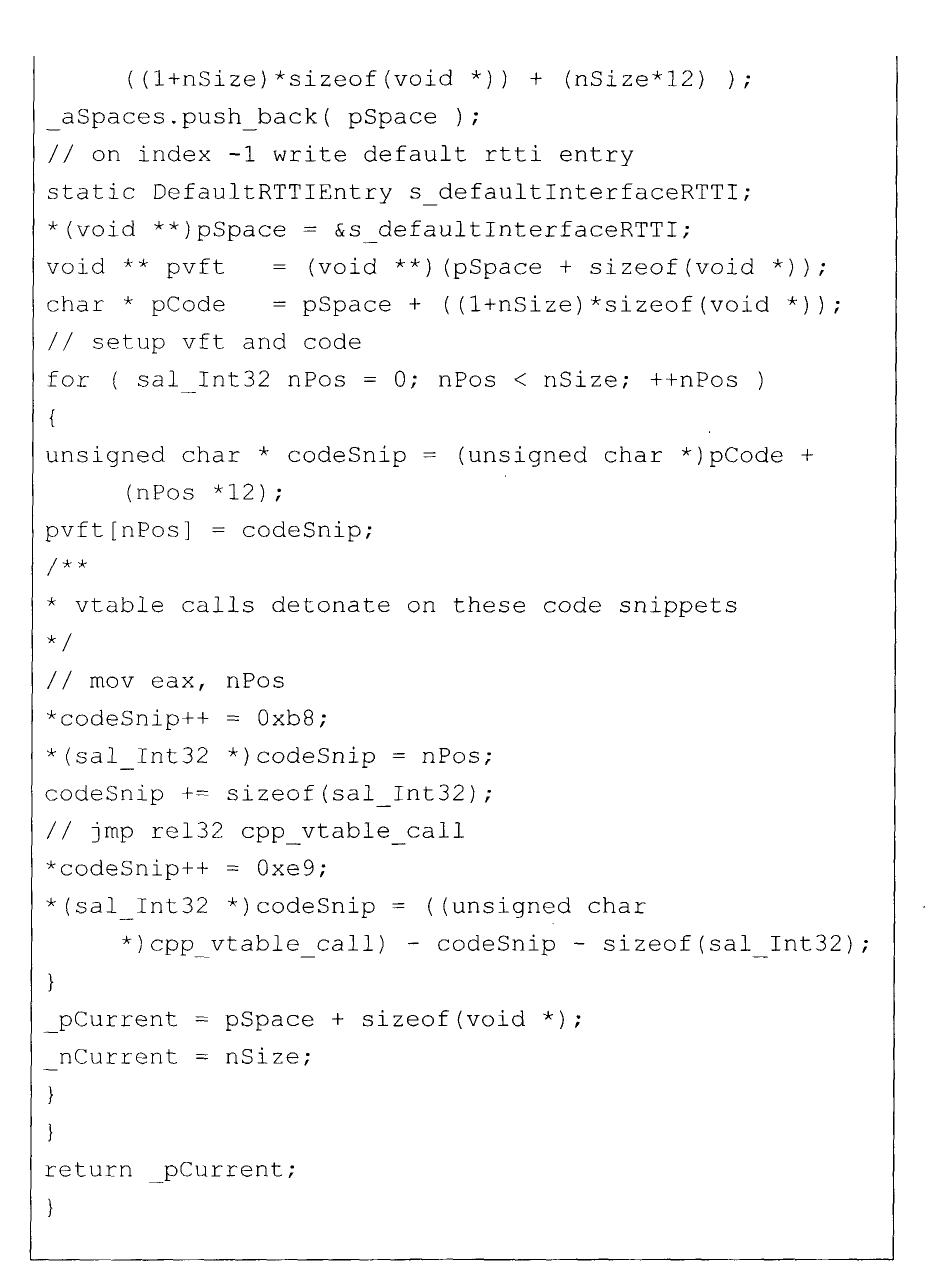

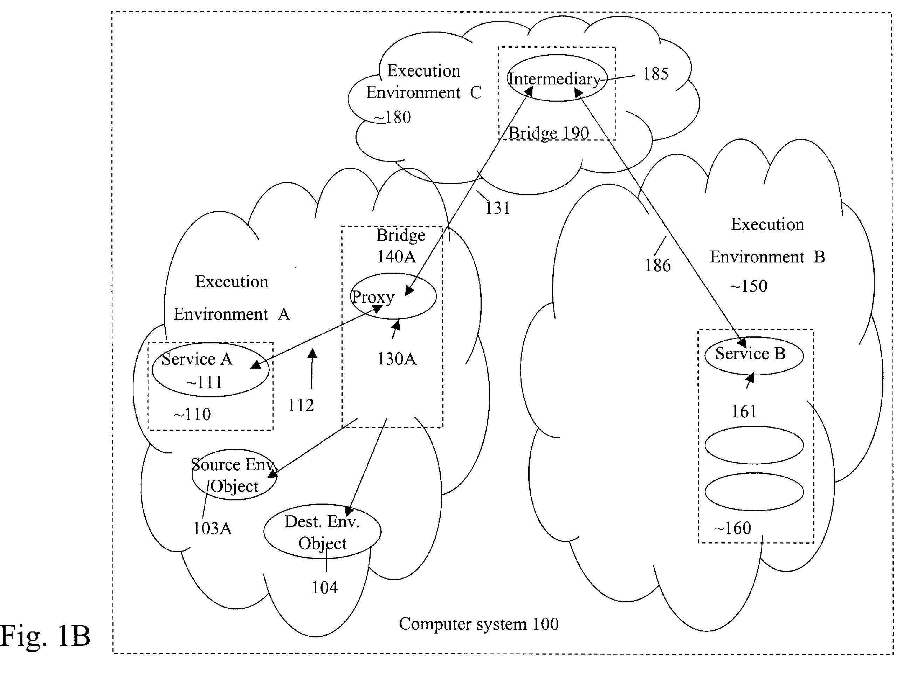

Figure 6 is an example of a call stack 600 of a virtual function call that is stored in a memory 610 of computer system 100 (Figs. 1A and 1B). The left-hand column is the stack offset for the start of storage location, and the right hand column gives the value stored at each storage location.

The vtable for the C++ proxy, i.e., a function pointer array to perform polymorphic calls on C++ objects, determines which function should be called. Figure 7A is an illustration of the vtable for this example that correlates the slots in the table to the methods handled by the C++ proxy. Recall, that every proxy has to inherit the methods from UNO interface XInterface, which are methods acquire, release, and queryInterface.

When the call to method bar (Table 7) is executed, the call is directed to the C++ proxy. The only task of the proxy vtable is to determine the call index of the UNO method that is to be called. (See Fig. 7B)

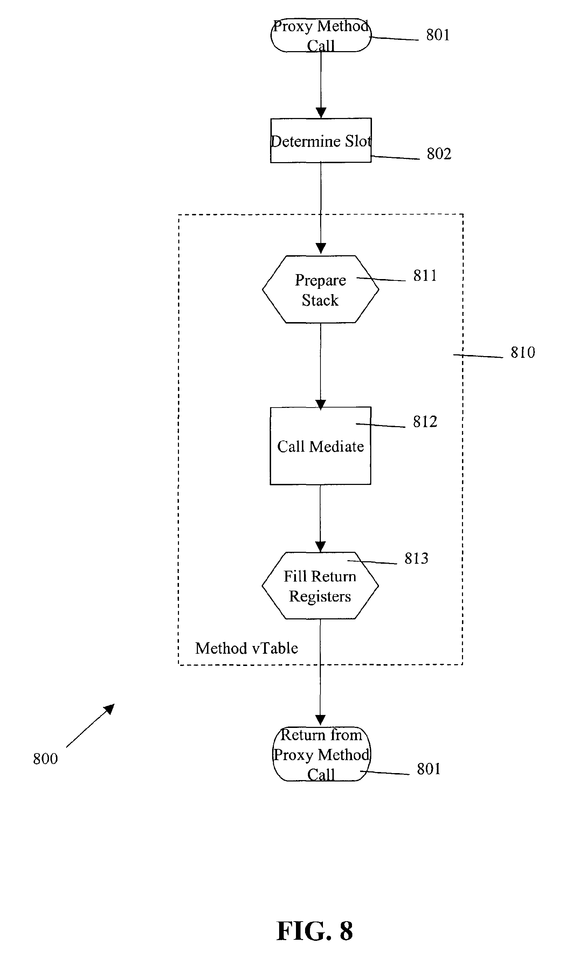

Figure 8 is a process flow diagram of one embodiment of the operations performed by a proxy 130 or 130A that in this example is the C++ proxy. When method bar is called, process 800 (Fig. 8) is started in operation 801.

Initially, in determine slot operation 802 the C++ proxy executes method patchVtable (See Table 10) that in turn calls method getMediateVtable (See Table 12). Method getMediateVtable reaches an assembler snippet that determines the vtable slot of method bar and calls method vTable 810. This completes operation 802.

TABLE 13 is an example of one implementation of method vTable 810.

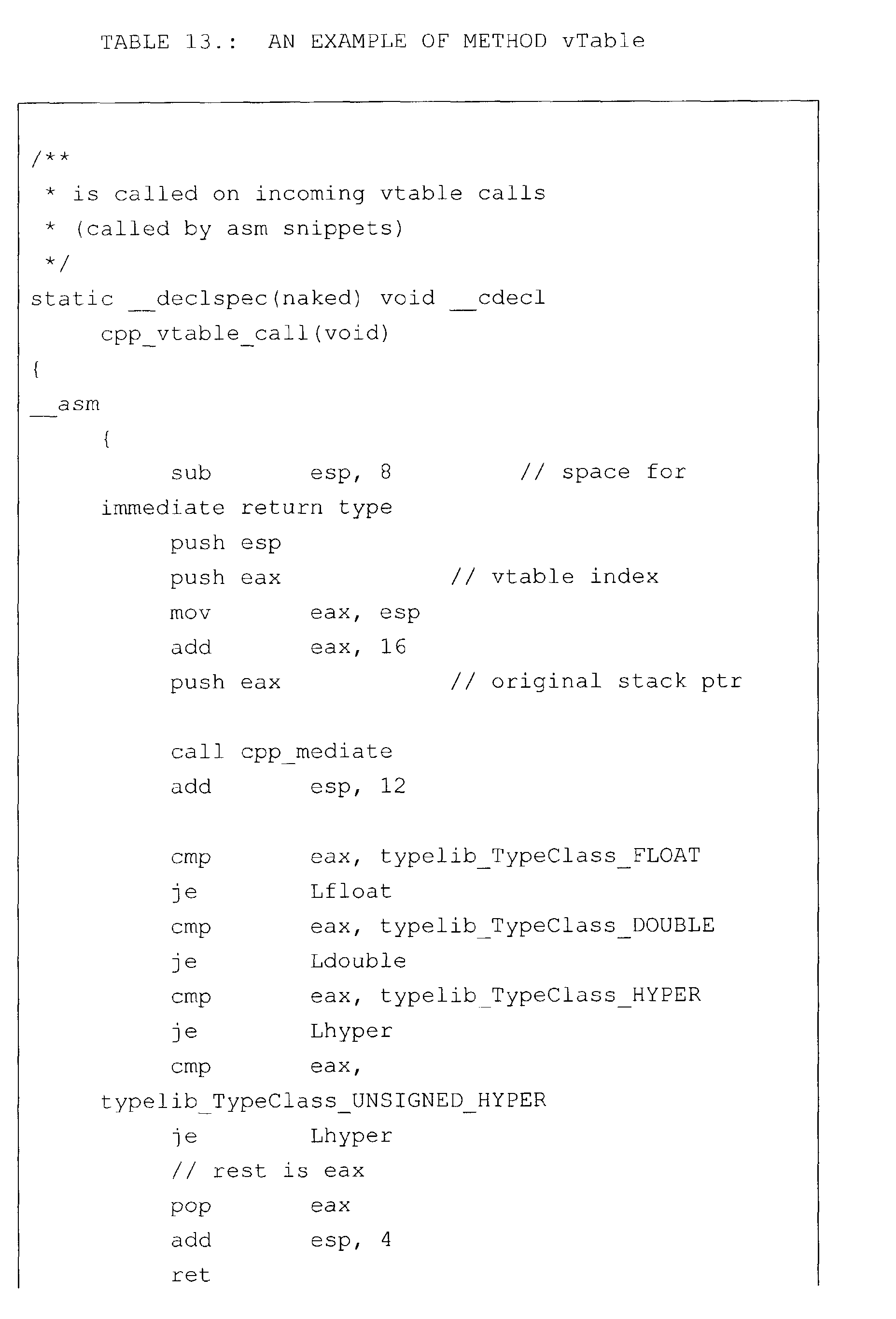

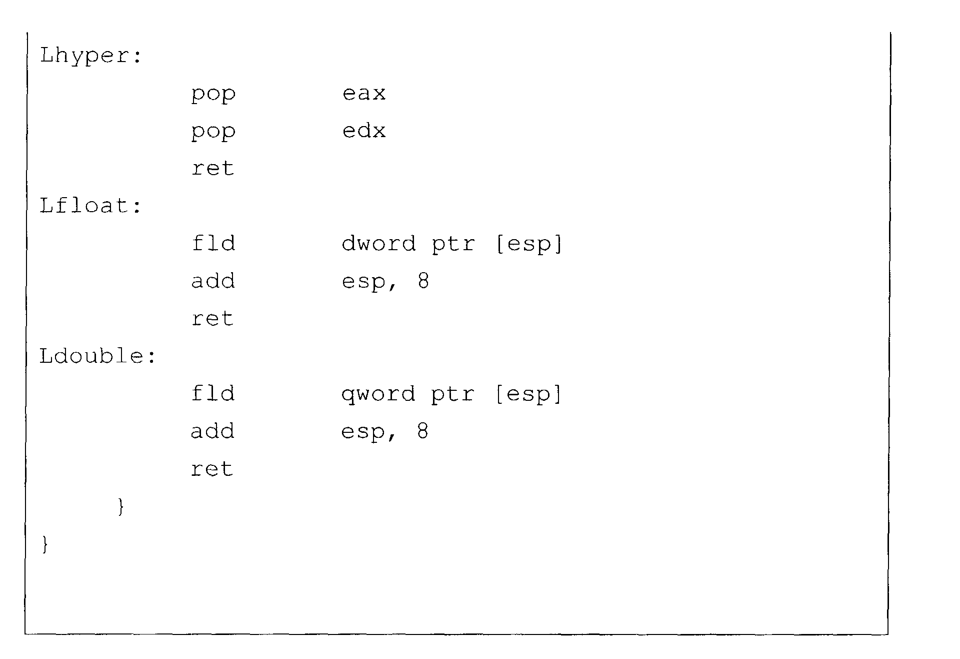

Operation 802 transfers processing to prepare stack operation 811 in method mediate 810. In operation 811, the stack space is prepared for register data, and then processing passes to call mediate operation 812.

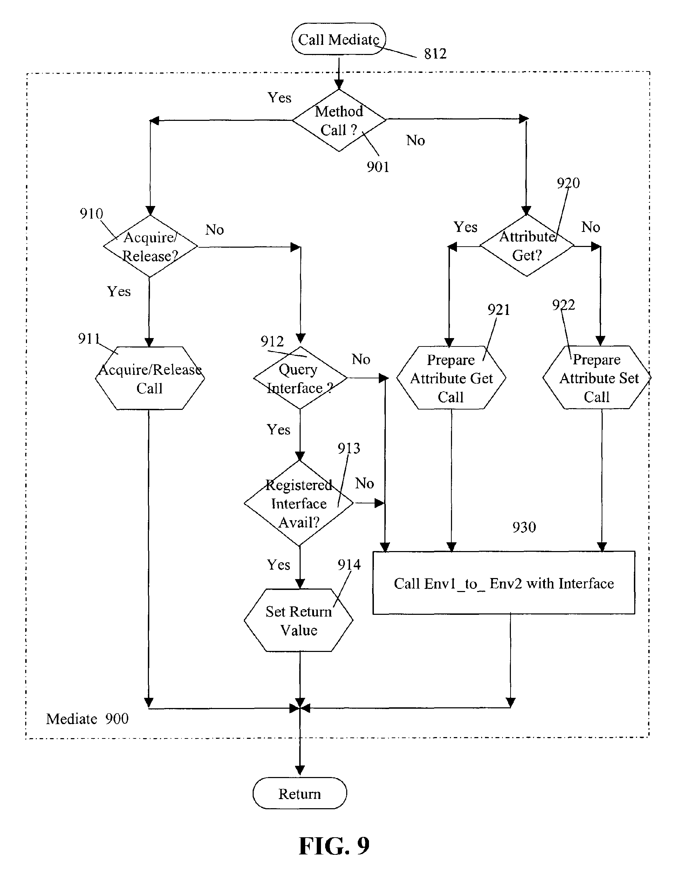

Call mediate operation 812 calls method mediate that in turn looks up the called vtable index, gets the attribute or method type description, and calls a method that dispatches that actual call to the method in the UNO environment. A process flow diagram of one embodiment of method mediate 900 is presented in
Figure 9. Table 14 is an example of method mediate.

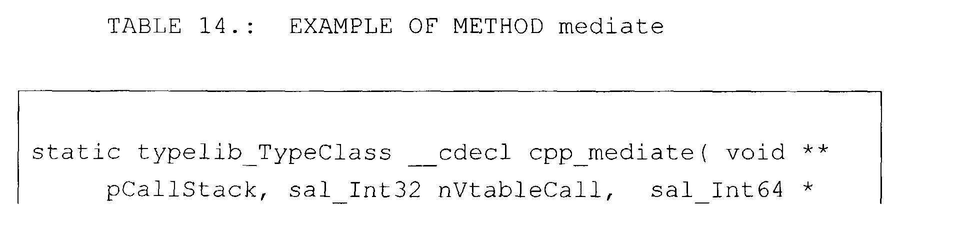

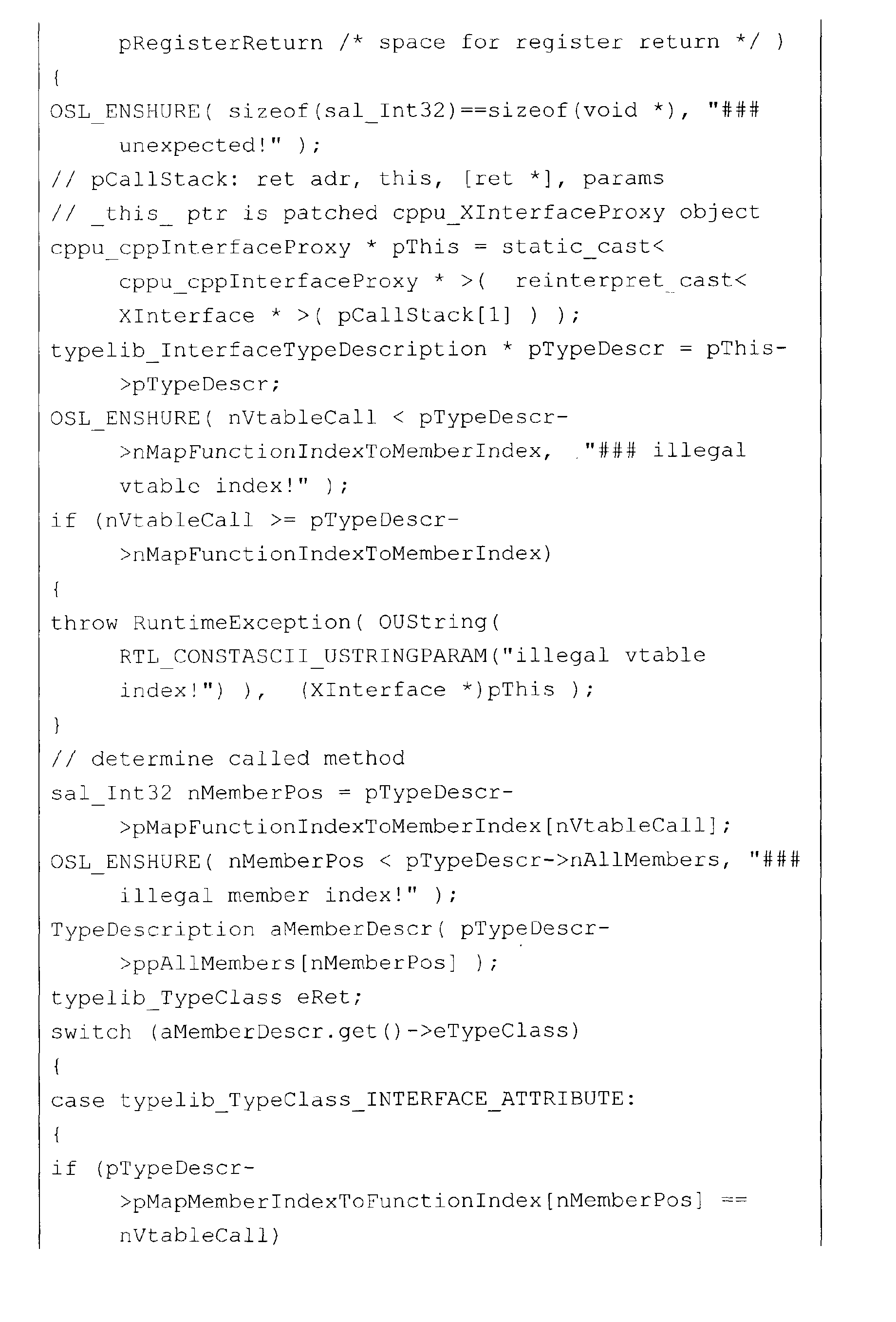

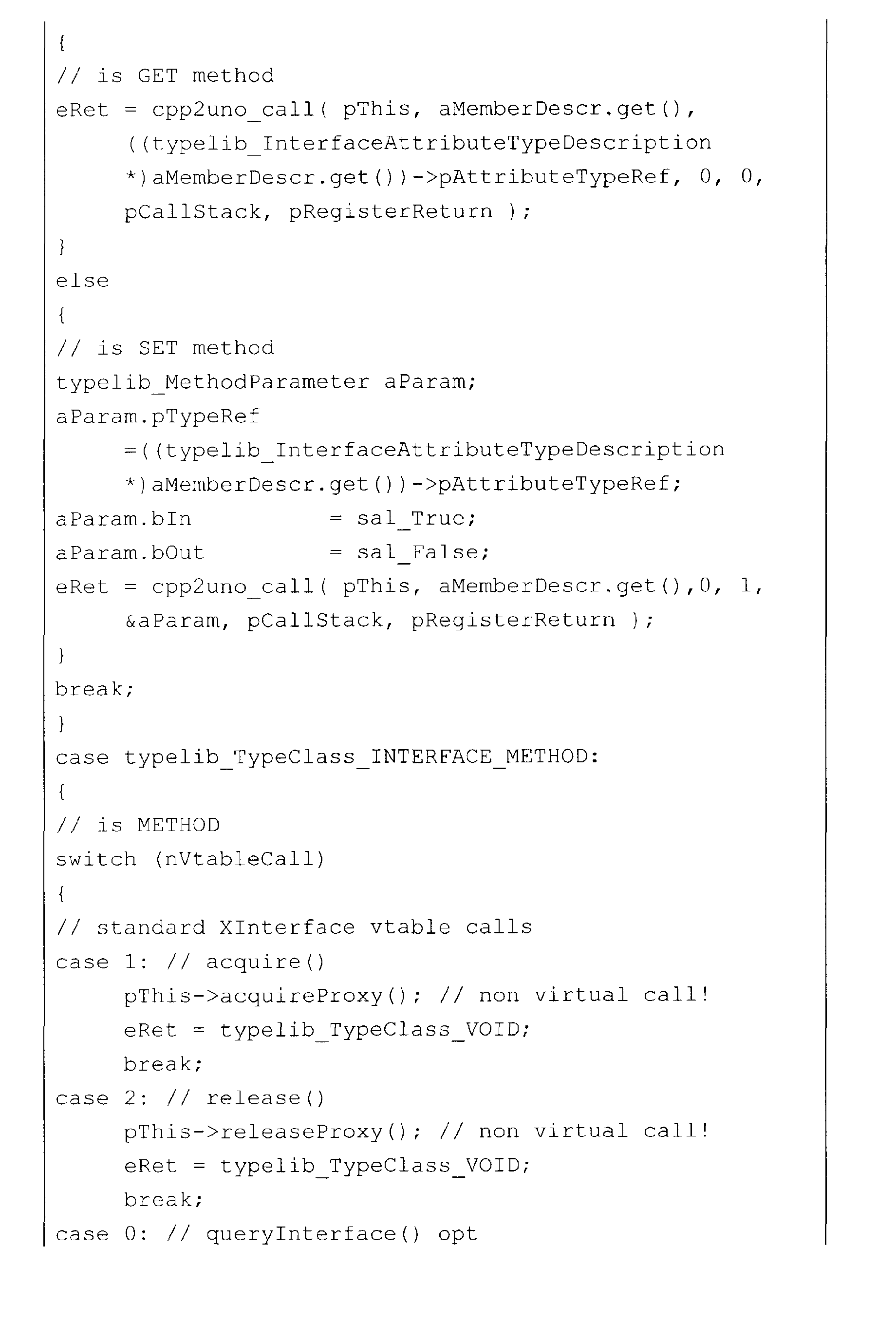

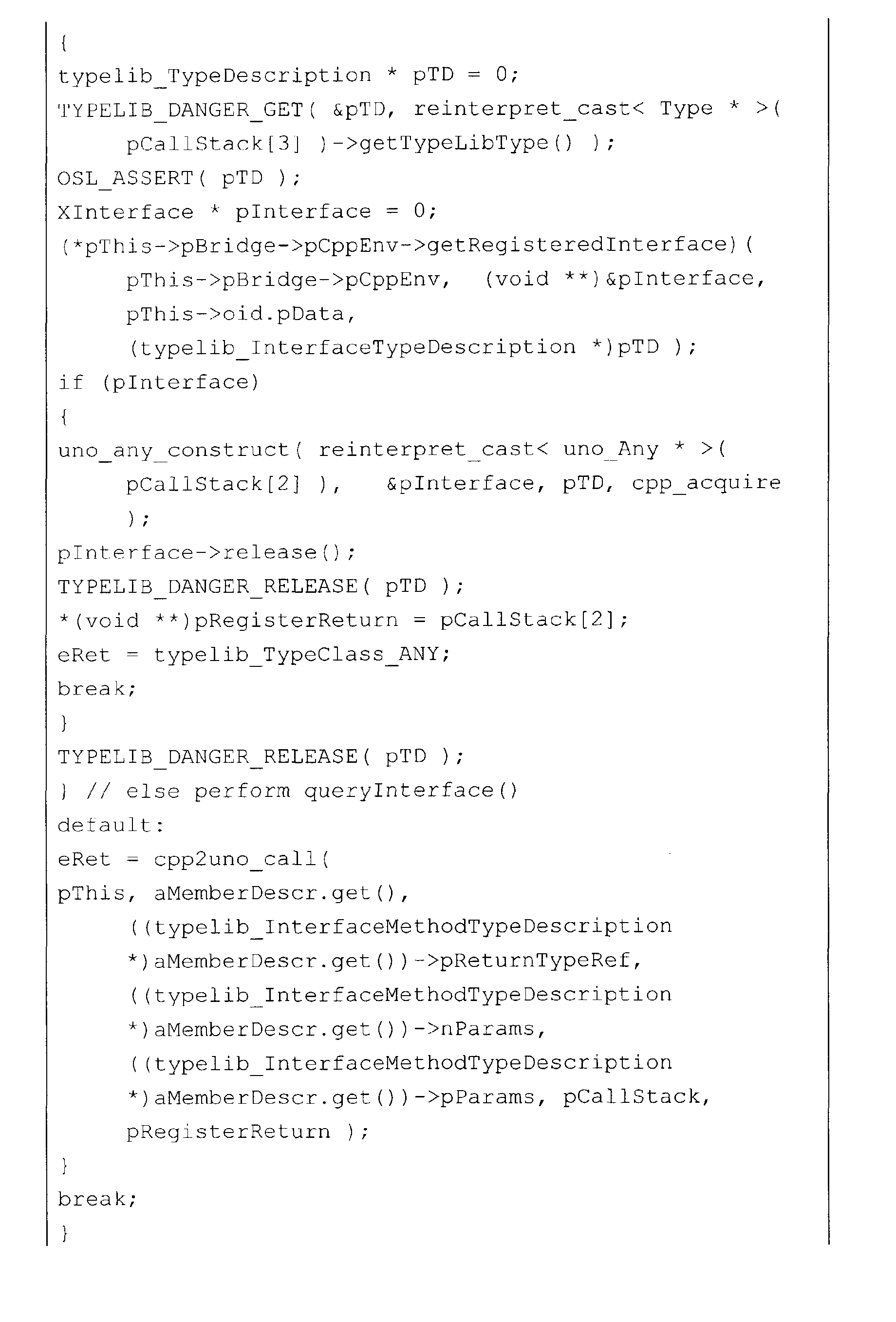

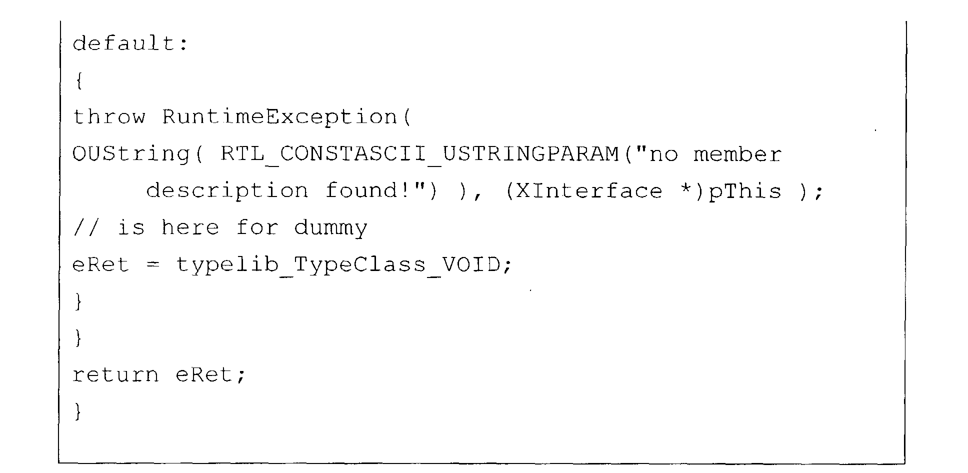

Method call check 901 of method mediate 900 determines whether the call is a method call. If the call is a method call processing transfers to acquire/release check operation 910, and otherwise to attribute get check operation 920.

Acquire/release check operation 910 branches to acquire/release call operation 911 if the method call is a call to either method acquire or method release, because these calls can be executed without calling the interface in the source environment. If the method call is not a call to either method acquire or method release, processing transfers from check operation 910 to query interface check operation 912. Acquire/Release call operation 911 performs the appropriate method, which is a non-virtual call, and returns.

Query interface check operation 912 determines whether the method call is to method queryInterface. If the method call is not to method queryInterface, check operation 912 transfers to call Env1_to_Env2 with Interface operation 930 and otherwise transfers to registered interface available check operation 913. In the current example, the call to method bar results in check operation 912 transferring to operation 930.

Nevertheless, to complete the description of this branch of method mediate 900, if there is a registered interface in the source environment object for method queryInterface, check operation 913 transfers to set return value operation 914 and otherwise to call Env1_to_Env2 with Interface operation 930. Asking whether the interface is registered in the source environment object is an optimization that eliminates a call to the actual interface in the source environment. Set return value operation 914 sets the registered interface as the return value and returns.

If the call to the C++ proxy was not a method call, check operation 901 transfers to attribute get check operation 920. In this embodiment, there is either an attribute get or an attribute set. If the call to the proxy is an attribute get, check operation 920 transfers to prepare attribute get call operation 921 and otherwise transfers to prepare attribute set call operation 922. Both operations 921 and 922 set up the parameters for the call and transfer to call Env1_to_Env2 with Interface operation 930.

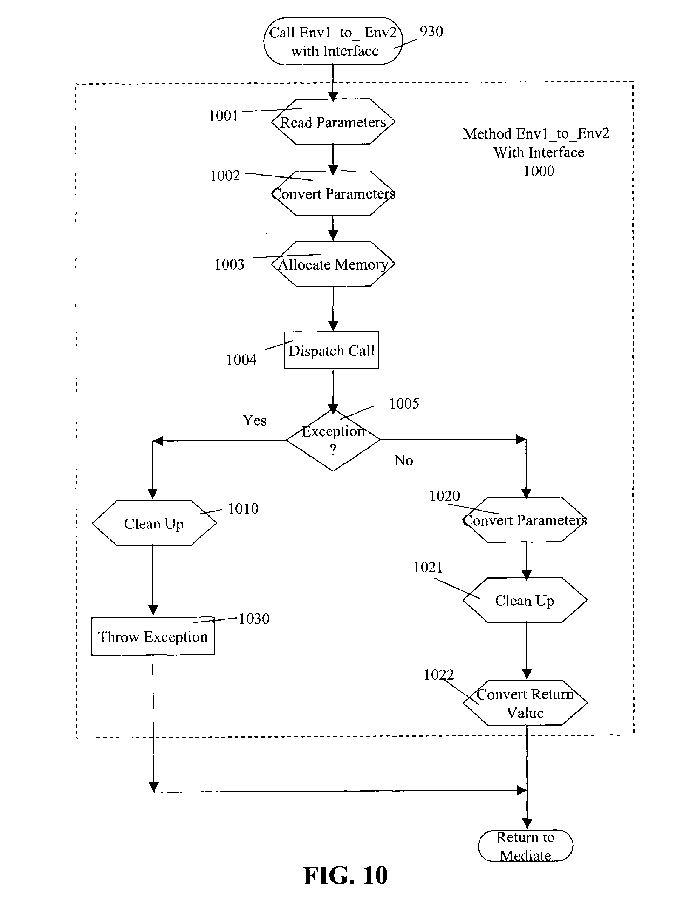

An embodiment of method Env1_to_Env2 with interface for the C++ proxy is presented in Table 15. Figure 10 is a process flow diagram for one embodiment of method Env1_to_Env2 with interface.

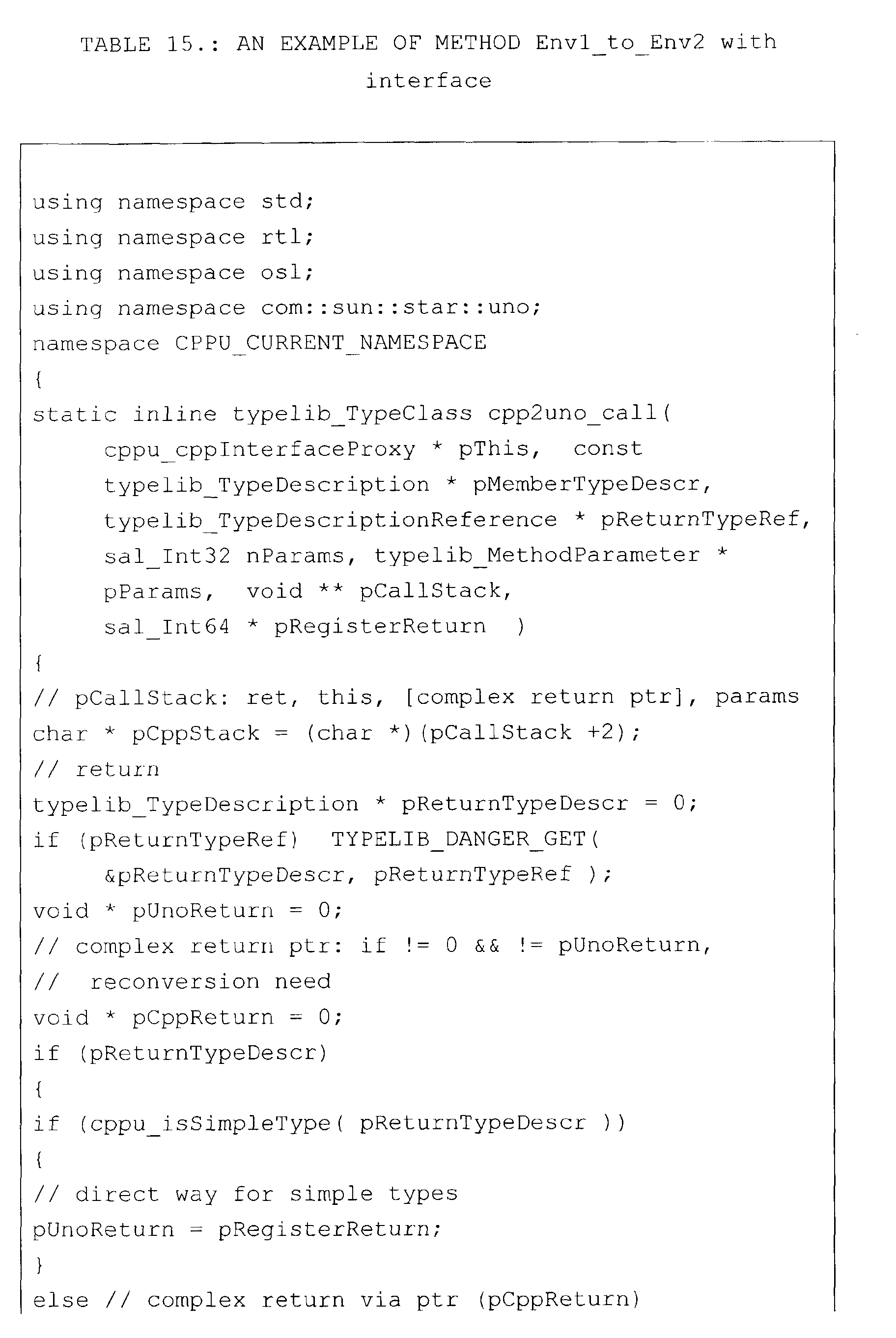

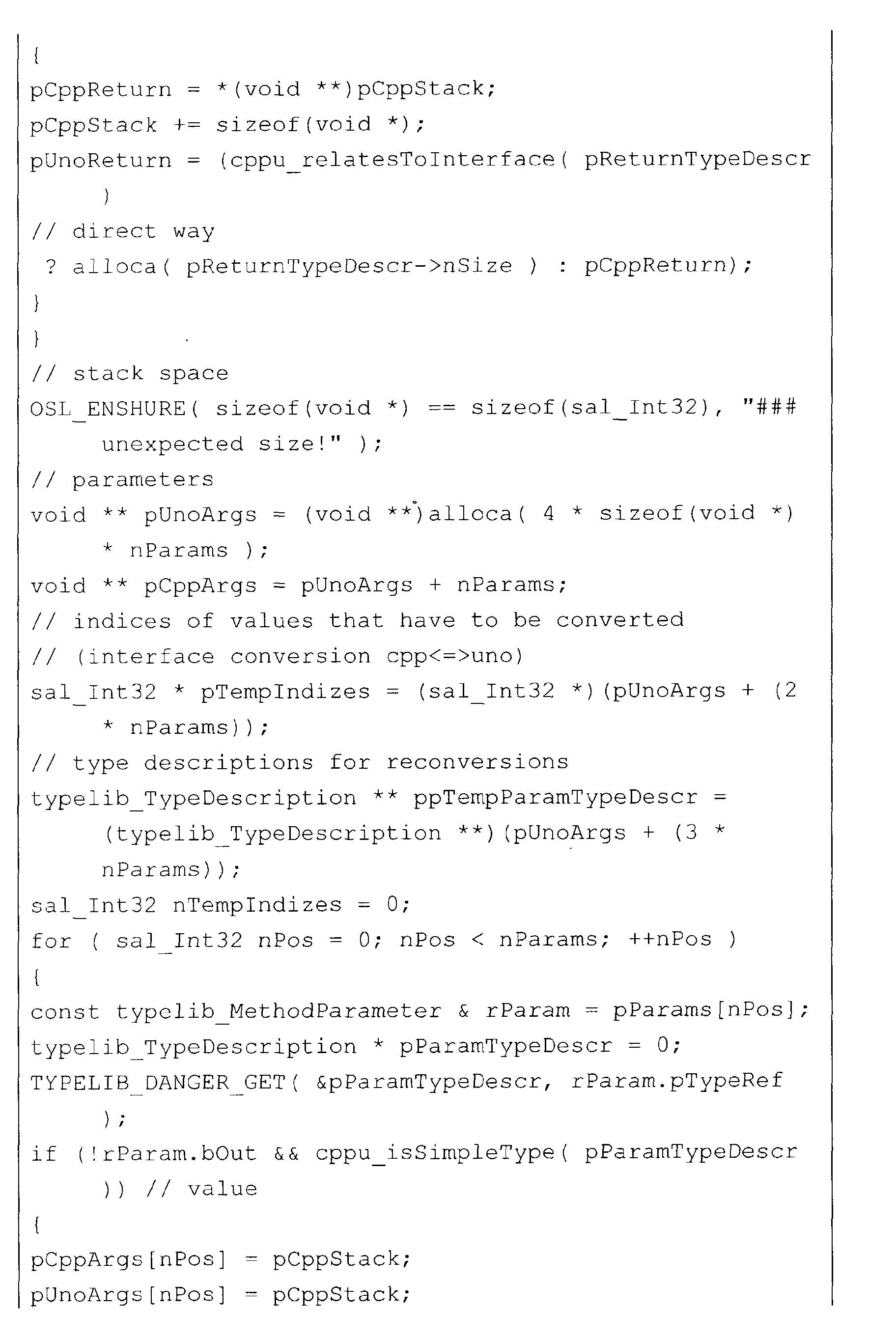

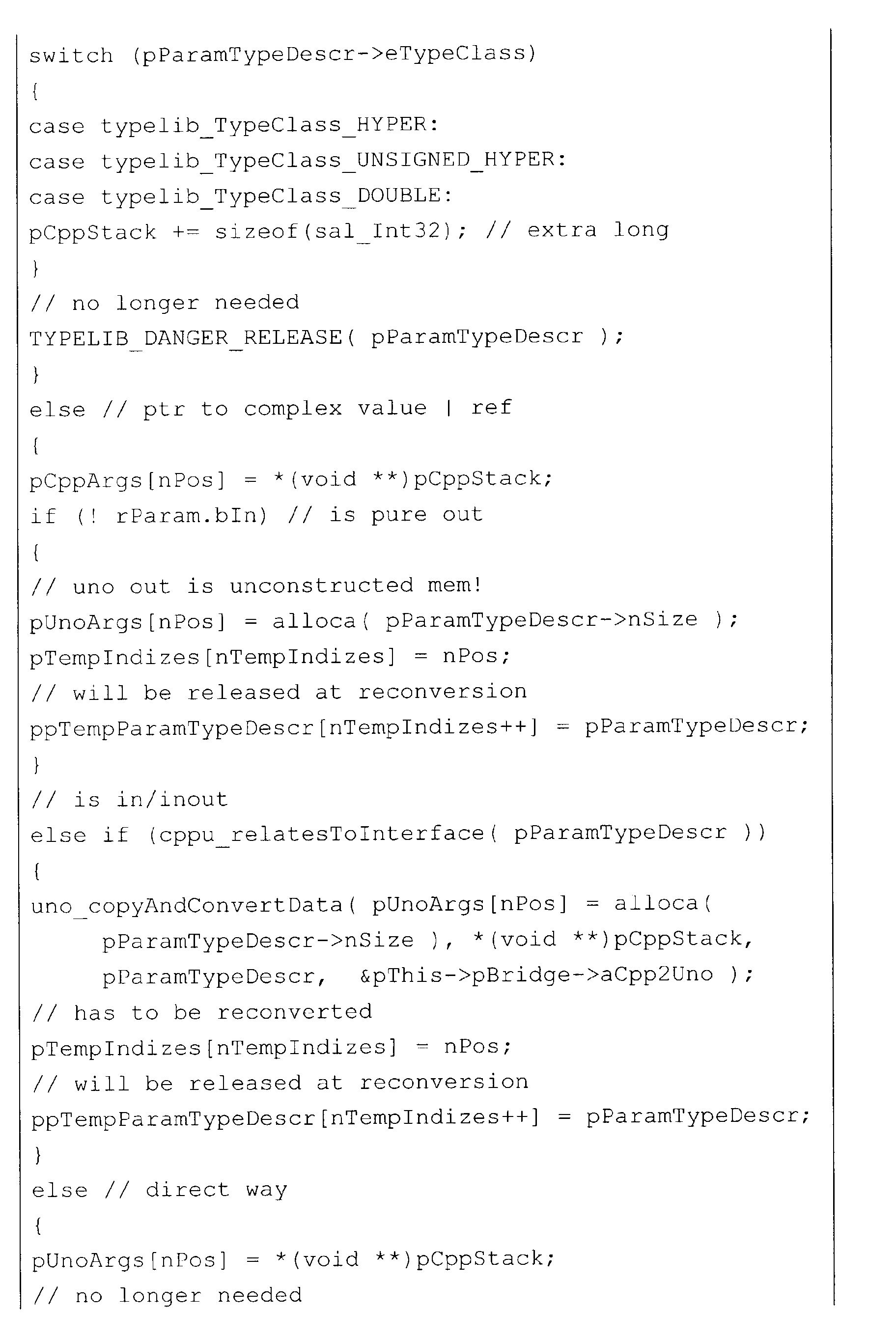

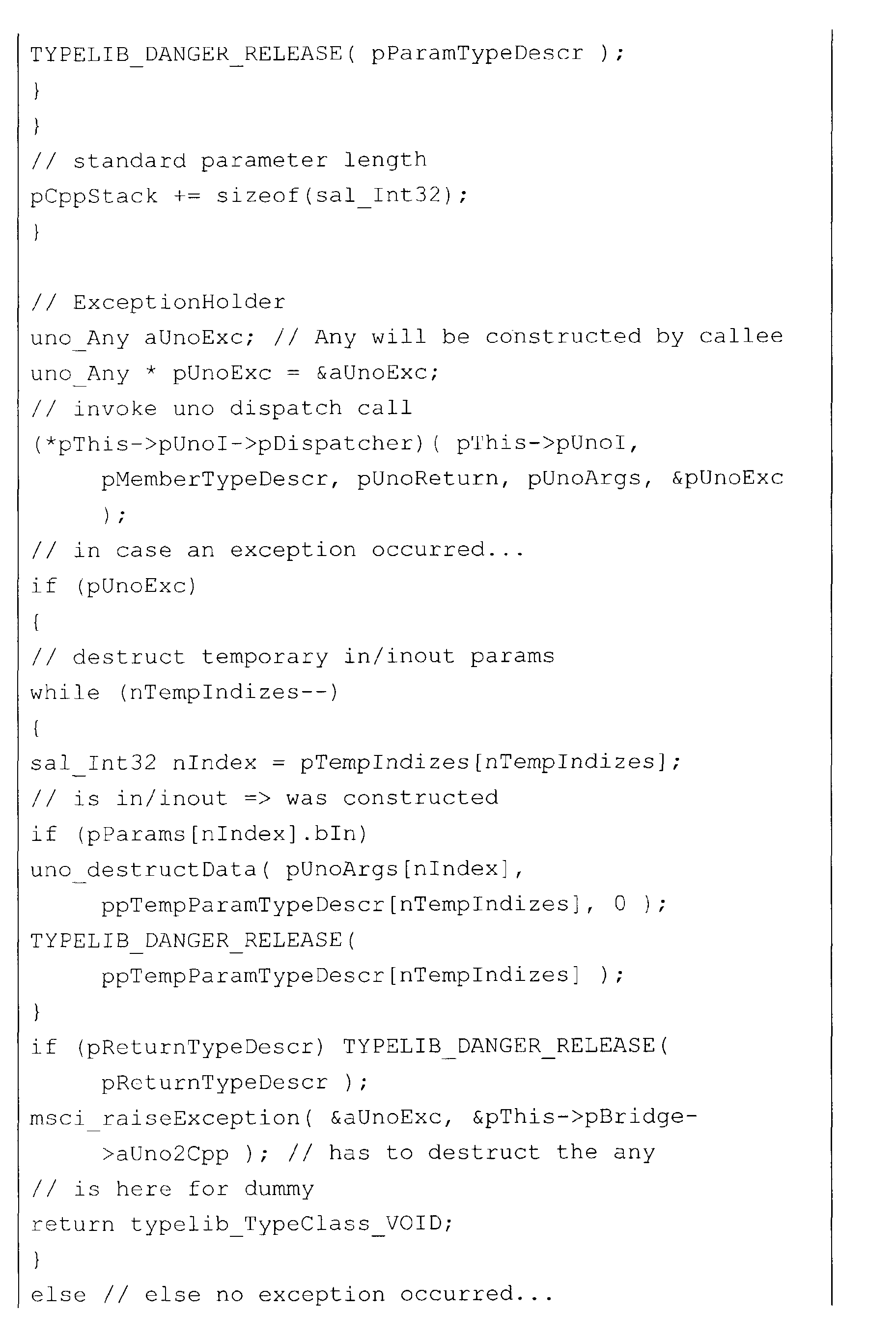

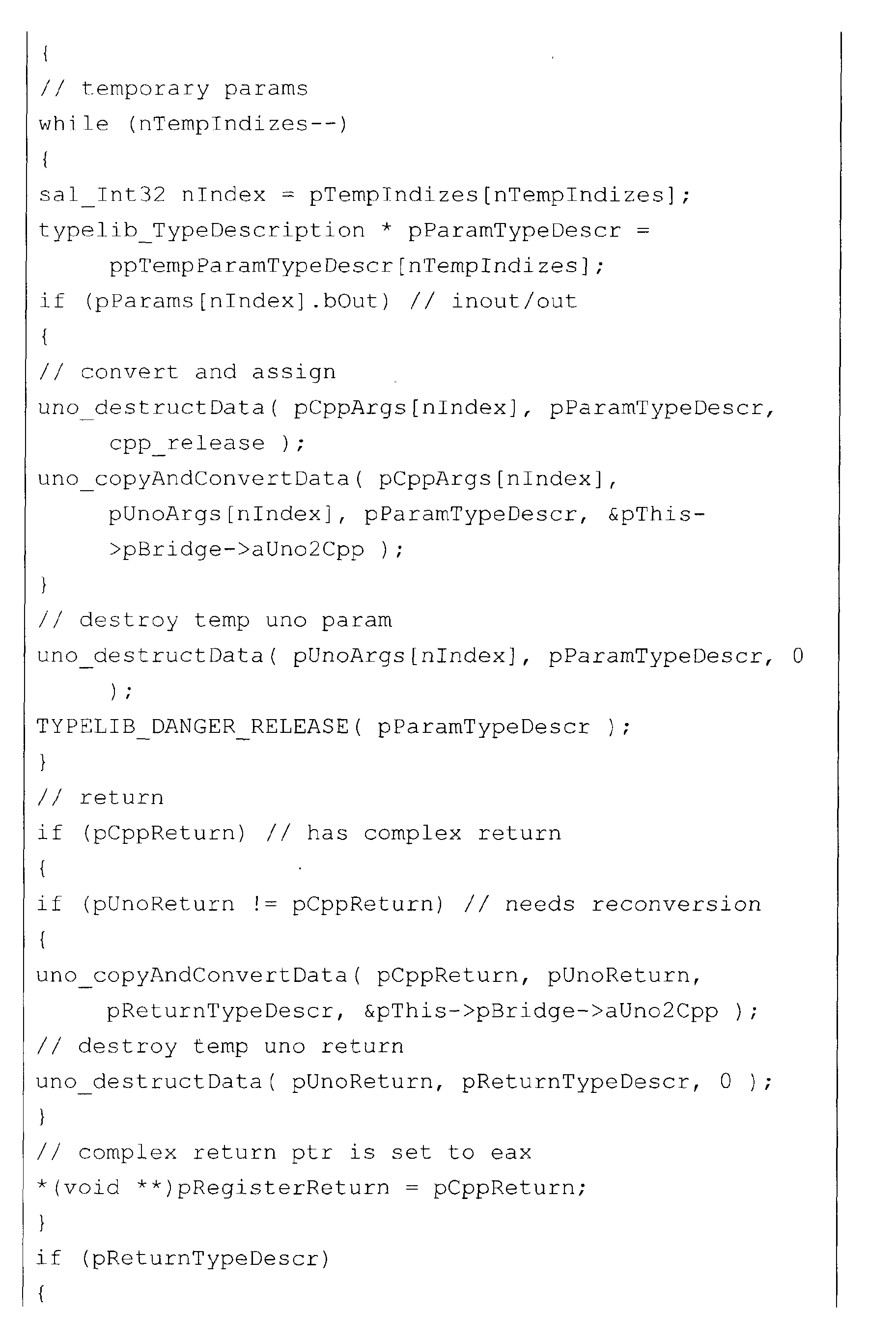

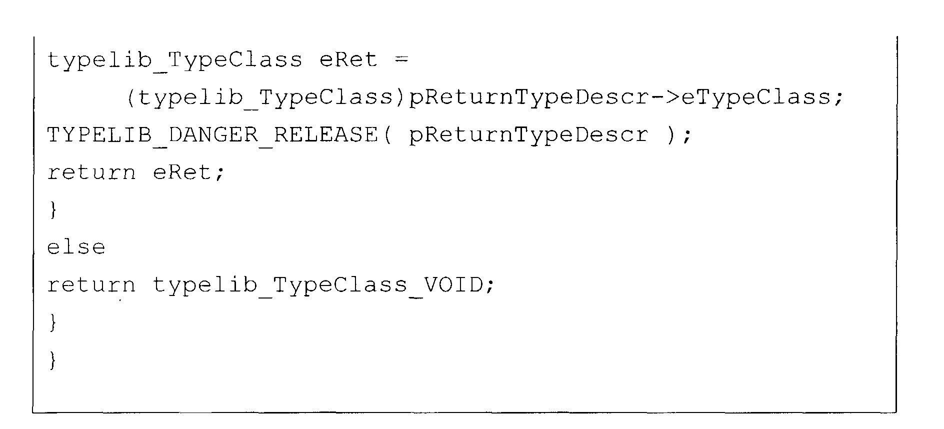

In Figure 10, read parameters operation 1001 reads the parameters from the stack. All simple parameters are directly accessed on the stack (up to eight bytes). All complex structures, e.g., interfaces, are referenced by a pointer. Since in this example UNO and C++ types have the same binary size (See Table 5), only interfaces need to be exchanged.

Read parameters operation 1001 transfers to convert parameters operation 1002. Convert parameters operation 1002, using the parameter type description, converts the parameters read to the UNO environment and transfers to allocate memory operation 1003. Allocate memory operation 1003 allocates memory for the out parameters returned by the call to the UNO interface, and for the return value. Allocate memory operation 1003 transfers processing to dispatch call operation 1004.

Dispatch call operation 1004 calls, in this example, method bar in UNO interface XExample. In general, dispatch call operation 1004 dispatches a call to the source interface (See Fig. 4). The call is executed in the source environment and the results, if any, are returned to operation 1004 that in turn transfers to exception check operation 1005.

Exception check operation 1005 determines whether an exception was thrown in response to the call. If an exception was thrown, check operation 1005 transfers processing to clean up operation 1110 and otherwise processing transfers to convert parameters operation 1020.

Clean up operation 1010 cleans up any temporary parameters that were created in the call in operation 1004. Operation 1010 transfers to throw exception operation 1030 that in turn throws an exception in the destination environment based upon the exception received from the call to the source environment.

If an exception was not thrown in the source environment, convert parameters operation 1020 converts any parameters that were returned from operation 1004, e.g., out parameters and/or inout parameters using the parameter type description, from the source environment to the destination environment, and transfers to clean up operation 1021. Clean up operation 1021 cleans up any temporary parameters that were created in the call in operation 1004 and transfers to convert return value operation 1022. Operation 1022 converts any return value from the source environment to the destination environment so that both the return value and any returned parameters are written back, in this example to C++. Processing returns to mediate method 900 that in turn returns to fill return registers 813 in method vTable 810.

In fill return registers operation 813, if the type is one of float, double, hyper, or unsigned hyper, an appropriate action is taken to properly fill the return registers. Otherwise, a 32-bit integer is placed in register eax. See Table 13 for one embodiment of operation 813.

The above example assumed that the original call was in a C++ environment and was directed to a method of an interface in the UNO environment. In the embodiment of Figure 1A, another possibility is that a call is made in the UNO environment, i.e., environment 120 to a C++ method in environment 150. In this case, the bridge and proxy would be in the UNO environment. Alternatively, in Figure 1B, the intermediate environment is a UNO environment.

In this embodiment, struct cppu_unoInterfaceProxy in Table 9 is used to instantiate the UNO proxy that wraps a C++ interface. As explained more completely below, when the proxy interface is called, a check is made to determine if a method of the proxy interface has been called. If a method was called, any input parameters are converted using the type description and pushed on a processor stack, and then a call is dispatched to the demanded vtable slot in the source interface.

After execution of the dispatch call, the returned information is checked to determine whether a C++ exception was generated. If no exception has occurred, the inout/out parameters are reconverted. In this example, the reconversion of inout/out parameters is only important for values representing interfaces or values containing interfaces, because the values of all objects in the UNO environment are binary compatible on a specific computing architecture.

The UNO proxy, as defined by Table 9, holds the interface origin, i.e., the target C++ interface. Thus, the UNO proxy can register at with the UNO environment on the first execution of method acquire, and can revoke itself on its last execution of method release from its environment.

The UNO proxy manages a reference count for the proxy, a pointer to the bridge of the UNO proxy to obtain the counterpart mapping, the C++ interface the UNO proxy delegates calls to, the (interface) type the UNO proxy is emulating, and an object identifier (oid). The type and object identifier are needed to manage objects from environments, for proof of object identity, and to improve performance. A proxy to an interface is not needed if there is already a registered proxy for that interface.

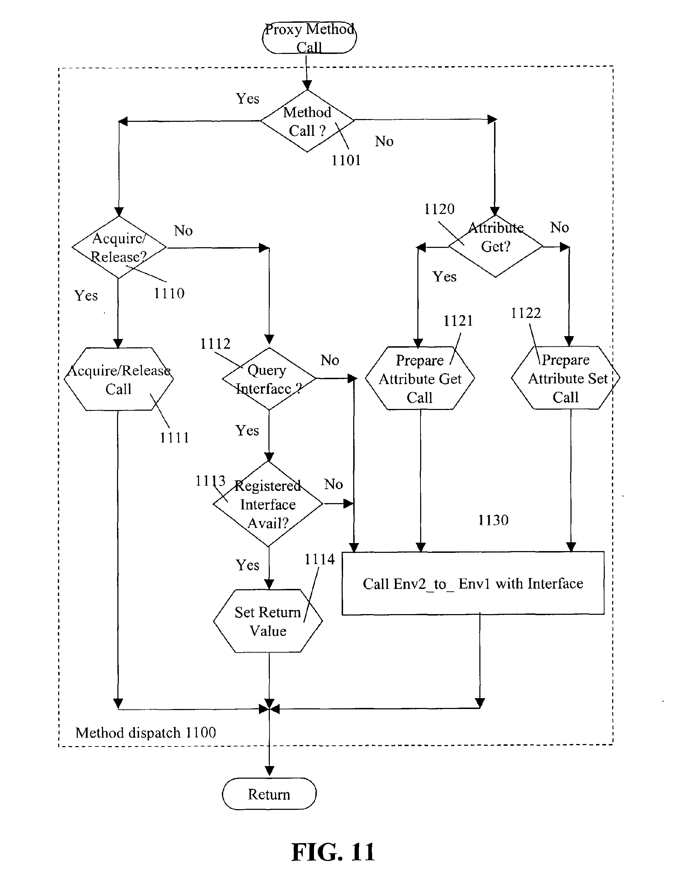

When the call to a method in the wrapped C++ interface is executed, the call is directed to the UNO proxy. Figure 11 is a process flow diagram of one embodiment of the operations performed by the UNO proxy. One example of computer code for this embodiment is presented in TABLE 16.

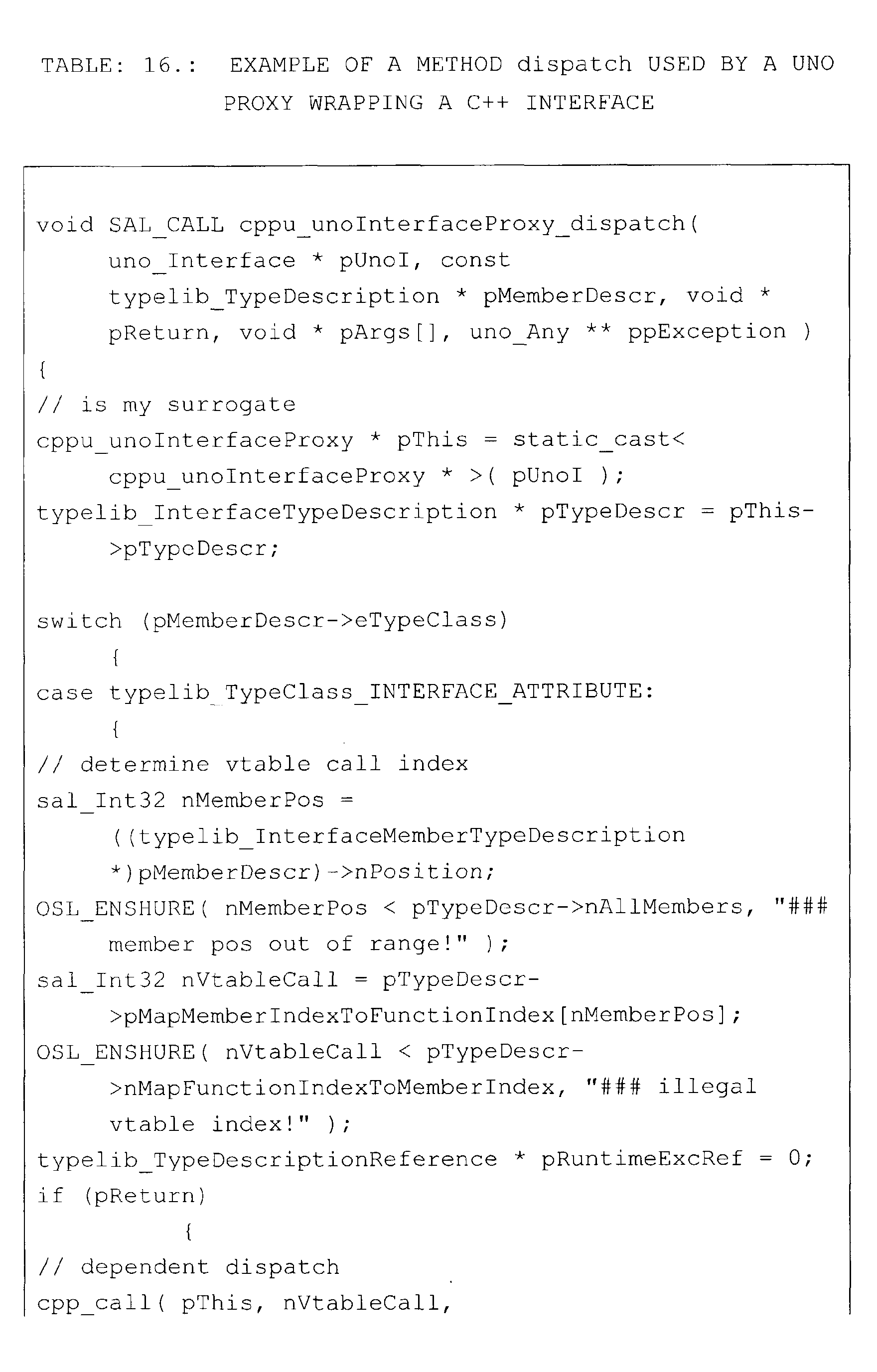

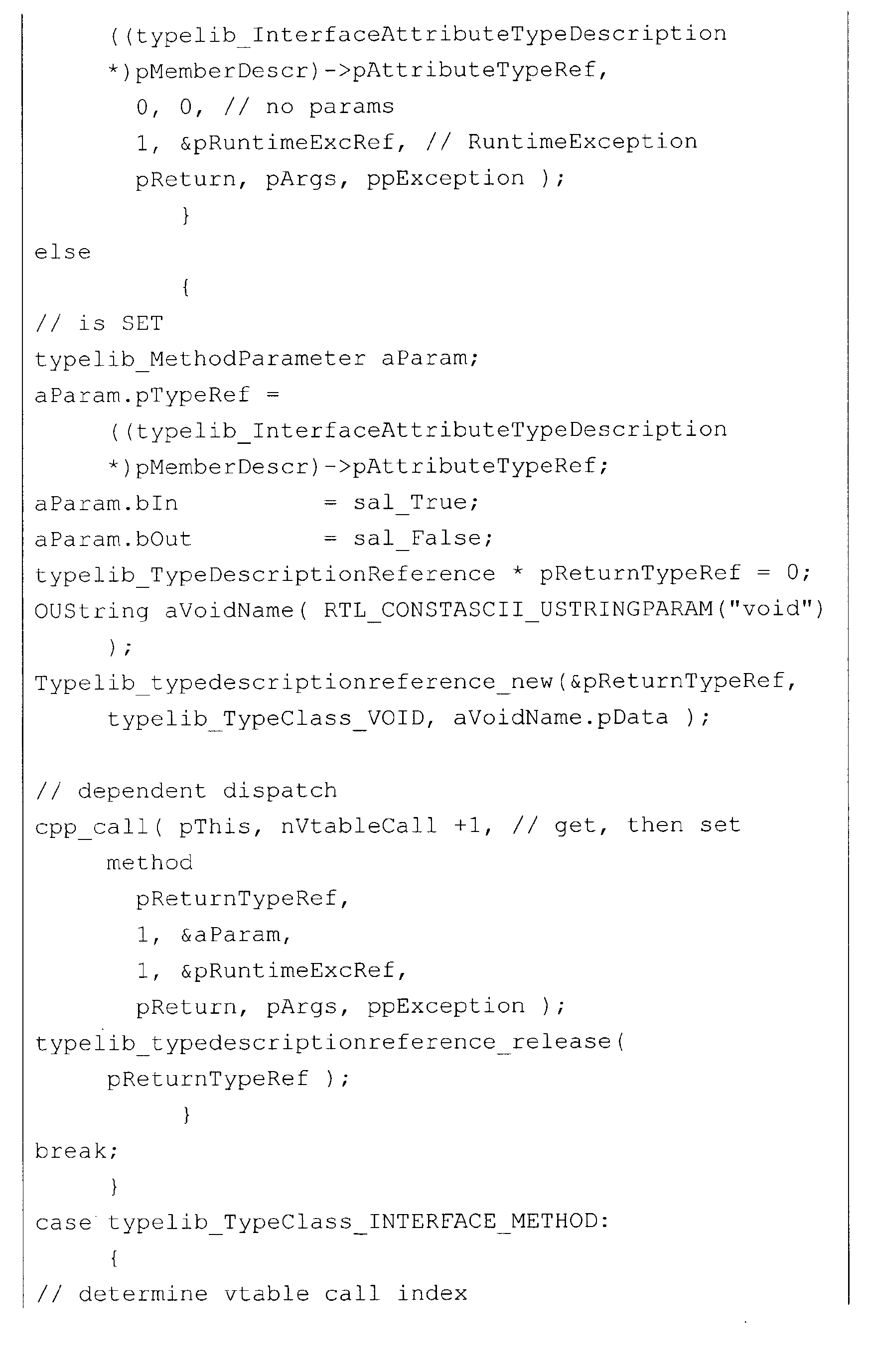

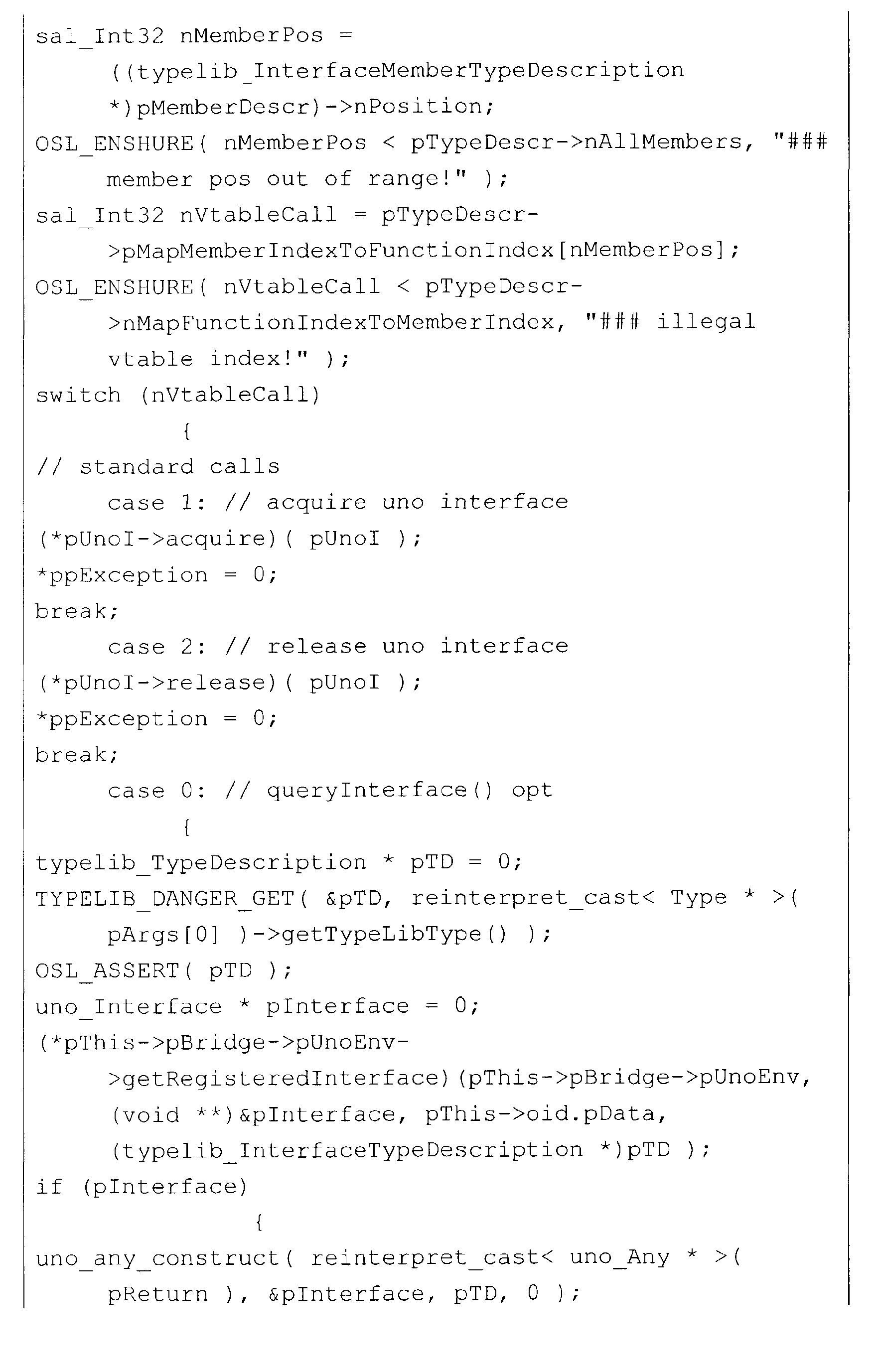

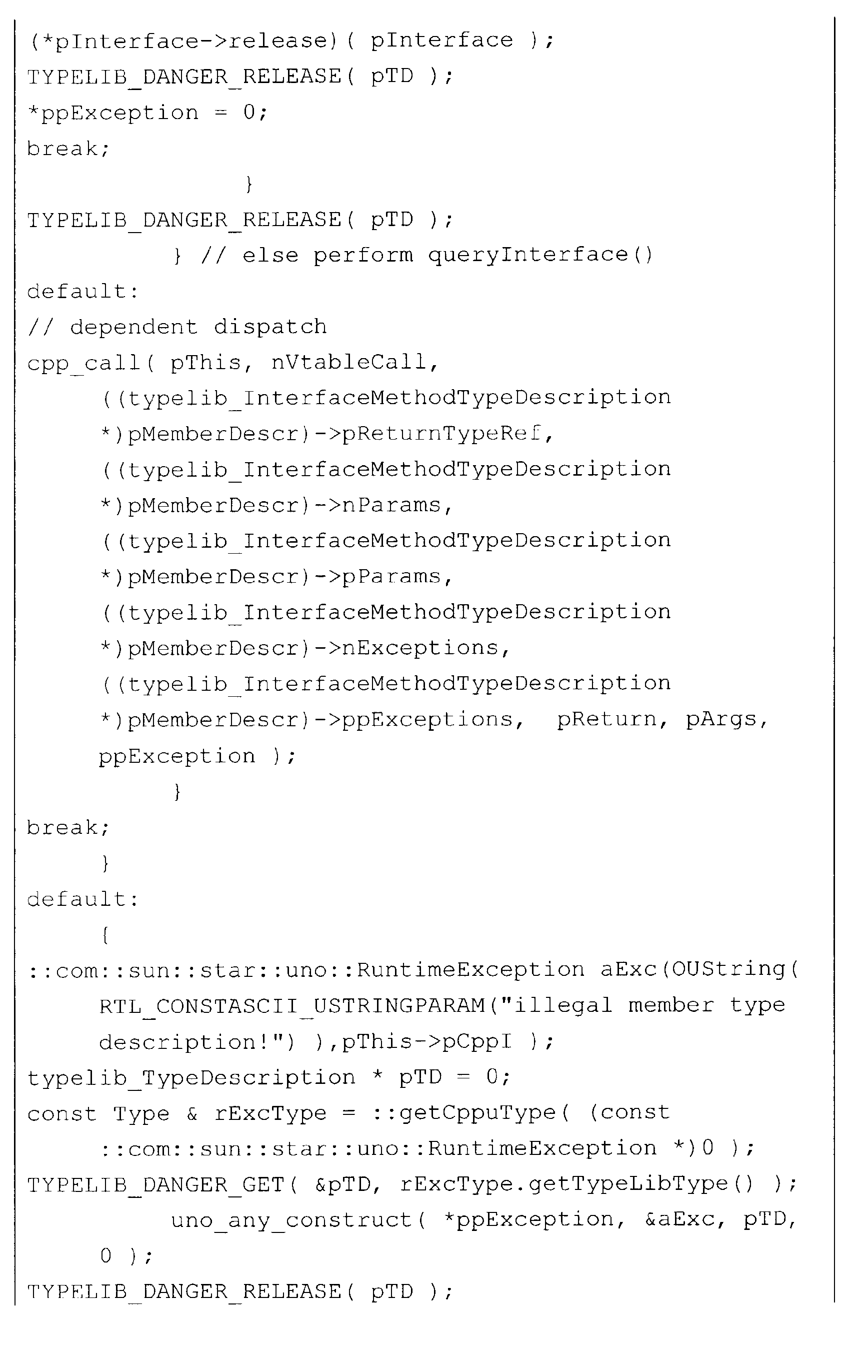

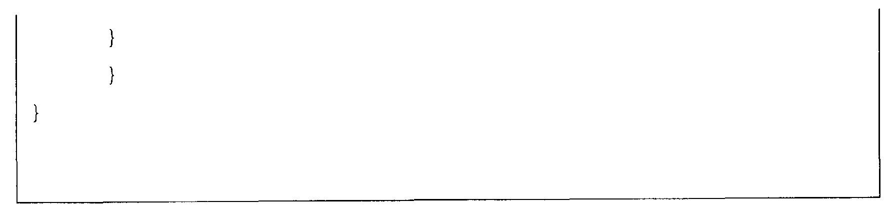

Method call check 1101 of method dispatch 1100 determines whether the call is a method call. If the call is a method call processing transfers to acquire/release check operation 1110, and otherwise to attribute get check operation 1120.

Acquire/release check operation 1110 branches to acquire/release call operation 1111 if the method call is a call to either method acquire or method release, because these calls can be executed without calling the interface in the second environment. If the method call is not a call to either method acquire or method release, processing transfers from check operation 1110 to query interface check operation 1112. Acquire/Release call operation 1111 performs the appropriate method, which is a non-virtual call, and returns.

Query interface check operation 1112 determines whether the method call is to method queryInterface. If the method call is not to method queryInterface, check operation 1112 transfers to call Env2_to_Env1 with Interface operation 1130 and otherwise transfers to registered interface available check operation 1113.

If there is a registered interface in the source environment for method queryInterface, check operation 1113 transfers to set return value operation 1114 and otherwise to call Env2_to_Env1 with Interface operation 1130. Set return value operation 1114 sets the registered interface as the return value and returns.

If the call to the C++ proxy was not a method call, check operation 1101 transfers to attribute get check operation 1120. In this embodiment, there is either an attribute get or an attribute set. If the call to the UNO proxy is an attribute get, check operation 1120 transfers to prepare attribute get call operation 1121 and otherwise transfers to prepare attribute set call operation 1122. Both operations 1121 and 1122 set up the parameters for the call and transfer to call Env2_to_Env1 with Interface operation 1130. The call is given the C++ interface pointer, a vtable index, and all parameters necessary to perform the C++ virtual function call.

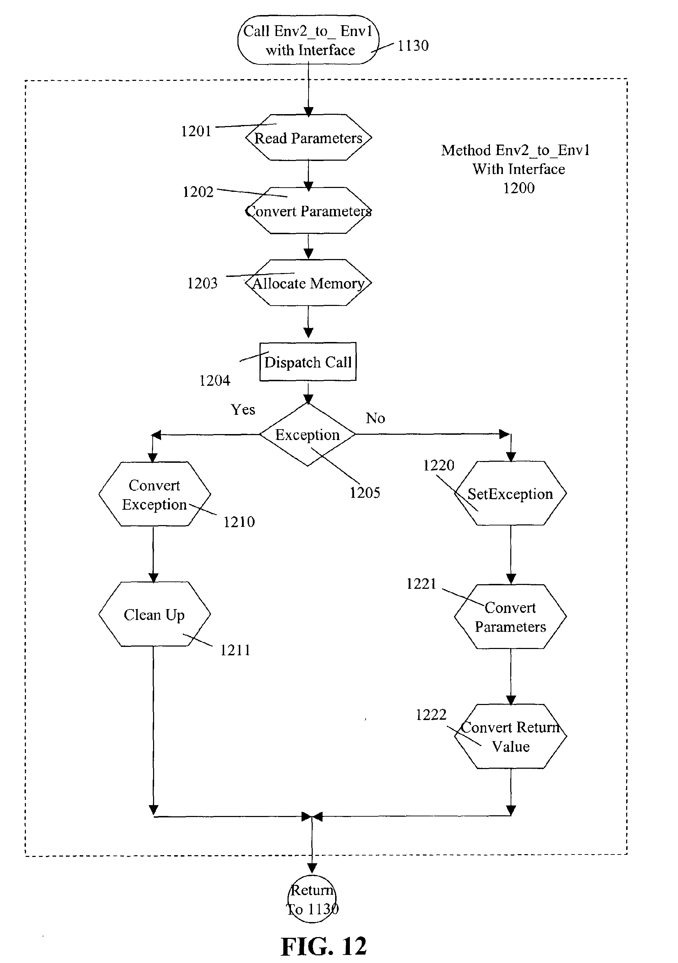

An embodiment of method Env2_to_Env1 with interface for the UNO proxy is presented in Table 17. Figure 12 is a process flow diagram for one embodiment of method Env2_to_Env1 with interface.

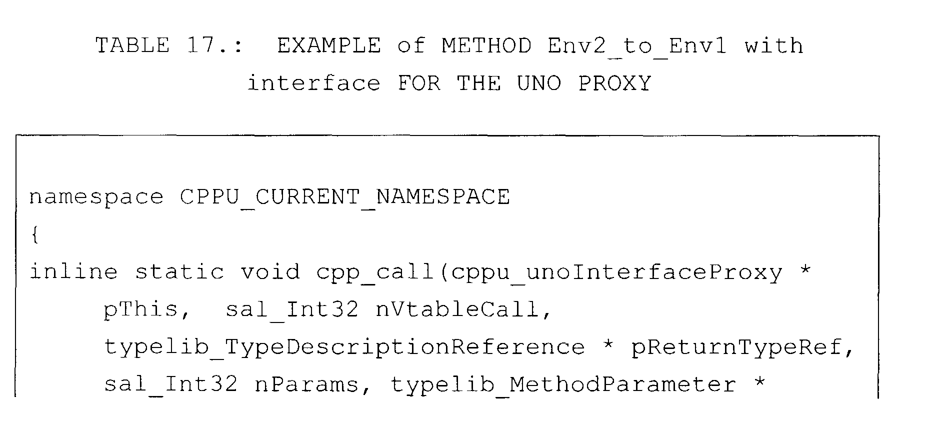

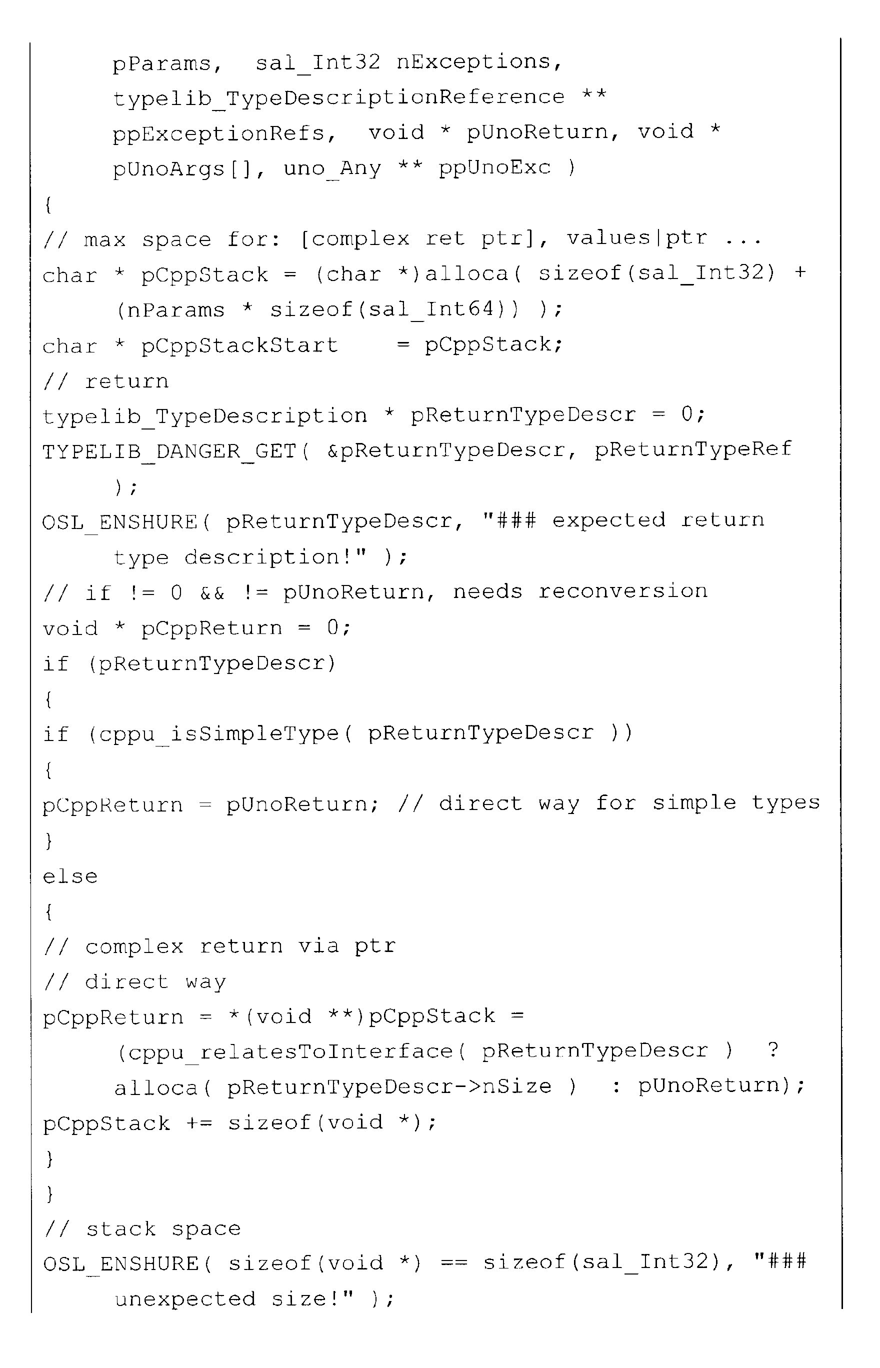

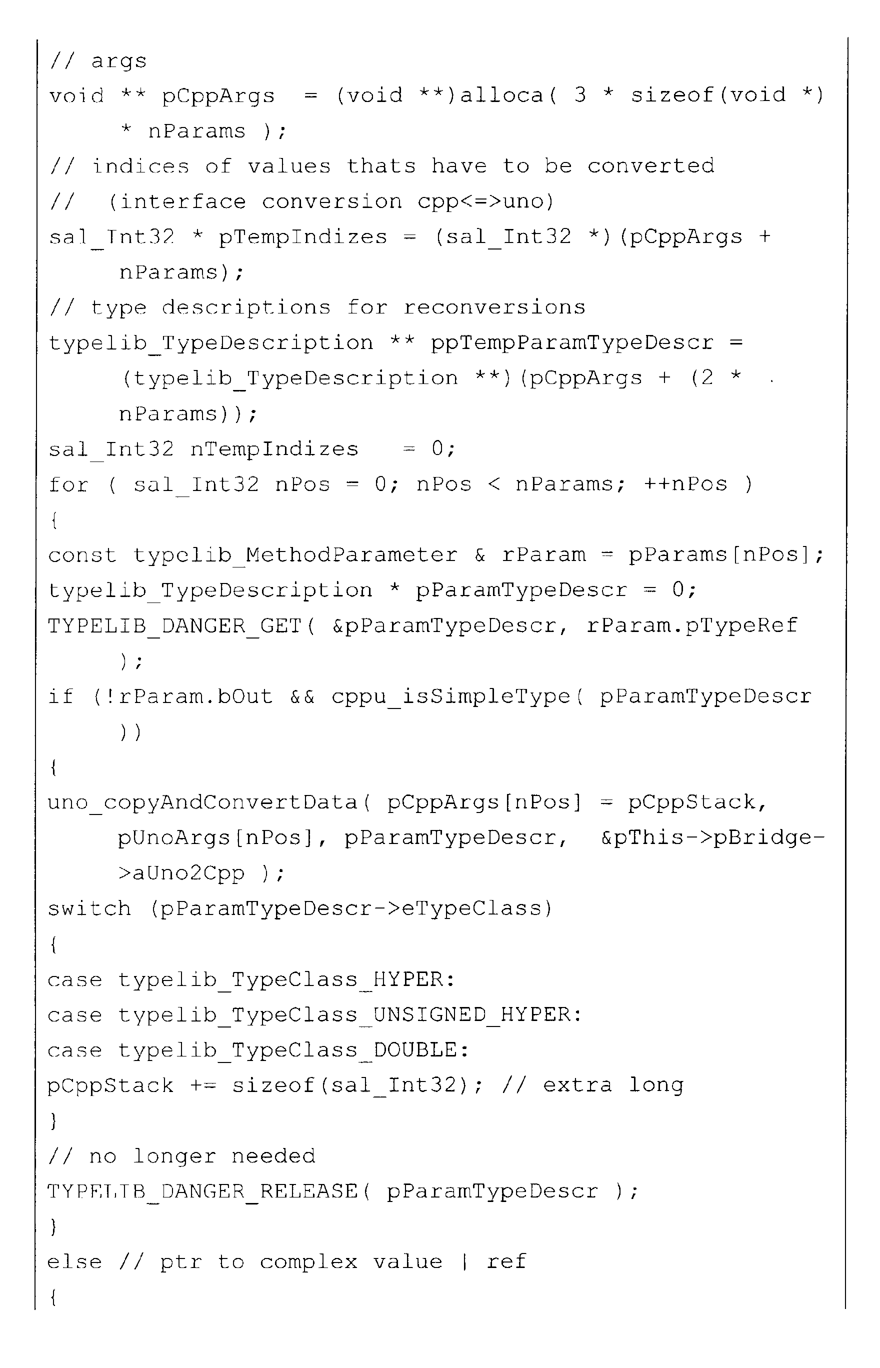

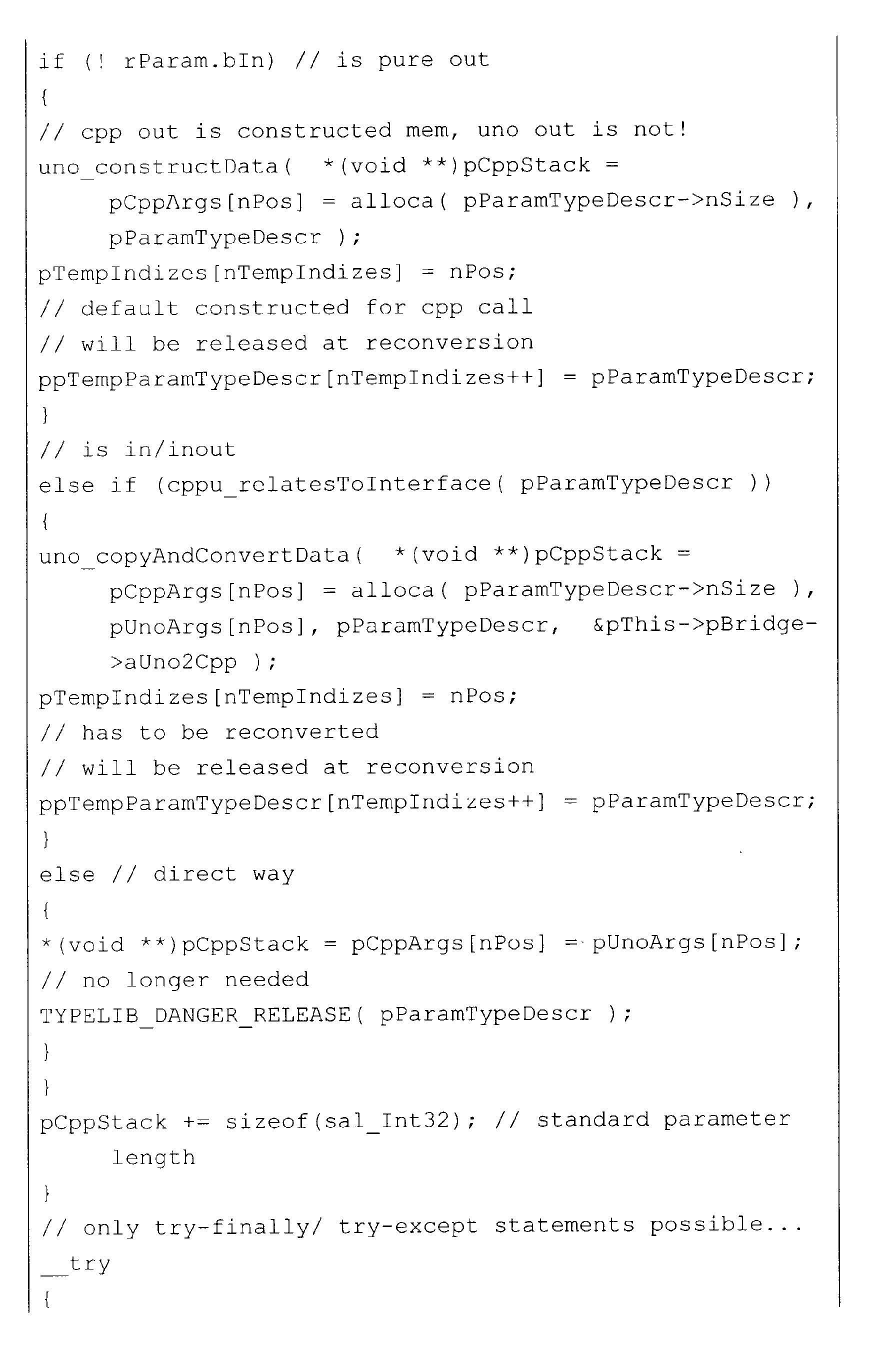

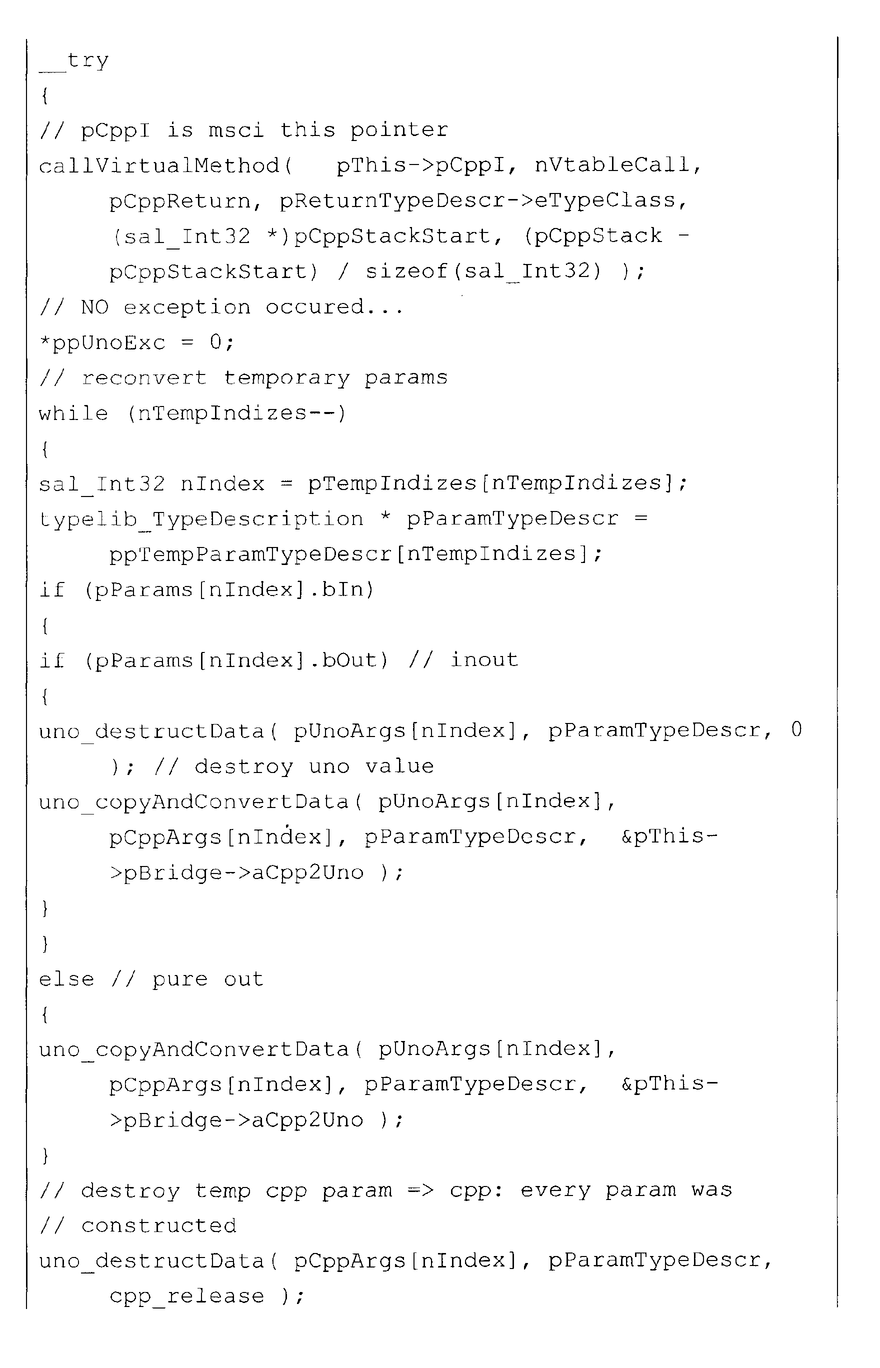

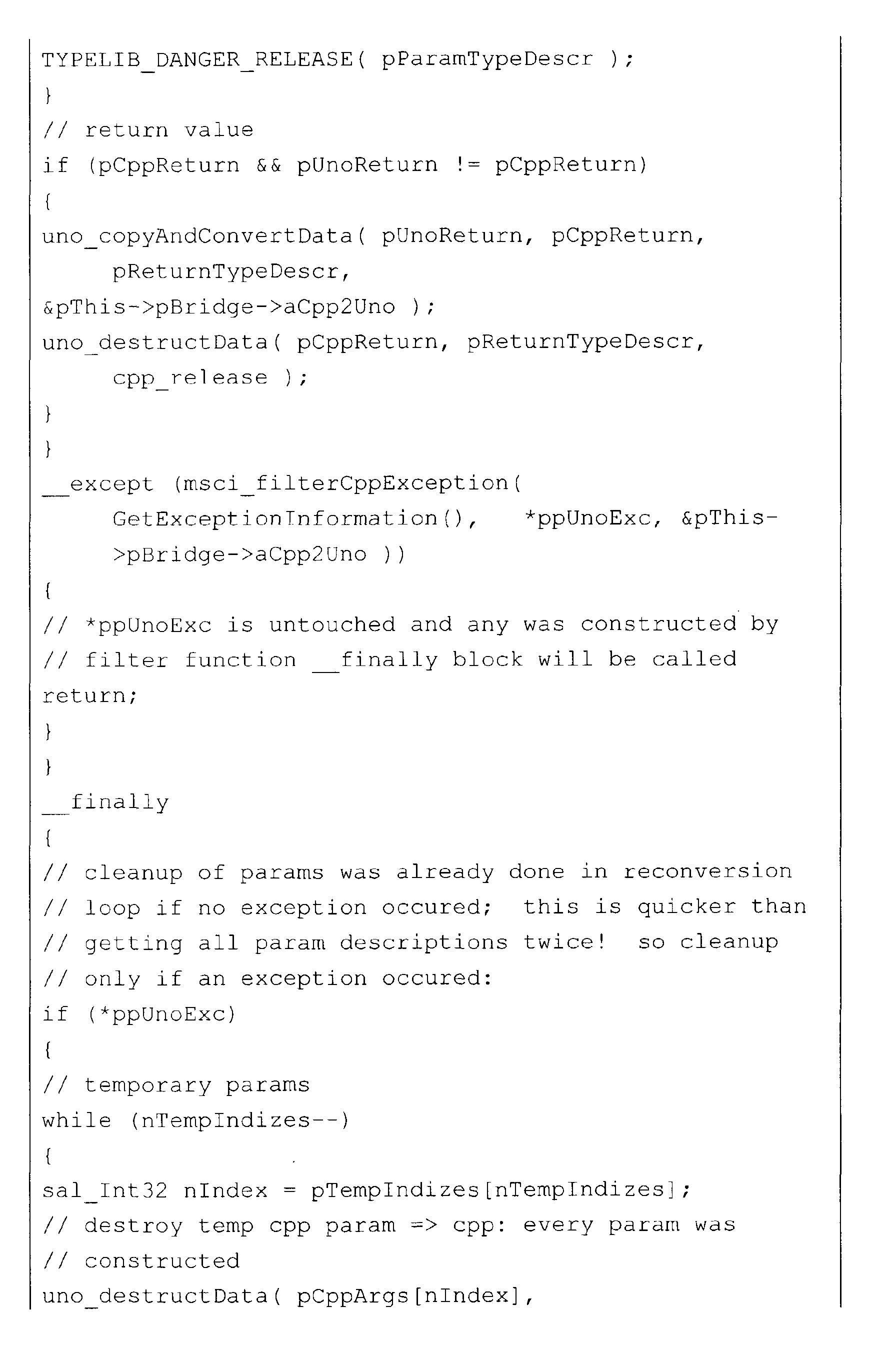

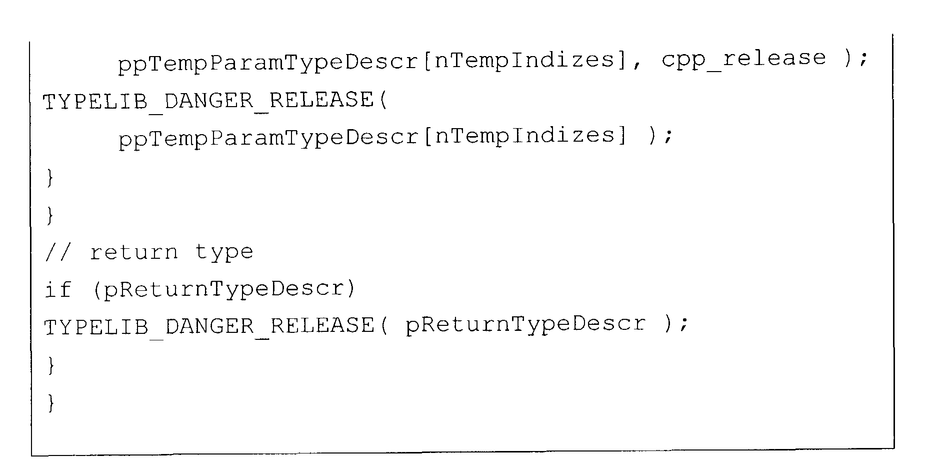

In Figure 12, read parameters operation 1201 reads the parameters from the call. Read parameters operation 1201 transfers to convert parameters operation 1202. Convert parameters operation 1202 converts the parameters read to the C++ environment. A C++ call stack is built in memory. All simple types, up to eight bytes are put directly on the stack, and all other types are referenced by a pointer. Operation 1202 transfers to allocate memory operation 1203. Allocate memory operation 1203 allocates memory for the out parameters returned by the call to the C++ interface, and for the return value. Allocate memory operation 1203 transfers processing to dispatch call operation 1204.

Dispatch call operation 1204 performs a C++ virtual call on the C++ interface. In one embodiment, method callVirtual, an assembly function performing the specific virtual call having the right registers set (See Table 18), is called and passed an array that is the call stack. The call is executed in the C++ environment and the results, if any, are returned to operation 1204 that in turn transfers to exception check operation 1205.

Exception check operation 1205 determines whether an exception was thrown in response to the call. If an exception was thrown, check operation 1205 transfers processing to convert exception operation 1210 and otherwise processing transfers to set exception operation 1220.

Convert exception operation 1210 converts the C++ exception to the UNO environment, and sets an exception out any with the converted exception. Operation 1210 transfers to clean up operation 1211 that in turn cleans up any temporary parameters that were created in the call in operation 1204 and transfers to return to operation 1130.

If an exception was not thrown in the source environment, set exception operation 1220 sets the exception out any to zero, and transfers to convert parameters operation 1221.

Convert parameters operation 1221 converts any parameters that were returned from operation 1204, e.g., out parameters and/or inout parameters, from the source environment, i.e., the C++ environment, to the destination environment, i.e., the UNO environment. Operation 1221 also cleans up any temporary parameters that were created in the call in operation 1204 and transfers to convert return value operation 1222. Operation 1222 converts any return value from the source environment to the destination environment so that both the return value and any returned parameters are written back, in this example to the UNO caller.

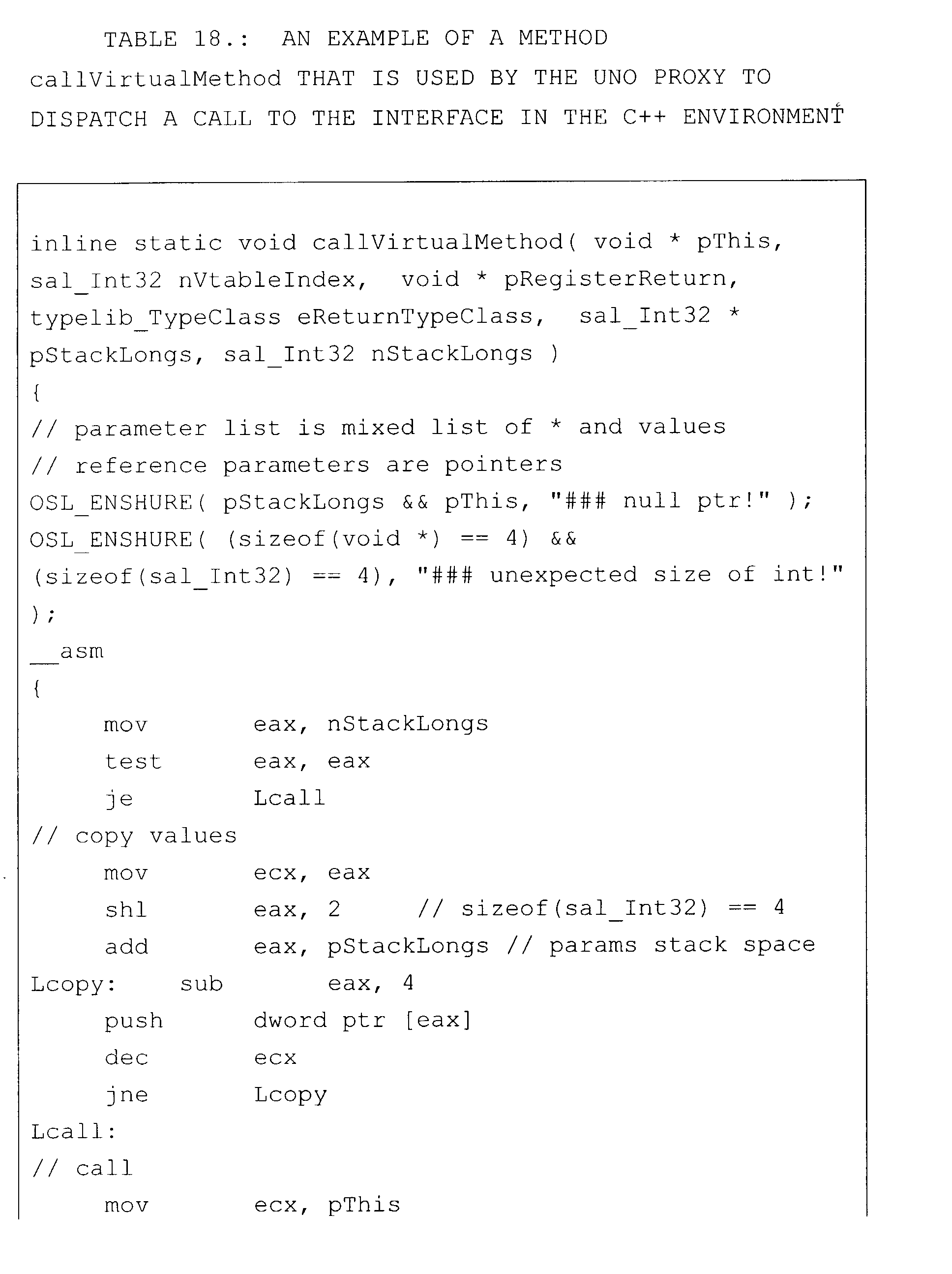

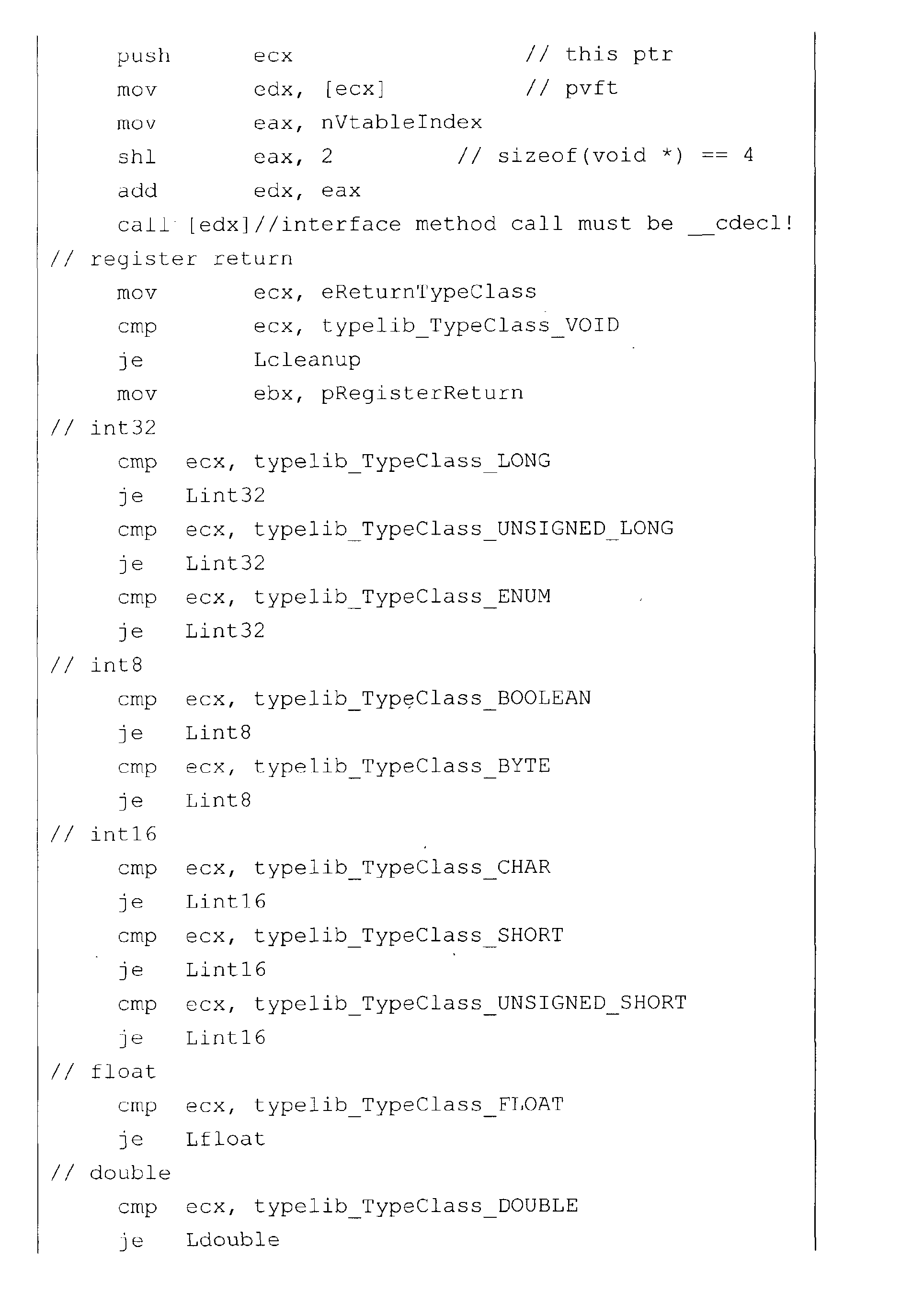

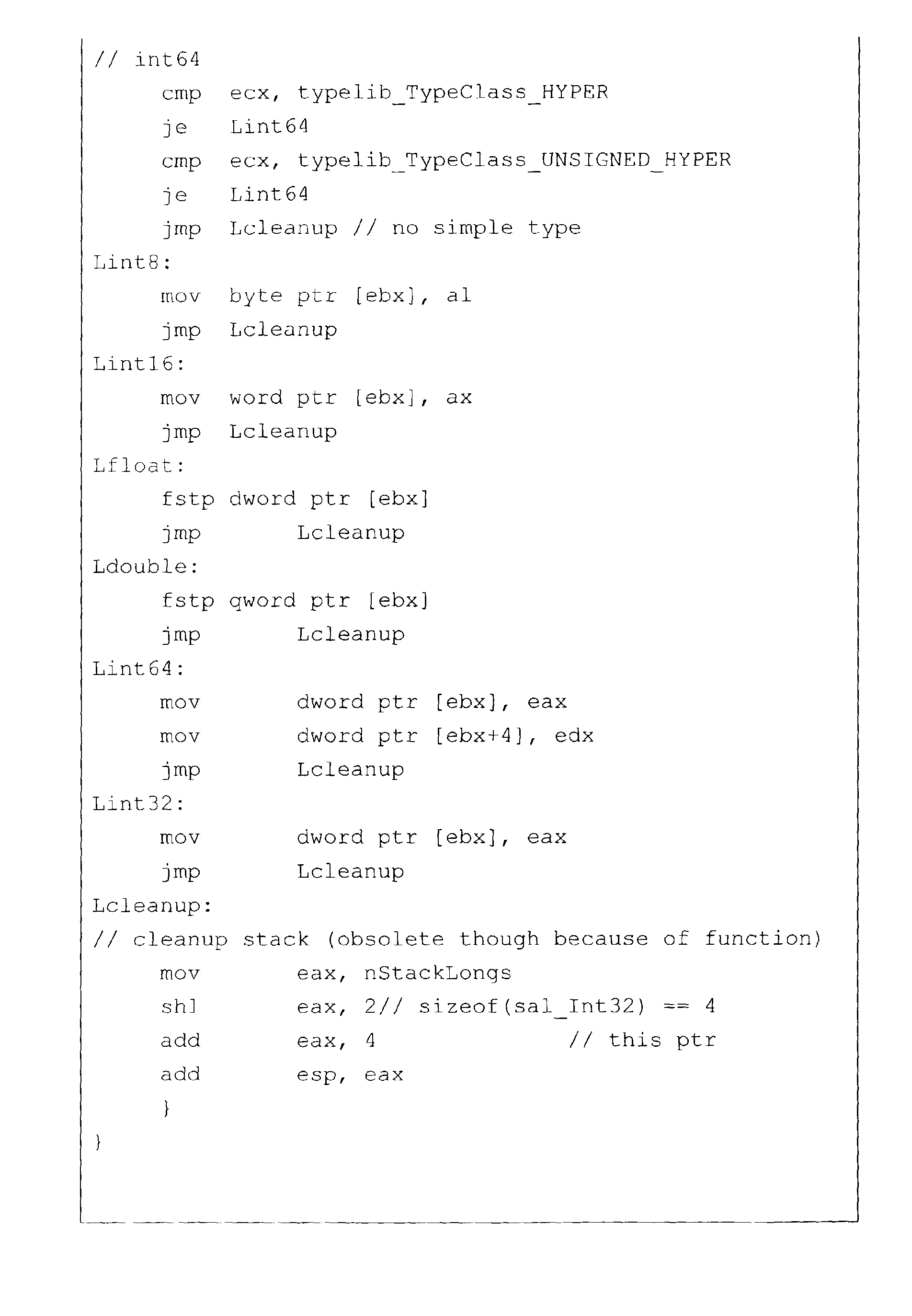

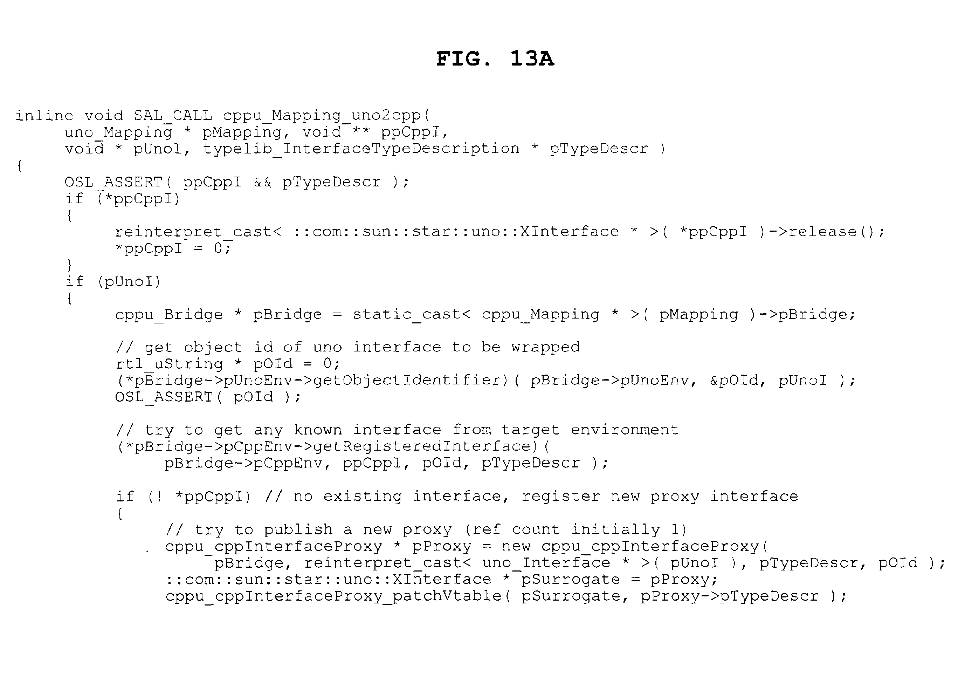

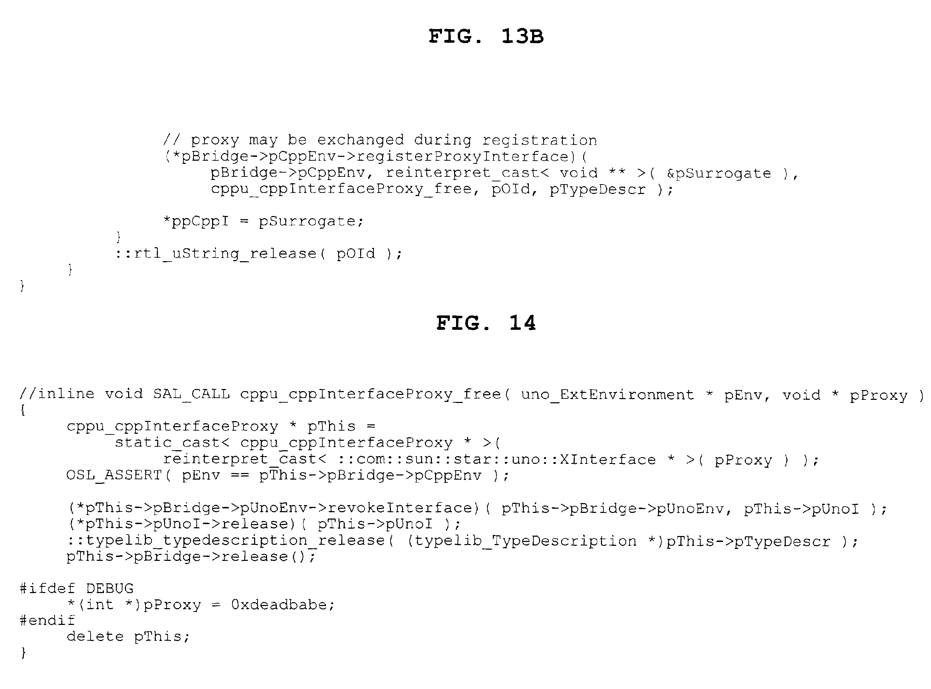

In the above description of the example, various methods were described and discussed. Figure 13A to 24 are specific examples of one embodiment of such methods. In particular, in Figs 13A and 13B, an embodiment of mapping an interface from the UNO environment to the C++ environment is presented. See Figure 4.

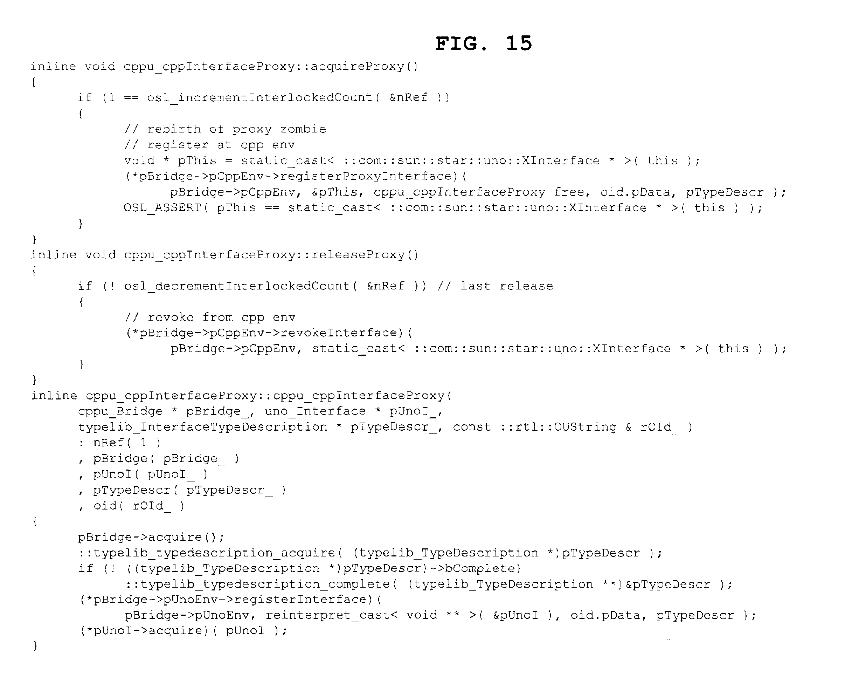

Fig. 14 is an example of a method free and a method for revoking the proxy. Method free is called indirectly by the C++ proxy described above when the reference count goes to zero and the C++ proxy should be deleted. Fig. 15 includes an example of a C++ proxy that includes a method acquireProxy; an example of a method releaseProxy that is used to revoke the C++ proxy from the C++ environment structure; and a method ccpu_cppInterfaceProxy to instantiate, acquire and register the C++ proxy.

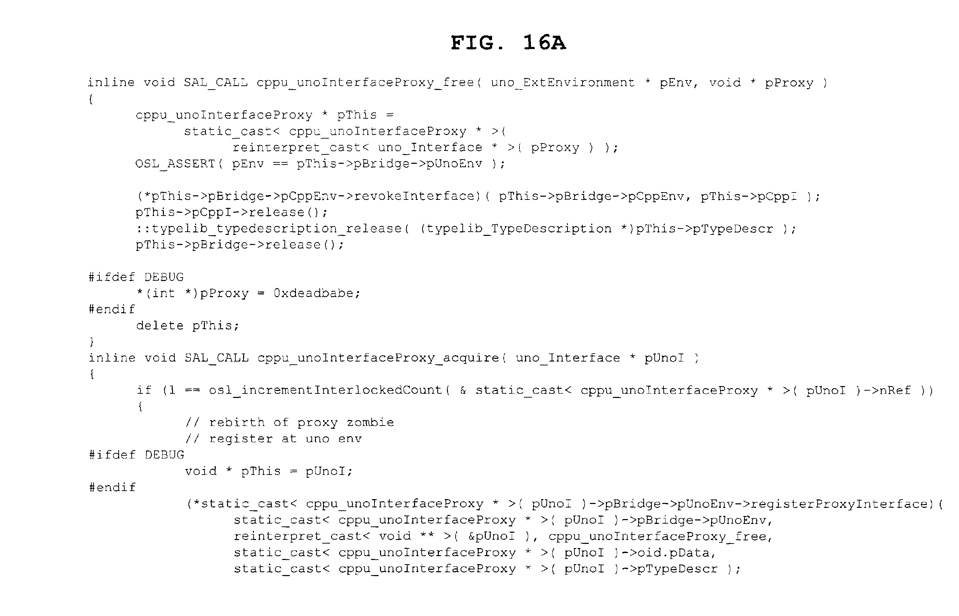

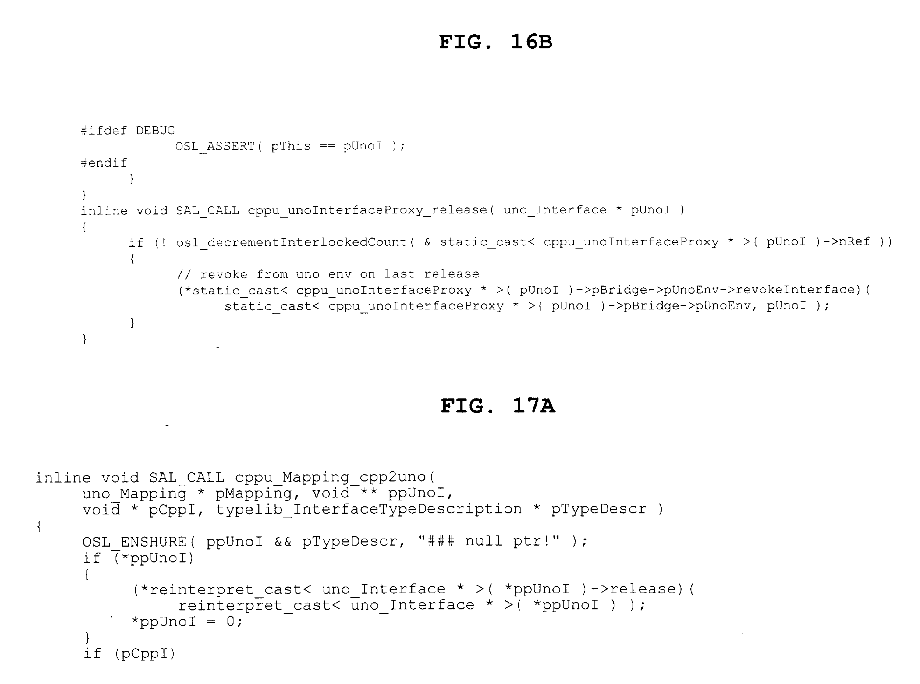

Figs. 16A and 16B include an example of a method free that is called indirectly by the UNO proxy described above when the reference count goes to zero and the UNO proxy should be deleted; an example of a method acquire that is used in acquiring the UNO proxy; and an example of a method release that is used to revoke the UNO proxy.

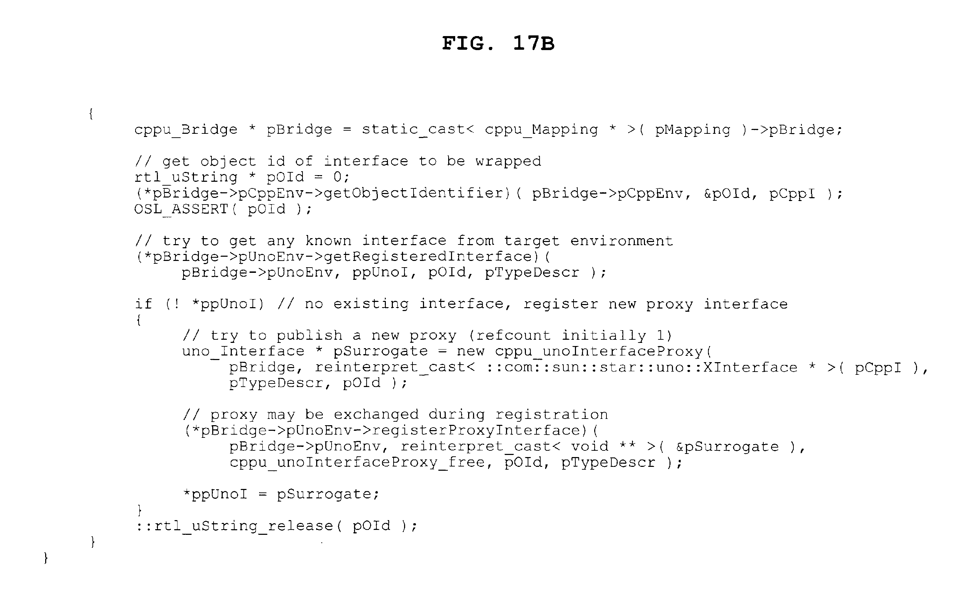

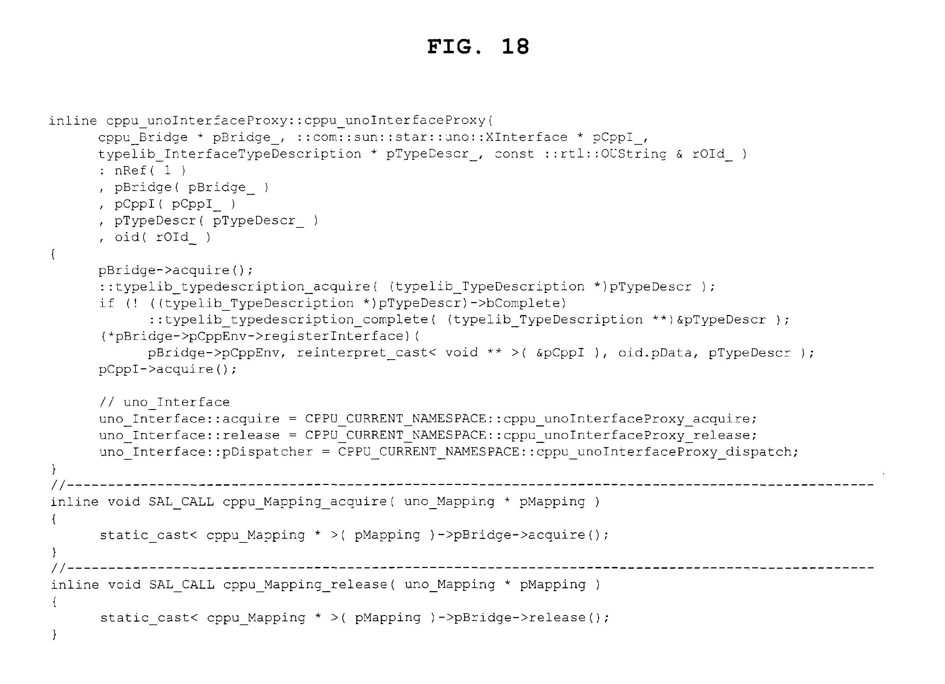

In Figs 17A and 17B, an embodiment of a method Mapping for mapping from the C++ environment to the UNO environment is presented. Figure 18 includes is a C++ implementation of the UNO proxy that includes a constructor cpu_unoInterfaceProxy to instantiate, acquire and register the UNO proxy; a method for acquiring a mapping and a method for releasing a mapping.

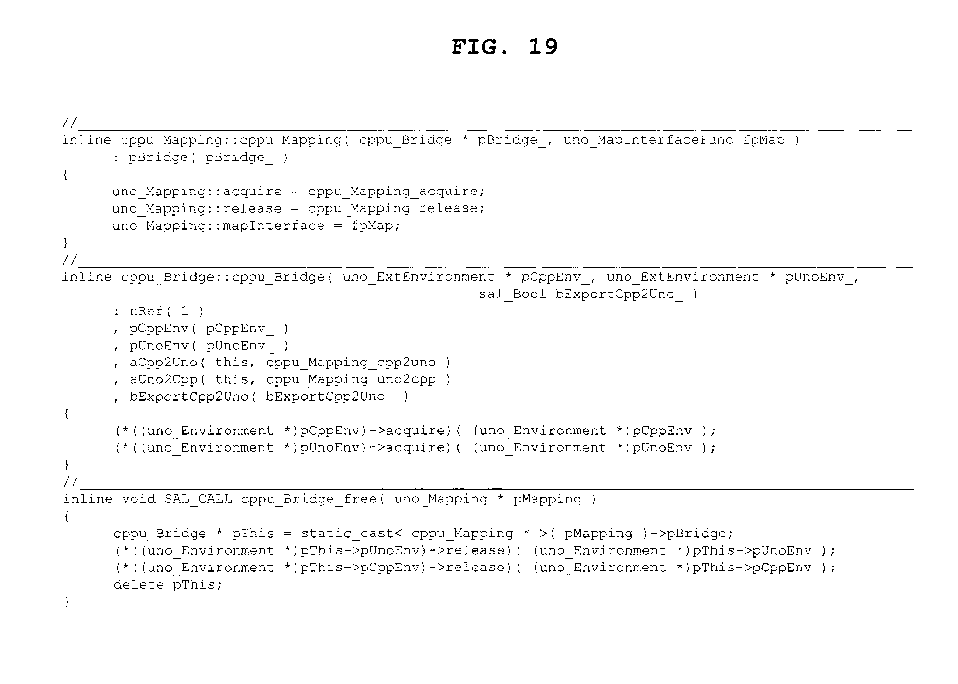

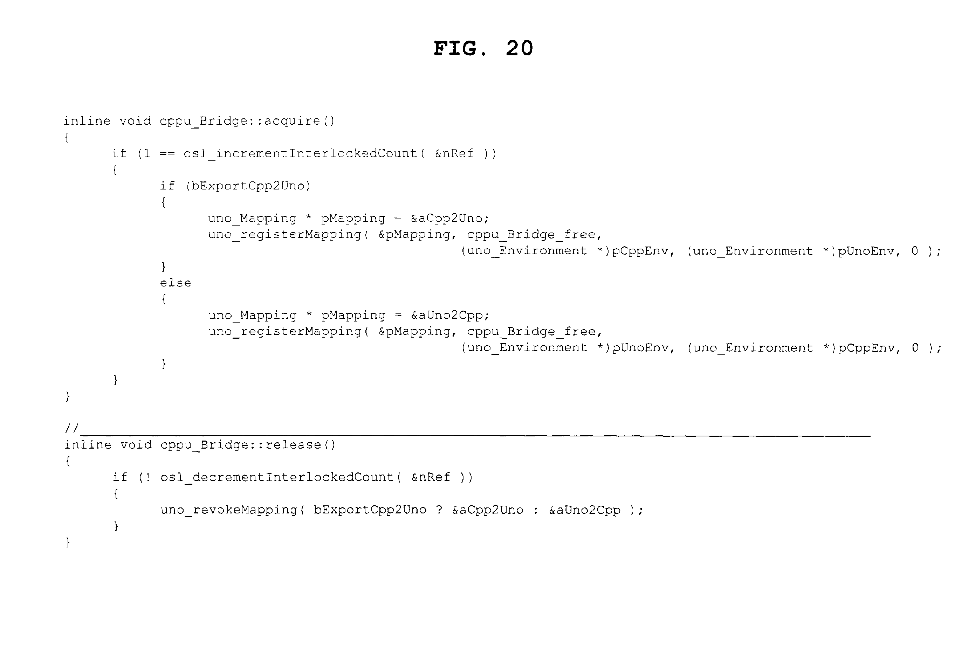

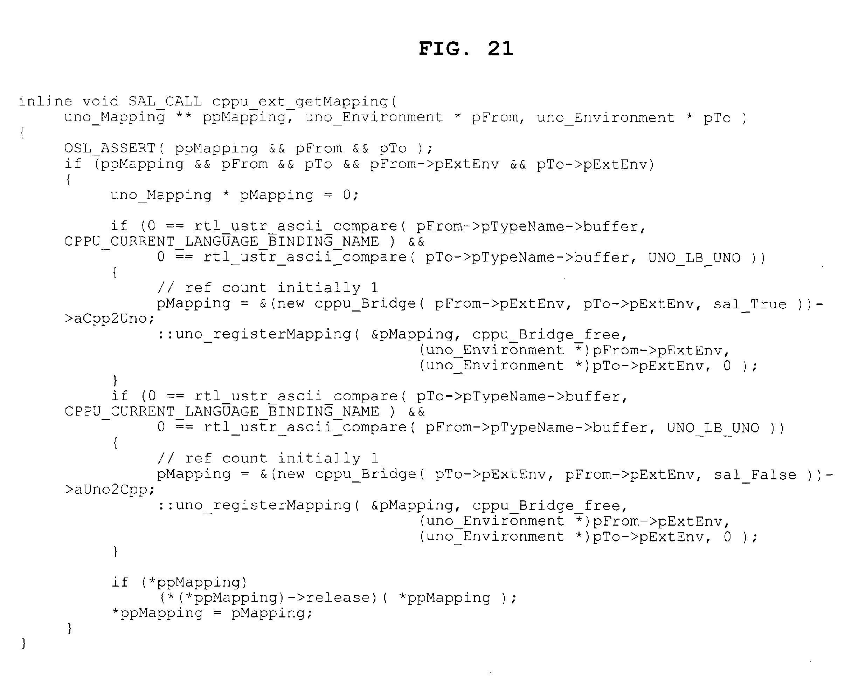

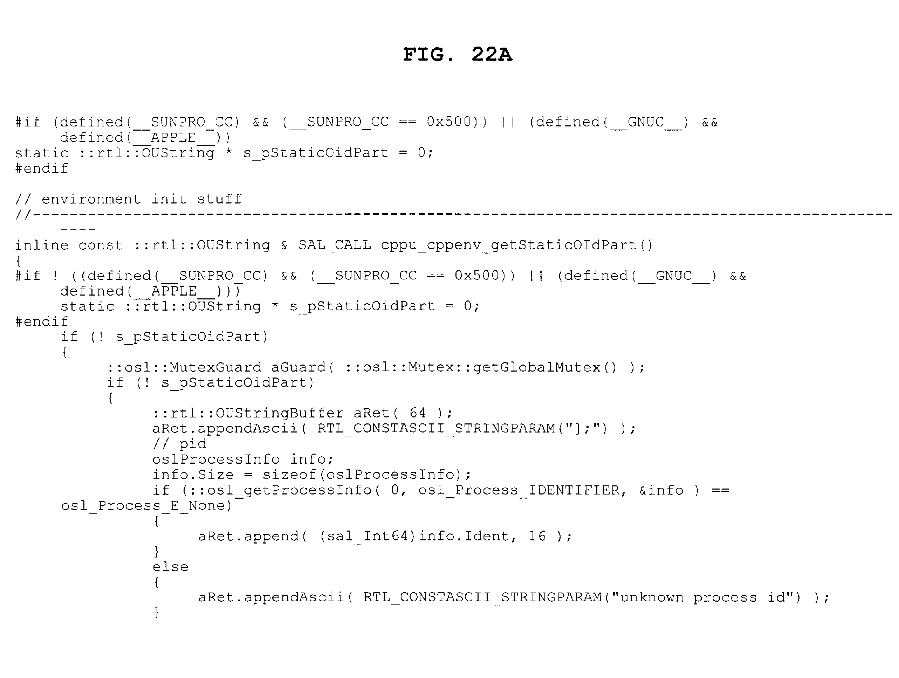

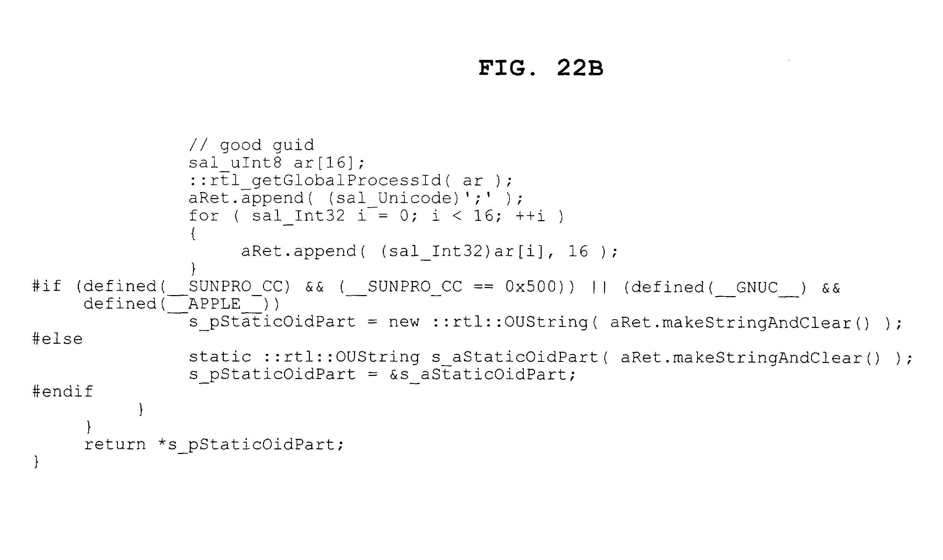

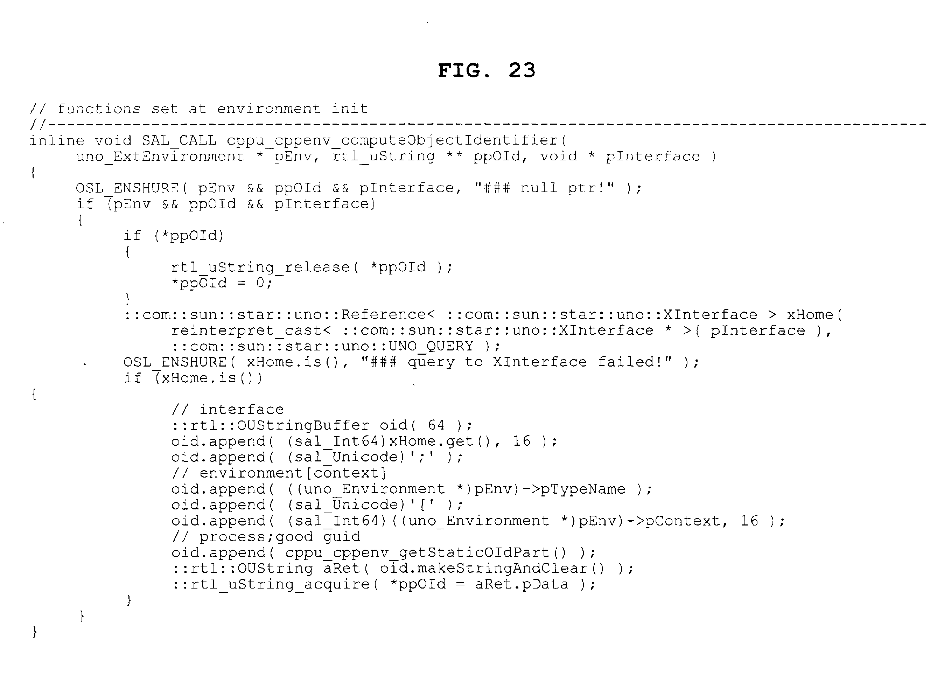

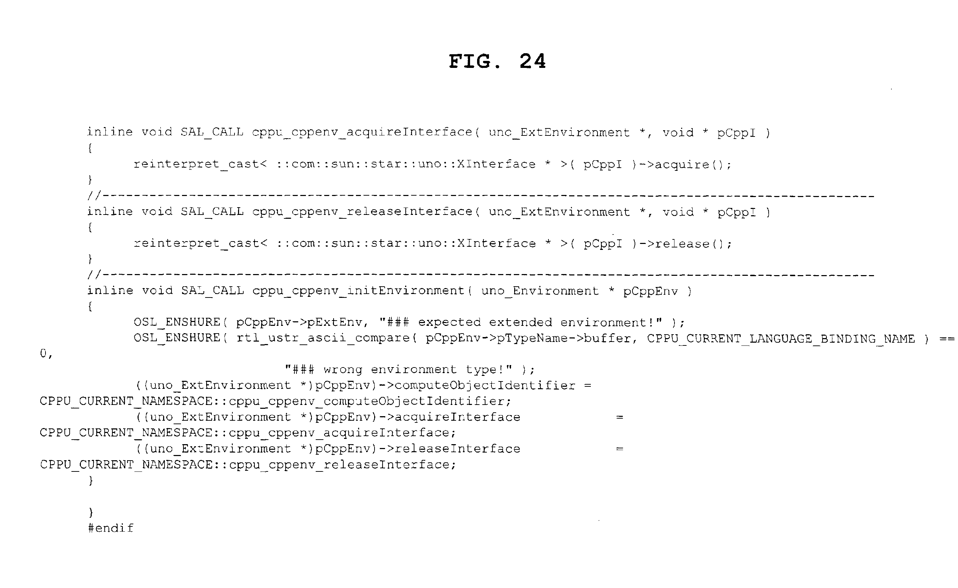

Figure 19 illustrates constructors for a mapping and a bridge; and a method for freeing a bridge. Figure 20 is an embodiment of methods for acquiring and releasing a bridge. Figure 21 includes a method cppu_ext_getMapping to create a mapping between two specified environments. Figure 22 is an embodiment of a method to create the static part of an object Id.
The object id contains two parts, an object specific part and a static part. Figure 23 is an embodiment of a method to create a complete object Id, containing both, the object specific and the static parts. Figure 24 includes a method for acquiring a C++-uno environment; a method for releasing a C++-uno environment; and a method to initialize a C++-uno environment.

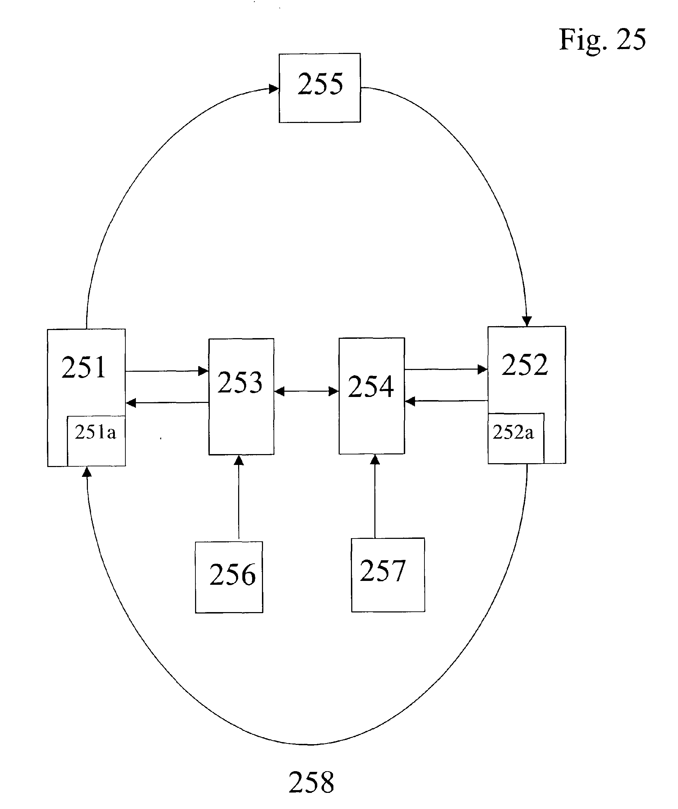

In the following, further embodiments of the invention will be described with respect to Figs. 25 - 38.

First, reference is made to Fig. 25. A first software program 251, created with any convenient programming language, for example C++, and compiled with a certain compiler for C++, uses a first binary specification. This first binary specification depends on both, the programming language and on the compiler. The first software program 251 may be, for example, able to present numbers in graphical form. In order to calculate the exact dimensions of the graphs the first software program 251 may want to employ a second software program 252, created with another programming language, for example Java, and compiled by using a certain compiler for Java. This second software program 252 uses the second binary specification for communication.

The use of the second software program 252 by the first software program 251 requires its initialization, for example, by calling a loader function 255. The second software program 252 may then initialize its sub-program 252a for creating the stub 254. The sub-program 252a must consider the limited functionality in order to arrive at the desired stub 254, namely a module for transforming commands and responses relating to the requested limited functionality. Based on this limited functionality, the sub-program 252a selects the relevant mappings of the bridge 257 between the second binary specification and the intermediate binary specification.

The first software program 251 may correspondingly initiate a sub-program 251a to create the proxy 253 in a similar way, by employing the bridge 256 between the first binary specification and the intermediate binary specification. This sub-program 251a may be informed about the limited functionality from the first software program 251. However, it may also know this limited functionality from the second software program 252 by communicating via the communication channel 258. This channel 258 may be any suitable real or virtual connection which allows the transfer of data.

After the stub 254 and proxy 253 have been created they are arranged so as to allow the communication between the first software program 251 and the second software program 252. Once this arrangement is effected the first software program 251 sends the command to be transformed to the proxy 253. The proxy 253 may transform this command from the first binary specification into the intermediate binary specification. This intermediate binary specification corresponds, for example, to the binary UNO specification. The proxy 253 may transmit this command in the intermediate binary specification to the stub 254. The stub 254 may transform the command from the intermediate binary specification into the second binary specification and may transmit the command then to the second software program 252.

The second software program 252 may execute the command, for example, the command to calculate the dimensions of a graph and may generate a response for the first software program 251. This response may be transformed and transmitted by the stub 254 and the proxy 253 from the second software program 252 to the first software program 251.

The arrows shown in Fig. 25 between the first software program 251, the proxy 253, the stub 254, the second software program 252 and the loader function 255 show the possible routes of communication. The arrows between the proxy 253 and the bridge 256 and between the stub 254 and the bridge 257 represent the contribution of the bridges 256 and 257 to the creation of the proxy 253 and the stub 254, respectively.

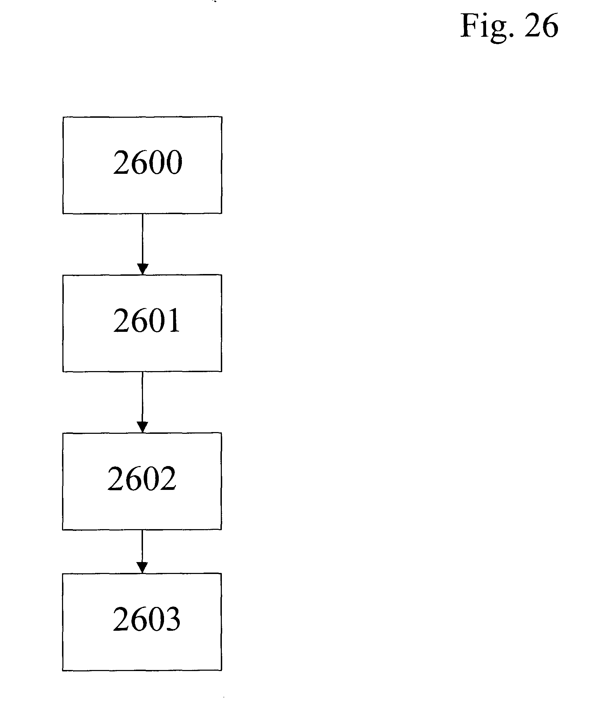

Fig. 26 represents an example for the initial communication of a first software program 251 and a second software program 252. The initial communication between the two software programs 251, 252 is carried out, before the creation of the stub 254 and of the proxy 253 is initiated. Due to the different binary specifications used by the two software programs 251, 252, namely the first and the second binary specification, this initial communication will regularly be extremely limited. It may be effected as explained exemplary in the following.

In a first step 2600 the first software program 251 may call a loader function 255 for the second software program 252. The loader function 255 may be any known loader function for this second software program 252. A loader function for a program is a software module which "wakes up" this program so that it carries out certain functions. Herein, the loader function may be addressed in one binary specification and may wake up a program using a different binary specification. However, the loader function is not suited to provide any detailed communication between programs using different binary specifications.

The loader function 255 may be used by the first software program 251 from the beginning. This is the case, if the first software program 251 knows or assumes that the second software program 252 does not use the same binary specification as itself, namely the first binary specification. If this knowledge is not present in the first software program 251, it may simply try to call the second software program assuming that it will understand the first binary specification. In this case, the first software program 251 may only employ the loader function 255 if the direct communication with the second software program 252 fails and a corresponding message is returned to the first software program 251.

In the calling step 2600 the first software program 251 informs the loader function 255 about the limited functionality requested from the second software program 252. Therefore, the loader function 255 must be suited to receive and carry this information. In order to provide this information to the loader function 255 the first software program 251 may hand over to the loader function 255 the command to be carried out by the second software program 252, so that the second software program 252 may, on receipt of the call of the loader function 255 decide itself which functionality is needed, or the first software program 251 may provide the loader function 255 directly with the description of a limited functionality of the second software program 252 which will be required by the first software program 251.

In step 2601 the loader function 255 contacts and initializes a reception function of the second software program 252 to be able to transmit in the next step 2602 its information about the limited functionality required from the second software program 252. In the next step 2603 the second software program 252 analyses the information received from the loader function 255 regarding the required limited functionality. After the analysis of the limited functionality required the second software program 252 initializes the creation of a stub 254.

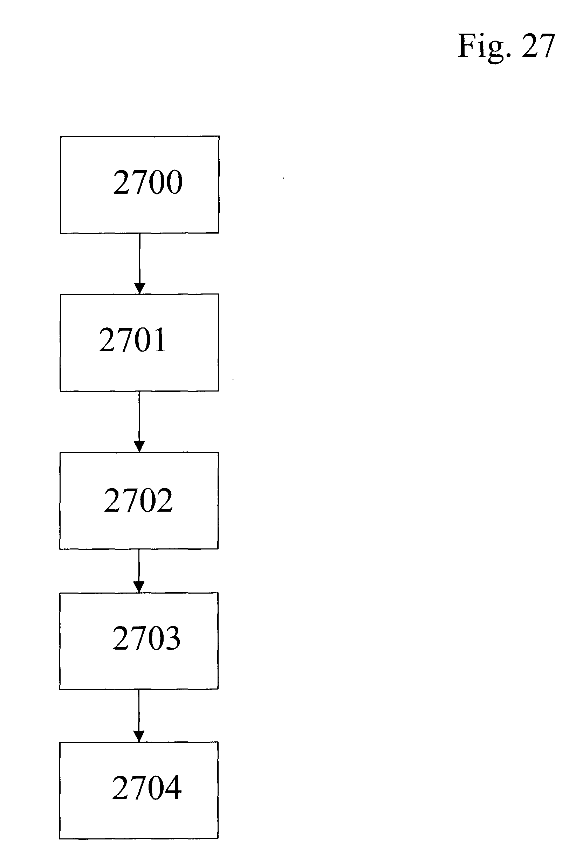

Fig. 27 shows the creation of a stub 254. The stub 254 has the task to transform commands sent by first software program 251 to the second software program 252 from the intermediate binary specification into the second binary specification used by the second software program 252 and to transform responses sent by the second software program 252 back to the first software program 251 from the second binary specification into the intermediate binary specification. Furthermore, the stub 254 may be assigned the task to transmit the transformed commands or responses to the recipients, the second software program 252 or the proxy 253, respectively.

In step 2700 the second software program 252 may initialize a sub-program 252a for creating the stub 254. This sub-program 252a may be an integral part of the second software program 252 or it may be as well a separate independent software module which can be used by this and potentially any other second software program 252. Accordingly, the sub-program 252a may be stored on the computer system or storage device on which the second software program 252 is stored. However, the sub-program 252a may also be stored on another computer system or storage device to which the second software program 252 has access.

In step 2701 the sub-program 252a receives from the second software program 252 a description of the limited functionality required from the second software program 252. Then, in step 2702 the bridge 257 between the second binary specification used by the second software program 252 and the intermediate binary specification is contacted. This bridge 257 provides a mapping of at least all basic commands between the mentioned two binary specifications. It may be stored at any place accessible for the sub-program 252a. In many cases there may exist a library with bridges for a number of second binary specifications, assuming that the intermediate binary specification used would be the same for all intended operations.

From the selected bridge 257 the sub-program 252a chooses in step 2703 the mappings necessary to use the required limited functionality of the second software program 252. This means all transformations, but not more than these, must be selected which are required to transform commands and responses which could arise when using the relevant functionality. Finally, in step 2704 the sub-program 252a creates the stub 254 based on the chosen mappings.

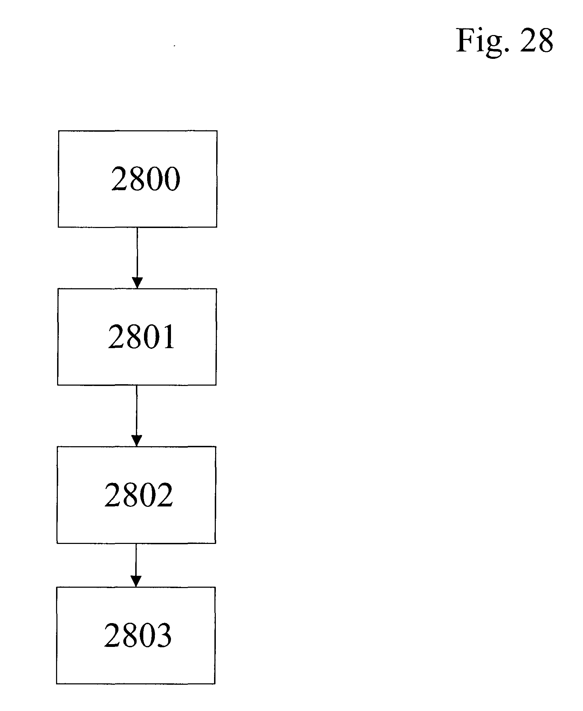

Fig. 28 represents in the form of a flow chart the creation of the proxy 253. The proxy 253 has the task to transform commands and responses between the first binary specification and the intermediate binary specification. It is insofar similar to the stub 254 which has, as it was described above, the task to render these transformations between the second binary specification and the intermediate binary specification.

In step 2800 the first software program 251 may initialize a sub-program 251a for creating the proxy 253. This sub-program may be an integral part of the first software program 251, but may as well be separate and independent from it. The sub-program 251a may be accessible for a larger number of first software programs 251. In step 2801 the sub-program 251a receives from the first software program 251 information regarding the limited functionality required from the second software program 252. This information may be provided by passing on the actual command the first software program 251 plans to send to the second software program 252, so that the sub-program 251a may derive from this command the information about the limited functionality, or the first software program 251 may provide the sub-program 251a with a description of the limited functionality.

In an alternative embodiment the description of the limited functionality may be received from the sub-program 252a for creating the stub 254. The sub-program 252a has the required description, because it has to create the stub 254 according to the same description. The description may be exchanged between the sub-program 252a and the sub-program 251a by any suitable means of communication.

In yet an alternative embodiment the description of the limited functionality of the second software program 252 may be derived directly by mapping the stub 254 into the first binary specification, in order to create a proxy. This is possible, because the stub 254 reflects the required limited functionality in listings between the second binary specification and the intermediate binary specification which are necessary for the transformation of commands and responses. Therefore, the intermediate binary specification side of the listings of the stub 254 may be taken as the starting point for the creation of the proxy 253, which is completed by adding the corresponding parts of the listing in the first binary specification, as will be explained below.

In step 2802 the sub-program 251a contacts the bridge 256, which provides a mapping of basic commands of the first binary specification and the intermediate binary specification, and builds, in step 2803, the desired proxy 253.

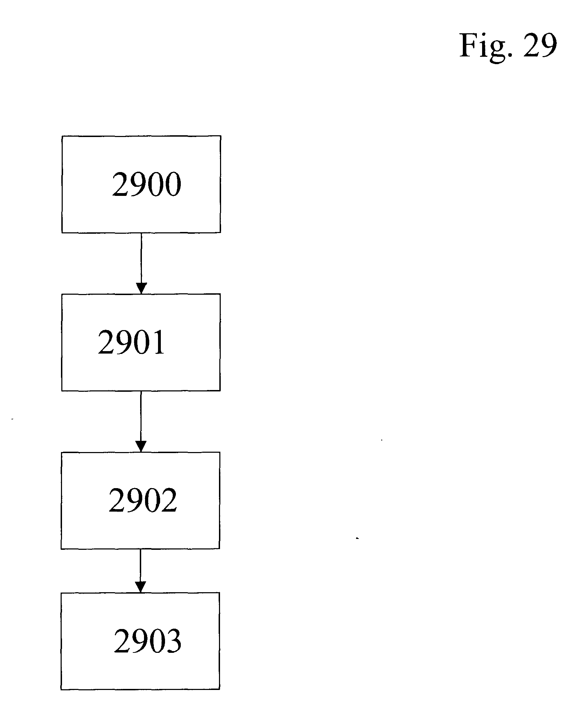

The proxy 253 and stub 254 are then arranged to allow the desired communication between the first software program 251 and the second software program 252, as it will be described in the following along the flow chart of Fig. 29. The arrangement of proxy 253 and stub 254 requires that the path of exchanging transformed commands and responses between the proxy 253 and the stub 254 is defined.

Therefore, in step 2900 the second software program 252 informs the first software program 251 about the address information necessary to contact the stub 254 via the communication line 258. The communication line 258 may consist of a simple data line for transmitting binary address information which can be understood from the first software program 251 without being able to use the second binary specification in which the second software program 252 communicates.

The first software program 251 provides, in step 2901, the sub-program 251a with this received address information, which, in step 2902, is passed on to the proxy 253. The proxy 253 then contacts, for the first time in step 2903, the stub 254, the address of which is now known. In step 2903 the proxy 253 will also transmit its own address information to the stub 254, thereby allowing the stub 254 to contact the proxy 253.

Herewith, the proxy 253 and the stub 254 are arranged for communication, that means they can send and receive commands and responses to commands. This arranging step is also referred to as binding.

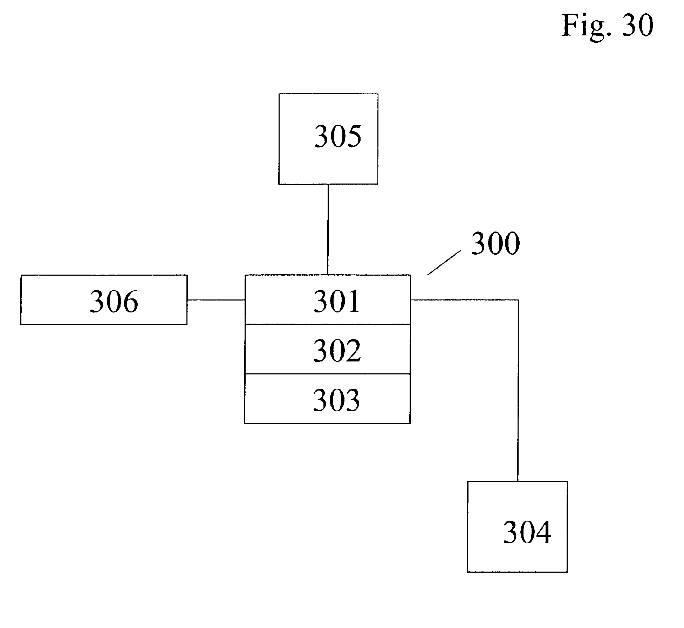

Fig. 30 shows a computer system 300 which may be used in the scope of the present invention. The computer system 300 comprises an i-/o-interface 301, a central processing unit (CPU) 302 and memory 303. It is connected to an external memory 304 on which mass data may be stored as well as software programs. Furthermore, the computer system 300 is connected via the i-/o-interface 301 to an output device 305, for example, a screen, and to an input device 306, for example, a keyboard.

The inventive method may be applied in the shown standard computer system. The first software program 251 and the second software program 252 may be stored in the internal memory 303 of the computer system 300, as well as on its external memory 304. It is also possible that one of the programs is stored on the internal memory 303 and the other is stored on the external memory 304. The proxy 253 and the stub 254 may be created by means of the CPU 302.

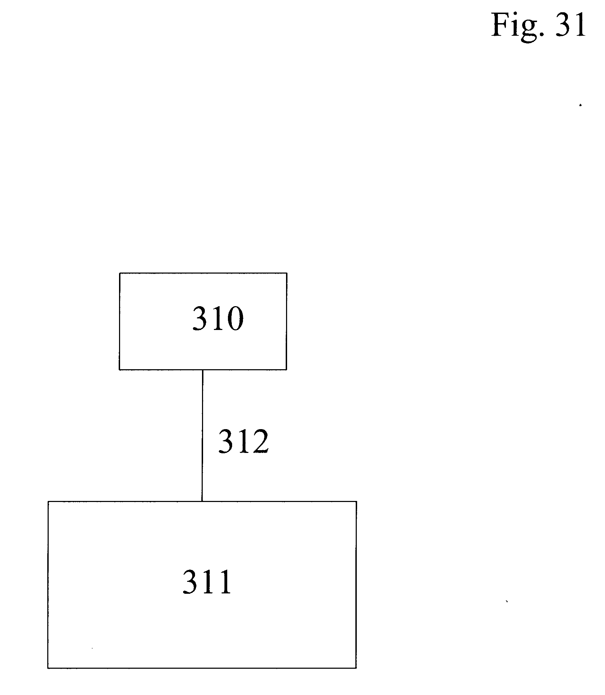

The method according to the present invention may also be implemented and used on more than one computer system, for example, in a network or in a client-server system, as it is shown exemplary in Fig. 31.

Fig. 31 shows a client 310 which is connected to a server 311. This connection may be a data line 312, including any kind of permanent or temporary network, like, for example, the internet. It is understood that, instead of only one client, there may be a large number of clients connected to the server. In the scope of the present invention the first software program 251 may, for example, be stored on client 310, while the second software program 252 may be stored on server 311. The exchange of commands and responses may be effected via data line 312. For example, the bridges 256 and 257, as well as any other potentially needed bridges may be stored in one or more libraries on the server 311. The sub-programs 251a and 252a may also be stored on the server 311. In case the sub-program 251a is needed the client 310 may request from the server 311 its transmission via data channel 312.

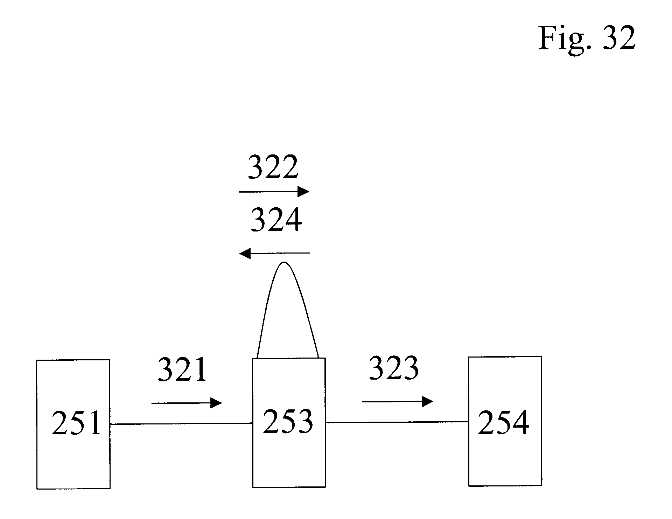

It is understood that the present invention may also be implemented in a variety of embodiments. In the following one embodiment of the present invention is described in more detail along Figures 32 to 35 and Tables 1 and 2.

### Creation of stub and proxy:

In response to a call of a first software program a proxy and a stub will be created in the so-called proxy factory and the stub factory, respectively. In order to create a proxy and a stub three tasks have to be carried out. First, the first software program using the first binary specification has to be enabled to communicate with to the second software program using the second binary specification. Second, the stub factory has to create a uno_interface implementation considering the second binary specification based on the limited functionality which delivers all calls directed to the second software program to this second software program. This uno_interface is program code which is defined for the limited functionality. For the generation of the uno_interface implementation the stub factory employs information in the form of a type description. This uno_interface implementation is also referred to as the stub. Third, the proxy factory has to create a uno interface implementation for the first binary specification. The proxy factory generates its uno interface implementation based on the information of the type description. This uno_interface implementation is referred to as the proxy.

The knowledge of the type description is necessary to create the stub and the proxy, as described. This type description is the full description of the limited functionality, also called interface. It contains the information about the required limited functionality of the second software program which shall be used by the first software program. The type description may refer to different types shown in Table 1.

**Table 1:**

| ***Type*** | ***UNO*** | ***C++*** | ***Java*** |
|---|---|---|---|
| Byte | Signed 8 Bit | Signed 8 Bit | Signed 8 Bit |
| Short | Signed 16 Bit | Signed 16 Bit | Signed 16 Bit |
| Ushort | Unsigned 16 Bit | Unsigned 16 Bit | Signed 16 Bit |
| Long | Signed 32 Bit | Signed 32 Bit | Signed 32 Bit |
| Ulong | Unsigned 32 Bit | Unsigned 32 Bit | Signed 32 Bit |
| Hyper | Signed 64 Bit | Signed 64 Bit | Signed 64 Bit |
| Uhyper | Unsigned 64 Bit | Unsigned 64 Bit | Signed 64 Bit |
| Float | Processor dependent: Intel, Sparc = IEEE float | Processor dependent: Intel, Sparc = IEEE float | IEEE float |
| Double | Processor dependent: Intel, Sparc = IEEE double | processor dependent. Intel, Sparc = IEEE double | IEEE double |
| Enum | The size of an machine word. Normally this is the size of an integer, | The size of an machine word Normally this is the size of an integer, | All enum values of one enum declaration are static object of a class. Each object contains a 32 bit value which represents the enumeration value. |
| Boolean | 1 Byte | 1 Byte. | Boolean |
| Char | 16 Bit on WNT, W95, W98, Os2. 32 Bit on Unix | 16 Bit on WNT, W95, W98, Os2. 32 Bit on Unix | Unsigned 16 bit (char) |
| String | A pointer to a structure which have the following members: long refCount; | A pointer to a structure which have the following members: long refCount; | "java.lang.String" |

| *Type* | *UNO* | *C++* | *Java* |
|---|---|---|---|
| | long length, wchar_t buffer[ .]; The string in buffer is 0 terminated. This is the rtl_wString structure in the rtl-library | long length; wchar_t buffer[...]; The string in buffer is 0 terminated. This is the rtl_wString structure in the rtl-library | |
| Structure | The structure contains the members in the order of the declaration. The Structure memory layout is described at the beginning of this chapter. | The structure contains the members in the order of the declaration. The memory layout is described at the beginning of this chapter. | A class which is derived from java.lang.Object" and contains the java.lang.Object and contains members in the specified order. |
| Union | The size is 4 + size of the largest type In front of the union members are a long value (nSelect) which describes the position of the valid member (0 is of the first). | The size is 4 + size of the largest type. In front of the union members are a long value (nSelect) which describe the position the valid member (0 is the first). | Not specified yet |
| Sequence | A pointer to a structure which has the following members. void^{*} pElements; long nElements; long nRefCount; The pElements are a memory area that contains nElements elements. | A pointer to a structure which has the following members: void ^{*} pElements, long nElements; long nRefCount; The pElements are a memory area that contains nElements elements. | It is a normal Java array. |
| Exception | Looks like a structure | Looks like a structure | A class which is derived from java lang.Exception" and contains the members in the specified order. |
| interface | The interface is a pointer to a function table, which contains 3 functions. | It is a pointer to a C++-Class which implements first the virtual methods queryInterface, acquire and release. | It is a normal Java interface. |
| Any | This is a structure that contains a pointer to a type description. The second member is a pointer to the value stored in the any. | This is a structure that contains a pointer to a type description The second member is a pointer to the value stored in the any. | A class which is derived from "java.lang.Object". The members are a class, which describe the type of the value. second member which is the value of the any. |
| Void | No memory representation | No memory representation | No memory representation |

Many of these types are self-explaining and known in the art. Nevertheless, the most relevant types of the type description will be explained in more detail below.

"Interfaces": All interfaces employed in connection with the present embodiment are derived from a Super-Interface. Each interface contains at least three methods. The two methods "acquire" and "release" are necessary to control the lifetime of the interface. The third method "queryInterface" is used to navigate between different Interfaces. A XInterface includes only these three methods. All other interfaces are derived from this XInterface. The methods and functionalities requested by the first software program will be part of the interface.

In Java, for example, interfaces are mapped to Java interfaces which could be normally implemented. The methods acquire and release are not mapped to the Java program since this methods do not exist in Java. The lifetime of the proxy, the stub and the relevant information in the second program will be controlled by a garbage collector. The programming language Java delivers basic types by value and non-basic types by reference. All calls are specified by value except interfaces. So in Java all non-basic types returned or delivered through out parameters are by value, which means that the implementation must copy it before return or deliver.

In C++, for example, interfaces are mapped to pure virtual classes. In order to automatically control the lifetime of interfaces a template called "Reference" will be used. All return, parameter and member types are "References" (e.g.: Reference< XInterface >). The "Reference" acquires the interface when it is constructed and releases the interface when it is destructed.

"Structure": A structure is a collection of elements. The type of each element is fixed and it cannot be changed. The number of elements is fixed.

"Exceptions": An exception is a program control construct beside the normal control flow. One major feature of exceptions is, that it is simpler to implement the error handling. Exceptions are similar to structures since they are also a collection of elements and each type of each element is fixed and cannot be changed and the number of elements is also fixed. An additional feature of exceptions is that they can be thrown by a method. All exceptions which can be thrown by a method must be declared at the method, except for the called "RuntimeException" which always can occur. All exceptions must be derived from "Exception". If an exception is declared at a method it is allowed to throw all derived exceptions. The caller of a method must respond to this behavior.

In Java, for example, all exceptions are derived from the "java.lang.Exception". The exceptions are declared at the methods.

In C++, for example, the exceptions are generated as structures. An exception is thrown as instance (e.g.: throw RuntimeException()). At the other side the exception should be caught as reference (...catch(RuntimeException & ) { ... }).

"Union": A union contains one element. The declaration of a union specifies the possible types.

"Array": An array contains any number of elements. The type of the elements is fixed and cannot be changed.

"Any": An any contains one element. All types of elements are possible. An any contains a reference to the value and the type description of the type. With the type description the bridge can transform the value, if necessary.

In Java the any is, for example, represented by the class "Any", which contains a class as type description and a "java.lang.Object", which is the value. The basic types are wrapped to their proper classes. For example, a boolean value is an object of the class "java.lang.Boolean", which contains the value.

In C++ the any is represented through the class "Any". Each type generated by a C++ codemaker implements an function "getCppuType". This function is used to implement the template access operators "<<=" and ">>=". These operators insert and extract the value of the any.

"Sequence": A sequence is a generic data type. It contains the number of elements and the elements. In Java the specification of an array fulfills this specification. This is not true for C++. The array in C++ does not contain the number of elements. It is not possible to return a C++-array, e.g. Char[] getName() is not possible. It is difficult to manage the lifetime between the called and the caller, if only a pointer is returned. Therefore, in C++ a sequence is a template with the name "Sequence". The implementation contains a pointer to a structure which contains a pointer to the elements, the number of elements and the reference count. So it holds the binary specification. It is cheap to copy this sequence, because only the reference count is incremented.

The type description may exist or it may be runtime created. Each existing type is stored in a type repository along with the corresponding type description. The types of the type description are accessible through the full name of each type in the type repository. For example, the full name of the type "Xinterface" may be "com.sun.star.Xinterface".

In a type repository the types needed for any type description are stored in any appropriate way. If the API (application program interface) of the type repository is c-style, it is directly, that means via a binary representation, accessible from many binary specifications and it is quickly transferable. Since the type description of each element may be used during the generic marshaling of a call, the access performance of the type repository API is critical. Therefore, it is useful to use c-style structures, which describe each type. In addition, there may be interfaces declared which specify the access to the type repository. The module of this interface is "com.sun.star.typelib".

All functions or type declarations have the prefix "typelib_". All elements are reference counted. All elements start with the structure "typelib_TypeDescription". It is possible to cast all descriptions to this type. The function typelib typedescription newInterface will be used to create an interface description. The descriptions of structures, unions and sequences are created with the function typelib_typedescription_new. The description of the base type is initially part of the type repository. The function to get a type description is typelib_typedescription_getByName.

The Java API to the type repository is different for two reasons. First, Java cannot access the binary representation of the type descriptions directly.

Second, the Java runtime system provides an API (core reflection) similar to the type repository API. Unfortunately, the features "unsigned", "oneway" and "out parameters" are missing in this API. For this reason, additional information is written into the classes.

The representation of the types depends on the hardware, the language and the operating system. The base type is swapped, for example, if the processor has little or big endian format. The size of the types may vary depending on the processor bus size. The alignment is processor and bus dependent. The alignment of the data structure is defined through the following algorithm:
Structure members are stored sequentially in the order in which they are declared. Every data object has an *alignment-requirement.* For structures, the requirement is the largest of its members. Every object is allocated an *offset* so that *offset % alignment-requirement **==** 0*

If it is possible that the maximum alignment can be restricted (Microsoft C/C++ compiler, IBM C/C++ compiler) than the size maximum alignment is set to eight. Under this condition the alignment is set to min( n, sizeof (item ) ). The size is round up to the largest integral base type.

For the Microsoft and IBM C/C++ compiler the alignment of structure is set to eight using the "#pragma" statement. Table 1 shows the binary UNO, C++ and the Java types.

In order to address the proxy factory to generate the proxy the first binary specification has to be denominated. This will be a string, because it is extensible and the risk of double names is low. Then a tool for selecting the desired bridge is called. The first parameter for this tool is the "first binary specification" and the second parameter is the intermediate binary specification "UNO". Then a function is called for selecting the desired mapping of the bridge. The name of the function is, in this example, "getMappingFactory". A call to create a proxy in "objective c" will be "getMappingFactory("objective_c", "uno")". The implementation of the function will search a shared library named "objective_cuno" to find the right library that contains the proxy factory. In Java the tool may search for a class of name "objective_cuno".

In order to create a stub merely the parameters of the function have to be changed, in our example to "getMappingFactory("uno", "objective_c")". A stub implements the uno_interface. In the dispatch function the stub must call the right method of the original object. This is simpler in a programming language like Java, which has a "core reflection API", than in a programming language like C++, which has no binary standard and no API to call virtual methods.

In creating a proxy the proxy factory must generate method code to implement each method specified in the interface to be created. The only information to do this is a type description of the interface. For example: In Java (1.1) a binary class file (*.class) must be generated and loaded with the class loader. In the absence of a loader which can directly load binary classes a loader has to be provided. In C++ virtual method tables must be generated which delegate each call to the uno_interface. In the absence of a binary C++ specification individual compilers (version, switch, ...) may have to be explored in order to implement this.

The proxy and the stub factory employ bridges for the generation of the proxy and the stub, respectively. A bridge implements infrastructure to exchange interfaces between two environments and is bidirectional.

An environment contains all objects which suffices the same specification and lies in the same process address space. The environment is specific for a programming language and for a compiler. For example, an object resides in the "msci" environment, if it is implemented in C++ and compiled with the Microsoft Visual C++ compiler. It may also be session specific for some reason, e.g. when running multiple Java virtual machines in one process. In the latter case these virtual machines have to be distinguished. However, this case is not a common case.

Regularly, the environment is the area in which the same binary specification is employed. Therefore, the first software program and the second software program belong to different environments.

Each bridge is implemented in a separate shared library. The name of the library is a connection of two environment names with an underscore ('_') between the names. Each bridge library exports two functions called "uno_ext_getMapping" and "uno_initEnvironment". The first function is called to get the mappings.

In order to get a mapping uno_getMapping () has to be called. There is also a C++ class called cppu Bridge which can be used with the source and destination environment names. The uno_ext_getMapping () call then receives its source and destination environments. The bridge library cannot be unloaded while any code of it is still needed. So both mappings and any wrapped interface (proxy) that is exported needs to modify a shared library wide reference count. If the shared library can be unloaded the reference count goes to zero.

The intention of an environment structure is to provide common functions like acquireInterface() and to know all proxy interfaces and their origins. This is specifically important because of the object identity of an interface. The proxy, the stub and the second program are defined to provide the same instance of the XInterface any time it is queried for it. This is important to test, if two interfaces belong to the same object (e.g. testing the source of an incoming event).

When interfaces are mapped around some environments in space, they must provide the same XInterface in each environment (e.g. in C++, equal XInterface pointers).

It is not recommended to only keep an eye on this object identity issue. It is well recommended to reuse any interface, i.e. rejecting the production of proxy interfaces as often as possible, because each constructed proxy interface leads to another indirection when called, and there will of course be many interfaces.

So an environment knows each wrapped interface (proxy) running in it and the origin of each of these interfaces. Table 2 shows the representation of an environment.

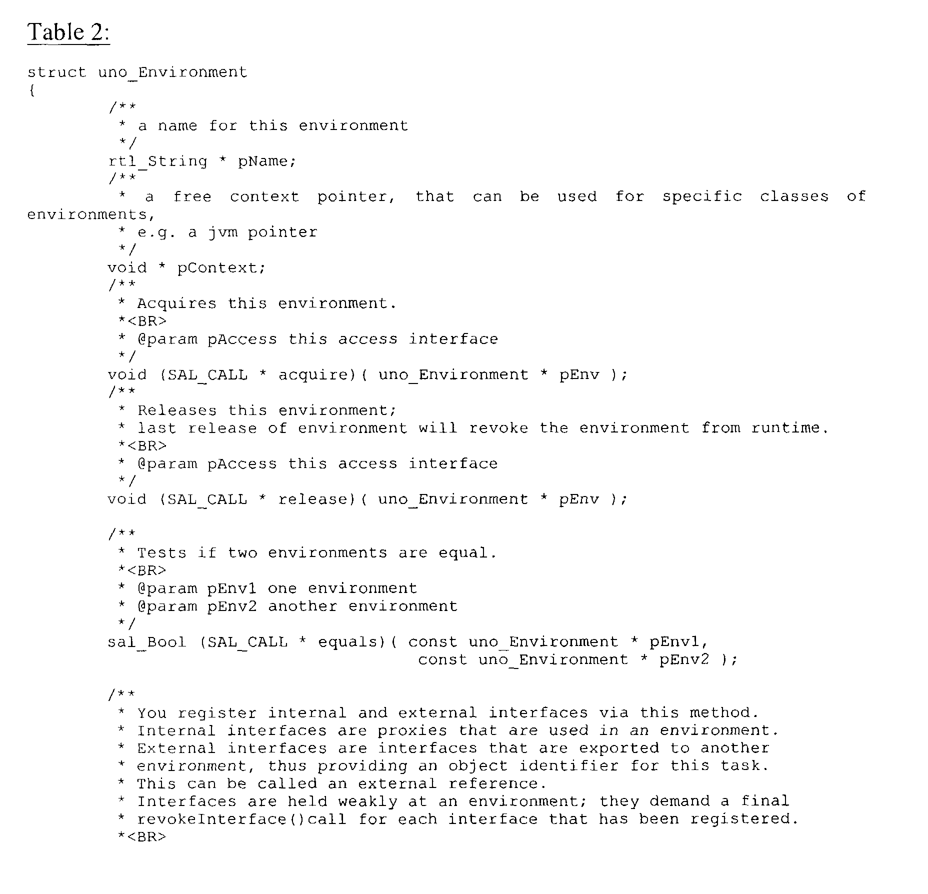

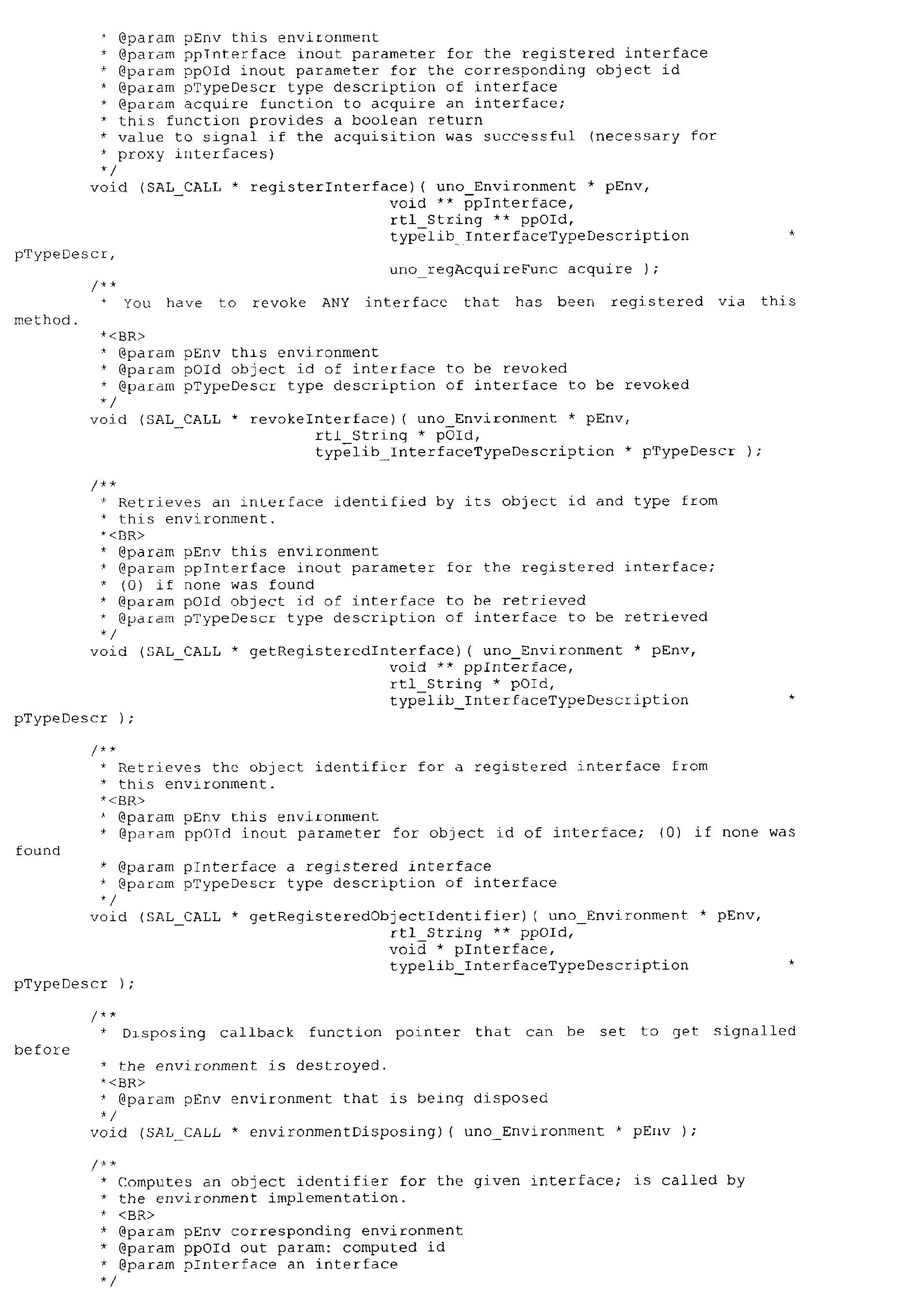

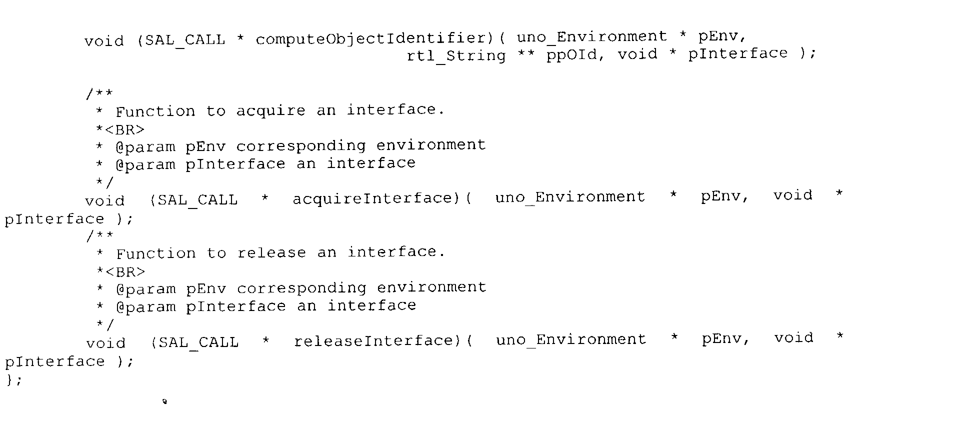

Environments, as defined above, consist of several fields. The first fields are used for identifying the environment, for specifying the hardware, the process, and maybe a session specific ID. There is also a context pointer which can be used for specific classes of environments, e.g. when it is known that there is a Java environment the virtual machine pointer can be stored there.

In order to use environments, these environments regularly have to be registered. An existing environment may be obtained by calling uno_getEnvironment(). A new environment can be created by either implementing it directly or by using a simple default implementation, which is frequently also sufficient, by calling, in the given example, uno_createDefaultEnvironment() with the environment's name and its acquire and release function for interfaces.

In order to improve the performance the bridges should use the shortest way between two environments. Especially, if there are programs instantiated in the identical environment, the communication between them should be direct and not over a proxy and a stub.

Mapping is the direct way to publish an interface in another environment. That means an interface is mapped from a source environment to a target environment so that methods may be invoked on a mapped interface in the target environment which are delegated to the originating interface in the source environment. A mapped interface may also be called a proxy or a stub. Mapping an interface from an environment A to an environment B requires that several steps are performed: First, the origin of the interface from environment A has to be retrieved (call getInterfaceOrigin() on environment A). For this purpose, the environment A looks into its proxy interfaces table to check if there is such an interface already known (pointer and type). If the answer is no, then this interface must originally come from environment A, or else it must originate from any other environment and its origin must be known, since each proxy interface must have been registered with its origin. Second, an existing proxy interface has to be looked for in environment B with the same origin and type (call getInterface() on environment B). If a proxy interface of that origin and type is already in use in environment B, then this interface is acquired, or else a new proxy has to be constructed wrapping the source interface from environment A. The fresh proxy interface is then to be registered via registerInterface() on its first acquire() and revoked via revokeInterface() on its last release() from its environment. This second step has to be synchronized with other threads in order to get access to mapping tables of an environment by getting an access interface (lockAccess()) from the environment. Then an unlockAccess() function has to be called.

### Function of stub and proxy:

The stub is encapsulated in an object which delivers and transforms the binary specification adapted calls to the stub. This object is the proxy of a stub in the first binary specification. This proxy which calls and attributes access will be similar with the binary specification from which the call was made. The calling to the stub is shown in Fig. 32.

First in step 321 a type save call (e.g. acquire, queryInterface, ...) is made at the proxy 253. This type save call will be transformed by the proxy 253 to a corresponding call in step 322 and dispatched to the stub 254 in step 323. After that, the return value of this call is transformed in step 324 to the type expected by the binary specification.

The proxy is binary specification specific. So it is possible to put this object seamless into the binary specification.

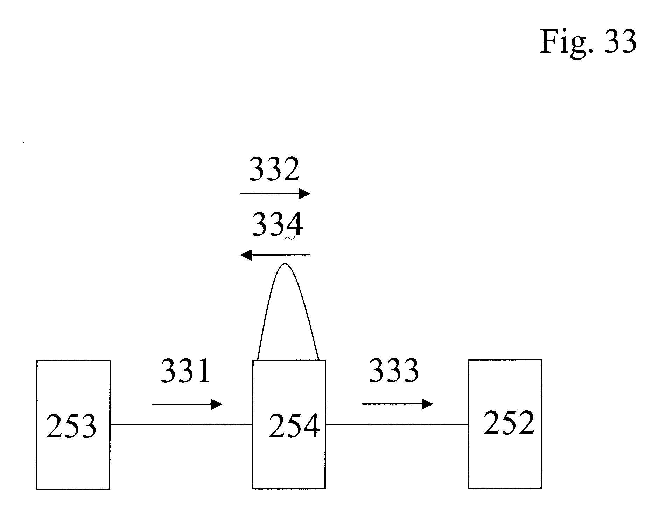

A stub object is also created which implements an uno_interface and transforms and delegates the calls to the second program implemented in a specific programming language (e.g. C++, Java,...). Fig. 33 describes a call through a stub 254 to the second program 252.

In a first step 331 the dispatch function is called. If proxy and stub are running in the same process, the dispatch function of the stub is directly called by the proxy. In a distributed environment this is not possible. In this case the abstract virtual channel has to provide this functionality. On the proxy side the proxy will accept the request and transmit it to the stub side. On the stub side the stub has to call the dispatch function.

The stub 254 detects the interface and the method which should be called at the second program 252. Then in step 332 the call was transformed into a specific binary specification by the stub 254 and the second program 252 was called in step 333. After that, the return value was re-transformed to the other binary specification in step 334.

The stub makes all transformations to the binary specification in which the second program is implemented. This is in this example the second binary specification. This makes it possible to implement the second program in the second binary specification. For example: In C++ exceptions, multiple inheritance and derivation can be used. In addition to the binary specification there are the type descriptions which must be mapped in the binary specification of the second program.

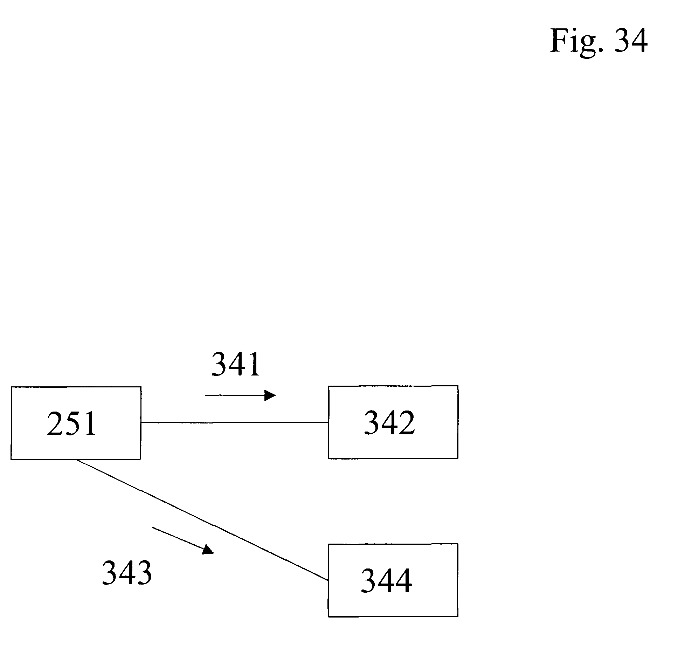

In order to enable to call from one binary specification or object model to another the stub and the proxy have to undergo a binding process. The proxy allows to call from one binary specification to the uno_interface, while the stub allows to call through the uno_interface to the second program. The binding of the stub and the proxy is initiated by the first software program 251 and is shown in Fig. 34. In a first step 341 the generation of a stub with the binary UNO specification in the stub factory 342 is shown. In a second step 343 a proxy is created based on the generated stub in the proxy factory 344.

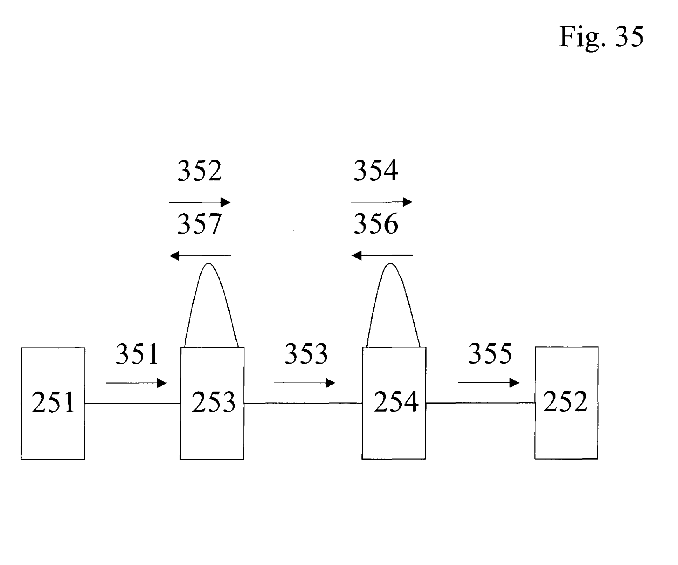

Each call to the proxy is delivered to the stub. The stub prepares the call and calls the second program in the corresponding binary specification. Fig. 35 shows exemplary the call from a first software program 251 in a programming language like "objective c" to a second software program 252 which may be implemented in the programming language C++.

The first software program 251 uses the programming language "objective c". The proxy 253 makes the interface available to the first software program 251 in the first binary specification. This means the first software program 251 uses the first binary specification to manipulate the second software program 252. For example, this may be effected by the call "char ^{*} pOldText = [ myObject changeText: "test"]" in step 351. The proxy 253 transforms the parameter of type string to the binary specification in step 352. Then, the proxy 253 dispatches in step 353 the call to the stub 254. The necessary information, including a method type description, parameters, an address for the return value and an address for the exception, if any occurs, is delivered to the stub 254. The stub 254 transforms in step 354 the string from the binary UNO specification to a second binary specification string. The stub 254 calls the right method at the second software program 252 in step 355, in our example "pComponent->changeText("test")". The stub 254 must catch all kind of exceptions thrown by the second software program 252. If the method returns normally, the string is transformed in the step 356 to the binary UNO specification and stored at the place given through the dispatch call. If an exception is thrown, the exception is transformed and stored at the address given through the dispatch call. After the dispatch call returns the proxy 253 transforms in step 357 the string to a first binary specification string and returns from the "changeText" call. If the call terminates by an exception, the exception is returned to the first software program 251. It is up to the first binary specification in which manner the exception occurs (the "objective c" language does not support exception handling).

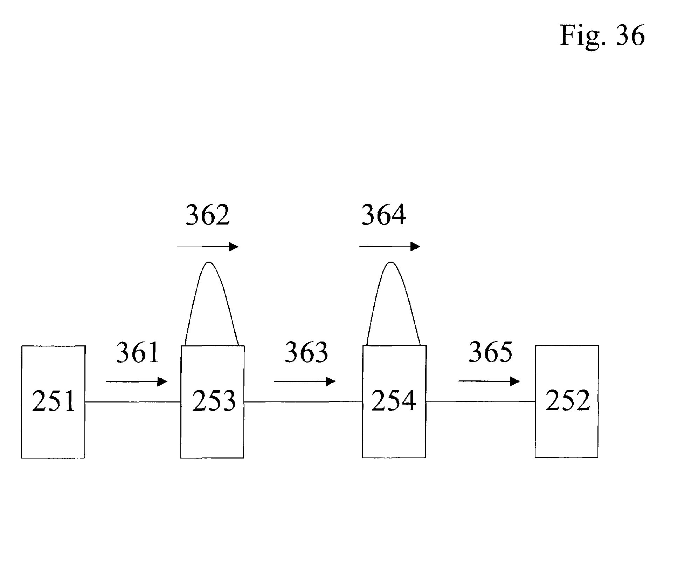

Fig. 36 shows the advantage of the binary UNO specification as an intermediate binary specification as it was described above. In a first step 361 the first software program 251, for example written in the programming language C++, transmits one command in a first binary specification, in this example the command "setText("a test")", to the proxy 253. Regularly, the first software program will transmit more than one command, for example, also the acquire, the release and the queryInterface command as described above. This command will be transformed by the proxy 253 in the next step 362 from the first binary specification into the binary UNO specification. The command in the binary UNO specification contains the following information: the parameter "a test", the return address, an address for the exceptions, and the type description of the command "setText". The type description of this command will include, in this example, the name of the command (setText), the type of the parameter and the return type. This transformed command will be transmitted to the stub 254 in the step 363. Then, the stub 254 transforms in step 364 the command from the binary UNO specification into the second binary specification, employed by the second software program 252 which was written, for example, in the programming language Java. The stub 254 employs for this transforming step only one dispatch mechanism. This is a mechanism which will be employed for each command transmitted by the proxy 253, since it is able to dispatch the name of the command and the other relevant information to the second software program 252. In the final step 365 the second software program 252 executes the command "setText". The response to this command will be transmitted and transformed in a corresponding way.

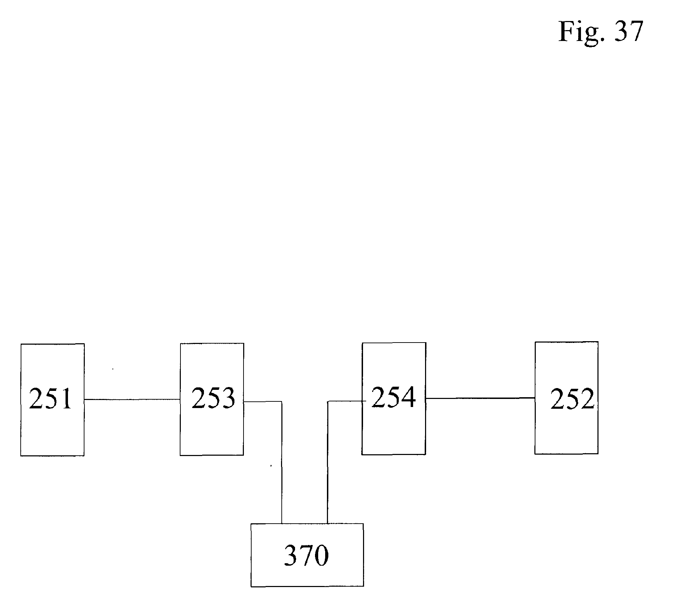

Fig. 37 shows a scenario where between the proxy 253 and the stub 254 an interceptor 370 is inserted. This means, that the stub 254 and the interceptor 370 are created in a first step, while in a second step the stub 253 is created based on information about the stub 254 and the interceptor 370. Therefore, the proxy 253 will communicate only with the interceptor 370 and not with the stub 254.

Such an interceptor may be able to carry out, for example, an accounting function or a security check function. If, for example, the first software program 251 wants to use a functionality of the second software program 252, the interceptor may be able to discover if the user of the first software program is authorized to use this function and to debit the account of the user, if the user has to pay for this functionality. Such an interceptor may also be used, for example, to help debugging the communication between a first software program 251 and a second software program 252. In such a case the interceptor may provide an alarm function which will be initiated, if a predefined functionality is called. If the functions requested from the second software program 252 may be grouped as one transaction, it may also be possible that an interceptor cancels all already executed functions of this group, if one function fails. Such an interceptor has the advantage that only one interceptor may be employed for every function or method of an interface and for all binary specifications of software programs which communicate via the intermediate binary specification used by the stub 254 and the proxy 253.

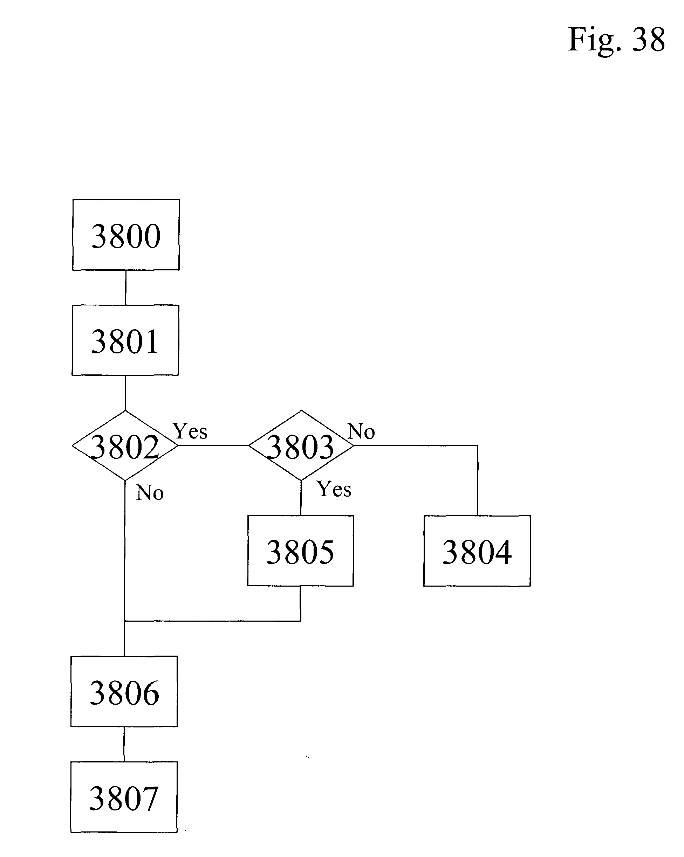

Fig. 38 shows a flow chart representing the use of an interceptor as checking and accounting function for a fax service. In this example, a user of a first software program using a first binary specification wants to use the fax service of a second software program using a second binary language. This fax service may distinguish between two kinds of users. A standard user may have to pay for each fax and a premium user may have to pay a monthly standard fee.

In order to enable the communication between the two software programs a stub and a proxy will be created and combined and arranged together with a specific interceptor in a way shown in Fig. 37. Then, the following steps may be carried out in using the invention.

In step 3800 the first software program sends a command including the desired fax number, the corresponding fax file and the identity of the user to the proxy. The proxy transforms this command into the intermediate binary specification and forwards it to the interceptor in step 3801. The interceptor checks in step 3802 whether the user is a standard user.

If the answer is "Yes", that means the user is a standard user, the interceptor may deteremine in step 3803 whether the user has enough credit. If the answer to this question is "No", the user will be informed about his insufficient credit status and about the fact that the fax was yet not sent in step 3804. If the answer is "Yes", that means that the user has enough credit, the interceptor will initiate, in this example, the debiting of the user's account in step 3805 and forward the received command to the stub in step 3806.

If the answer in step 3802 is "No", that means the user is a premium user, the interceptor will forward the command received from the proxy directly to the stub in step 3806. The stub will transform this command from the intermediate binary specification into the second binary specification and forward this command to the second software program in step 3807. Then the fax may be sent.

It will be understood that the present invention is not limited to the examples given and explained in detail.

## Claims

1. A method for enabling a first software program using a first binary specification in a first execution environment to employ a limited functionality of a second software program using a second binary specification in a second execution environment, the method comprising:
creating a bridge in said first execution environment; and
creating, in said first execution environment using said bridge, a proxy wrapping an interface to said limited functionality of said second software program in said second execution environment.

2. A method as in Claim 1 further comprising:
creating a first execution environment object including said second binary specification.

3. A method as in Claim 2 further comprising:
creating a second execution environment object including said first binary specification.

4. A method comprising:
generating a binary specification object for a first execution environment;
generating a binary specification object for a second execution environment; and
generating a bridge object wherein said bridge object is used in mapping objects from said second execution environment to said first execution environment.

5. The method of Claim 4 further comprising:
using said bridge object to generate a proxy wrapping an interface in said second execution environment.

6. A method for using functionality in a second execution environment in a first execution environment comprising:
calling a method in a proxy interface in said first execution environment; and
converting said method call by said proxy interface to a corresponding method call for execution in said second execution environment.

7. The method as in Claim 6 further comprising:
dispatching said corresponding method call for execution in said second execution environment to said second execution environment by said proxy interface.

8. The method of Claim 6 where said converting said method call further comprises:
using a type description to convert parameters from said first execution environment to said second execution environment.

9. The method of Claim 7 further comprising:
executing said corresponding method call in said second execution environment, and returning results of said execution to said proxy interface.

10. The method of Claim 9 further comprising:
using a type description to convert said returned results from said second execution environment to said first execution environment.

11. The method of Claim 6 wherein said second execution environment is a C++ programming language execution environment.

12. A method for using functionality in a second execution environment in a first execution environment comprising:
calling a method in a proxy interface in said first execution environment;
converting said method call by said proxy interface to a corresponding method call for execution in said second execution environment, wherein said converting said method call comprises:
using a type description to convert parameters from said first execution environment to said second execution environment; and
dispatching said corresponding method call for execution in said second execution environment to said second execution environment by said proxy interface.

13. The method of Claim 12 further comprising:
executing said corresponding method call in said second execution environment, and returning results of said execution to said proxy interface.

14. The method of Claim 13 further comprising:
using a type description to convert said returned results from said second execution environment to said first execution environment.

15. A computer program product comprising computer program code for a method for enabling a first software program using a first binary specification in a first execution environment to employ a limited functionality of a second software program using a second binary specification in a second execution environment, the method comprising:
creating a bridge in said first execution environment; and
creating, in said first execution environment using said bridge, a proxy wrapping an interface to said limited functionality of said second software program in said second execution environment.

16. The computer program product of Claim 15 wherein said method further comprises:
creating a first execution environment object including said second binary specification.

17. The computer program product of Claim 16 wherein said method further comprises:
creating a second execution environment object including said first binary specification.

18. A computer program product comprising computer program code for a method for using functionality in a second execution environment in a first execution environment, said method comprising:
calling a method in a proxy interface in said first execution environment; and
converting said method call by said proxy interface to a corresponding method call for execution in said second execution environment.

19. The computer program product of Claim 18 wherein said method further comprises:
dispatching said corresponding method call for execution in said second execution environment to said second execution environment by said proxy interface.

20. The computer program product of Claim 18 wherein said method further comprises:
using a type description to convert parameters from said first execution environment to said second execution environment.

21. The computer program product of Claim 19 wherein said method further comprises:
executing said corresponding method call in said second execution environment, and returning results of said execution to said proxy interface.

22. The computer program product of Claim 21 wherein said method further comprises:
using a type description to convert said returned results from said second execution environment to said first execution environment.

23. A computer storage medium having stored therein a structure comprising:
a binary specification for an execution environment including:
a simple common identity structure.

24. The computer storage medium of Claim 23 wherein said binary specification further comprises:
an extended environment structure.

25. The computer storage medium of Claim 23 wherein said simple common identity structure includes:
a type name.

26. The computer storage medium of Claim 23 wherein said simple common identity structure includes:
a method acquire.

27. The computer storage medium of Claim 23 wherein said simple common identity structure includes:
a method release.

28. The computer storage medium of Claim 24 wherein said simple common identity structure includes:
a pointer to said extended environment structure.

29. A method for enabling a first software program using a first binary specification to employ a limited functionality of a second software program using a second binary specification, including the following steps:
a) initiating the creation of a stub, which is able to transform commands relating to said limited functionality of said second software program between said second binary specification and an intermediate binary specification, using a second bridge, wherein said second bridge provides a mapping of said second binary specification and said intermediate binary specification,
b) initiating the creation of a proxy, which is able to transform commands relating to said limited functionality of said second software program between said first binary specification and said intermediate binary specification, using a first bridge, wherein said first bridge provides a mapping of said first binary specification and said intermediate binary specification, and
c) initiating the arrangement of said proxy and said stub relatively to said first software program and said second software program in a manner allowing said first software program to employ said limited functionality of said second software program.

30. A method for employing a limited functionality of a second software program using a second binary specification by a first software program using a first binary specification, including the following steps:
a) initializing said limited functionality of said second software program by said first software program,
b) creating a stub, which is able to transform commands relating to said limited functionality of said second software program between said second binary specification and an intermediate binary specification, using a second bridge, wherein said second bridge provides a mapping of said second binary specification and said intermediate binary specification,
c) creating a proxy, which is able to transform commands relating to said limited functionality of said second software program between said first binary specification and said intermediate binary specification, using a first bridge, wherein said first bridge provides a mapping of said first binary specification and said intermediate binary specification,
d) transmitting an command relating to said limited functionality from said first software program to said proxy,
e) transforming said command from said first binary specification into said intermediate binary specification by said proxy,
f) transmitting said command transformed by said proxy from said proxy to said stub,
g) transforming said transmitted command from said intermediate binary specification into said second binary specification by said stub,
h) transmitting said command transformed by said stub from said stub to said second software program,
i) carrying out said command in said second software program and generating a response for said first software program,
j) transmitting said response, being in said second binary specification, from said second software program to said stub,
k) transforming said response from said second binary specification into said intermediate binary specification by said stub,
l) transmitting said response transformed by said stub from said stub to said proxy,
m) transforming said response from said intermediate binary specification into said first binary specification by said proxy,
n) transmitting said response transformed by said proxy from said proxy to said first software program.

31. A method for using a stub, which is able to transform commands relating to a limited functionality of a second software program between a second binary specification and an intermediate binary specification, using a second bridge, wherein said second bridge provides a mapping of said second binary specification and said intermediate binary specification, for enabling a first software program using a first binary specification to employ said limited functionality of said second software program by further using a proxy, which is able to transform commands relating to said limited functionality of said second software program between said first binary specification and said intermediate binary specification, using a first bridge, wherein said first bridge provides a mapping of said first binary specification and said intermediate binary specification, wherein said proxy and said stub are arranged relatively to said first software program and said second software program in a manner allowing said first software program to employ said limited functionality of said second software program.

32. A method for using a proxy, which is able to transform commands relating to said limited functionality of said second software program between said first binary specification and said intermediate binary specification, using a first bridge, wherein said first bridge provides a mapping of said first binary specification and said intermediate binary specification, for enabling a first software program using a first binary specification to employ said limited functionality of said second software program by further using a stub, which is able to transform commands relating to a limited functionality of a second software program between a second binary specification and an intermediate binary specification, using a second bridge, wherein said second bridge provides a mapping of said second binary specification and said intermediate binary specification, wherein said proxy and said stub are arranged relatively to said first software program and said second software program in a manner allowing said first software program to employ said limited functionality of said second software program.

33. A method according to any of the claims 29 - 32, wherein said creation of said stub is carried out in response to a loader function for said second software program.

34. A method according to any of the claims 29 - 33, wherein said creation of said proxy is carried out in response to a function of said first software program.

35. A method according to any of the claims 29 - 34, wherein said creation of said stub is carried out by a sub-program of the second software program.

36. A method according to any of the claims 29 - 35, wherein said creation of said proxy is carried out by a sub-program of the first software program.

37. A method according to any of the claims 29 - 36, wherein said bridges are selected by a tool for selecting the desired bridge.

38. A method according to any of the claims 29 - 37, wherein said mappings are selected by a function for selecting the desired mapping of the bridge.

39. A method according to any of the claims 29 - 38, wherein said limited functionality is described by types.

40. A method according to claim 39, wherein the types are stored in a type repository.

41. A method according to claim 40, wherein the types are stored in said type repository along with the corresponding description.

42. A method according to claim 40 or 41, wherein a application program interface of said type repository is c-style.

43. A method according to any of the claims 29 - 42, wherein said first binary specification and said second binary specification are denominated by a string.

44. A method according to any of the claims 29 - 43, wherein an interceptor is arranged between said proxy and said stub in order to intercept some of said commands.

45. A method according to any of the claims 29 - 44, wherein said stub is able to transform all commands transmitted by the proxy by employing one dispatch mechanism.

46. A computer program for carrying out a method according to any of the claims 29 - 45 on a computer system.

47. A data carrier for storing a computer program for carrying out a method according to any of the claims 29 - 45 on a computer system.

48. A method for using a computer system for carrying out a method according to any of the claims 29 - 45.

49. A computer system comprising a storage medium on which a computer program for carrying out a method according to any of the claims 29 - 45 or 48 is stored.
